# EUROPEAN PATENT SPECIFICATION

(11) **EP 4 451 378 B1**
(45) Date of publication and mention of the grant of the patent: **14.10.2026**
(21) Application number: 22939287.3
(22) Date of filing: 29.04.2022
(51) Int. Cl.: H01M 4/36, H01M 4/58, H01M 4/62, H01M 10/0525, H01M 4/131, H01M 4/136, H01M 4/485, H01M 10/42, H01M 4/505, H01M 4/525, H01M 10/0567

(54) **SECONDARY BATTERY, AND BATTERY MODULE, BATTERY PACK AND ELECTRIC DEVICE COMPRISING SAME**
SEKUNDÄRBATTERIE UND BATTERIEMODUL, BATTERIEPACK UND ELEKTRISCHE VORRICHTUNG DAMIT
BATTERIE SECONDAIRE ET MODULE DE BATTERIE, BLOC-BATTERIE ET DISPOSITIF ÉLECTRIQUE COMPRENANT CELLE-CI

(43) Date of publication of application: 23.10.2024
(73) Proprietor: Contemporary Amperex Technology (Hong Kong) Limited, Central, Central And Western District (HK)
(72) Inventor: CHEN, Peipei, Ningde, Fujian 352100 (CN); ZHANG, Limei, Ningde, Fujian 352100 (CN); LIU, Jiao, Ningde, Fujian 352100 (CN)
(74) Representative: Gong, Jinping
(86) International application number: PCT/CN2022/090498
(87) International publication number: WO 2023/206439

(56) References cited:
- CN-A- 106 058 225
- CN-A- 106 340 639
- CN-A- 114 242 988
- CN-A- 114 242 988
- CN-A- 114 256 448
- JP-A- 2007 242 411
- JP-A- 2017 103 060

## Description

### TECHNICAL FIELD

The present application belongs to the technical field of batteries, in particular to a secondary battery, a battery module, a battery pack and an electrical device containing the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources; however, lithium manganese phosphate is prone to leach out manganese ion during charging, resulting in rapid capacity decay, thereby constraining its commercialization. D1 CN 114 242 988 A (HUBEI HUNDRED MILLION WEFT POWER CO LTD) 25 March 2022 (2022-03-25) describes the positive electrode material with core-shell structure, a first shell layer, and the second shell layer, the first shell layer covers the outer surface of the inner core, the second shell layer covers the outer surface of the first shell layer and the outer surface of the second shell layer is coated with a carbon material further to improve the conductivity of the positive electrode materials [0007], [0011], aiming at the optimization of phosphate-based positive electrode material in order to enhance the electrochemical performance including material conductivity, rate performance, cycling performance, high thermal stability and effectively improve the dissolution of manganese.

### SUMMARY

An object of the present application is to provide a secondary battery, a battery module, a battery pack and an electrical device containing the same, which enables the secondary battery to simultaneously have a high energy density as well as good rate performance, cycling performance, storage performance, and safety performance.

A first aspect of the present application provides a secondary battery comprising a positive electrode plate, and a non-aqueous electrolytic solution, wherein
the positive electrode plate comprises a positive electrode active material with a core-shell structure which comprises a core and a shell covering the core, in which
   the core has a chemical formula of Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S; and the values of x, y and z satisfying the condition that the entire core is electrically neutral;
   the shell comprises a first cladding layer covering the core, a second cladding layer covering the first cladding layer, and a third cladding layer covering the second cladding layer, in which
      the first cladding layer comprises crystalline pyrophosphates LiₐMP₂O₇ and/or M_{b}(P₂O₇)_{c}, 0 ≤ a ≤ 2, 1 < b < 4, 1 < c < 6, and the values of a, b, and c satisfy the condition that the crystalline pyrophosphate LiₐMP₂O₇ and/or M_{b}(P₂O₇)_{c} is electrically neutral, each M in the crystalline pyrophosphates LiₐMP₂O₇ and M_{b}(P₂O₇)_{c} being independently one or more elements selected from Fe, Ni, Mg, Co, Cu, Zn, Ti, Ag, Zr, Nb, and Al;
      the second cladding layer comprises crystalline phosphate XPO₄, X being one or more elements selected from Li, Fe, Ni, Mg, Co, Cu, Zn, Ti, Ag, Zr, Nb and Al; and the third cladding layer is carbon;
   the non-aqueous electrolytic solution comprises a first additive comprising one or more of the compounds shown in Formula 1: 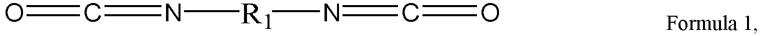 in which R₁ represents at least one of the group consisting of the following groups substituted or unsubstituted by Rₐ: C2~C10 divalent alkyl, C2~C10 divalent heteroalkyl, C6~C18 divalent aryl, C7~C18 divalent aryl alkyl, C7~C18 divalent alkyl aryl, C8~C18 divalent alkyl aryl alkyl, C13~C18 divalent aryl alkyl aryl, C2~C18 divalent heteroaryl, C3~C18 divalent heteroarylalkyl, C3~C18 divalent alkylheteroaryl, C4~C18 divalent alkylheteroarylalkyl, C5~C18 divalent heteroarylalkylheteroaryl, C3~C18 divalent alcyl, C4~C18 divalent alcyl alkyl, C4~C18 divalent alkyl alcyl, C5~C18 divalent alkyl alcyl alkyl, C7~C18 divalent alcyl alkyl alcyl, C2~C18 divalent heteroalcyl, C3~C18 divalent heteroalcyl alkyl, C3~C18 divalent alkyl heteroalcyl, C4~C18 divalent alkyl heteroalcyl alkyl, and C5~C18 divalent heteroalcyl alkyl heteroalcyl.

Optionally, Rₐ comprises one or more selected from halogen atoms, -CN, -NCO, -OH, -COOH, -SOOH, carboxylate group, sulfonate group, sulfate group, C1~C10 alkyl, C2~C10 alkenyl, C2~C10 alkynyl, C2~C10 oxoalkyl, phenyl, and benzyl.

The inventors have found after conducting a large number of researches that by doping modification of lithium manganese phosphate and cladding lithium manganese phosphate with multiple layers, a new type of positive electrode active material having a core-shell structure can be obtained, and the positive electrode active material is capable of realizing a reduced leaching out of manganese ion and a reduced lattice change rate, so as to be able to improve rate performance, cycling performance, storage performance, safety performance of secondary batteries, and to increase the capacity exertion of the secondary batteries. When the non-aqueous electrolytic solution comprises the first additive shown in Formula 1 above, the first additive can react with a trace amount of water in the non-aqueous electrolytic solution to form -NHCOOH, reduce the generation of HF, reduce the acidity of the non-aqueous electrolytic solution, and thereby reduce the dissolution of the cladding layer, the leaching out of manganese ions, and the generation of gas. At the same time, the first additive shown in Formula 1 is also capable of generating a uniform and dense interfacial film on the surface of the negative electrode active material, reducing the reduction reaction of the leached manganese ions at the negative electrode. Therefore, the secondary battery of the present application can simultaneously have high energy density as well as good rate performance, cycling performance, storage performance and safety performance.

In embodiments of the present application, R₁ represents at least one of the group consisting of the following groups substituted or unsubstituted by Rₐ: C2~C10 alkylidene, C2~C10 oxoalkylidene, C2~C10 azidoalkylidene, phenylidene, o-phenylenedimethylene, m-phenylenedimethylene, p-phenylenedimethylene, monomethylphenylene, dimethylphenylene, trimethylphenylene, tetramethylphenylene, monoethylphenylene, diethylphenylene, triethylphenylene, tetraethylphenylene, biphenylene, terphenylene, quaterphenylene, diphenylmethyl, cyclobutylidene, o-cyclobutyldimethylene, m-cyclobutyldimethylene, p-cyclobutyldimethylene, cyclopentylidene, o-cyclopentyldimethylene, m-cyclopentyldimethylene, p- cyclopentyldimethylene, cyclohexylidene, monomethyl cyclohexylidene, dimethyl cyclohexylidene, trimethyl cyclohexylidene, tetramethyl cyclohexylidene, o-cyclohexyldimethylene, m-cyclohexyldimethylene, p-cyclohexyldimethylene, dicyclohexylmethane, methylcyclohexyl, naphthylene, anthrylene and perhydroanthrylene. Optionally, Rₐ comprises one or more selected from a fluorine atom, -CN, -NCO, -OH, -COOH, -SOOH, carboxylate group, sulfonate group, sulfate group, C1~C10 alkyl, C2~C10 alkenyl, C2~C10 alkynyl, C2~C10 oxoalkyl, phenyl and benzyl

When R₁ represents the above substituent group, it is capable of further reducing the generation of HF and lowering the acidity of the non-aqueous electrolytic solution, and at the same time helping to generate a uniform, dense interfacial film with low impedance on the surface of the negative electrode active material, whereby the improvement effect on the cycling performance and the storage performance of the secondary battery can be further enhanced.

In embodiments of the present application, the first additive comprises at least one of the following compounds:

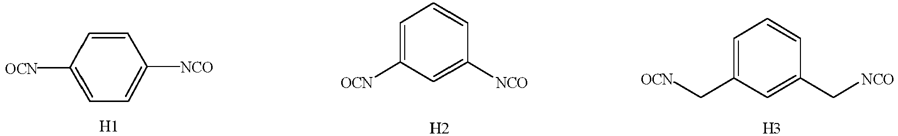

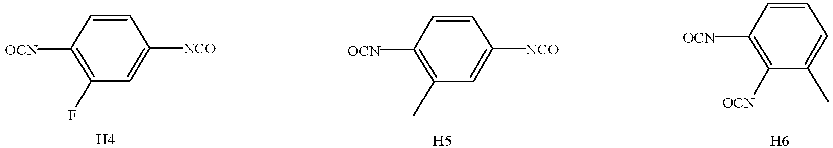

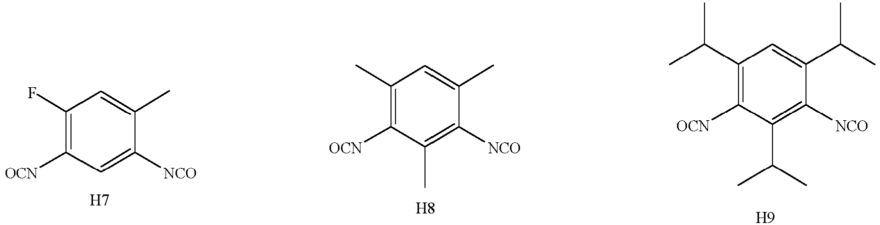

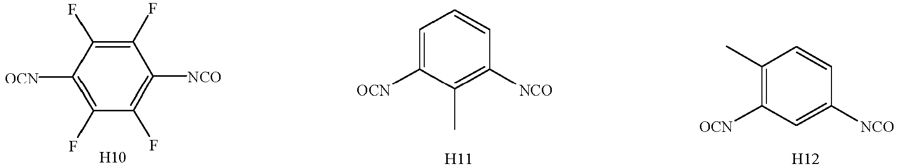

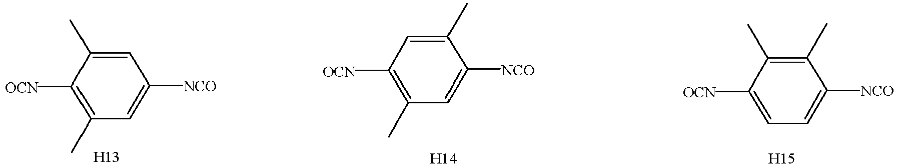

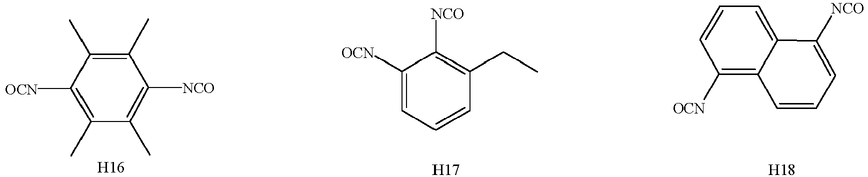

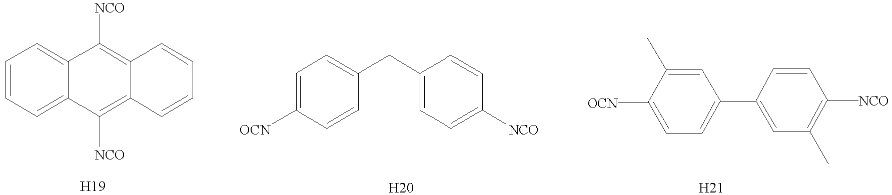

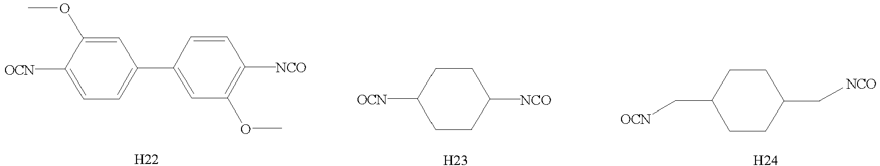

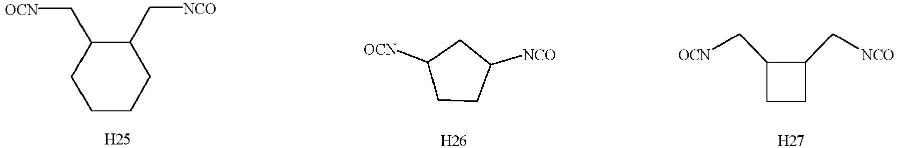

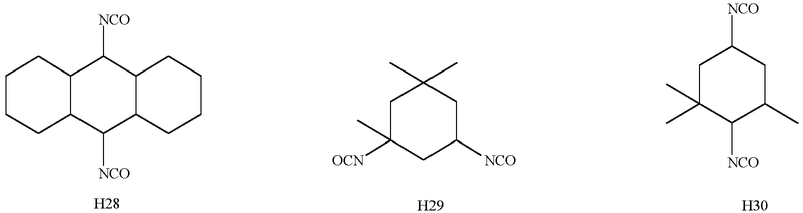

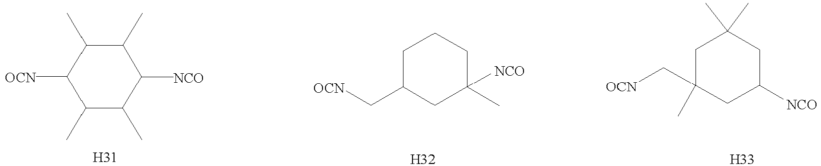

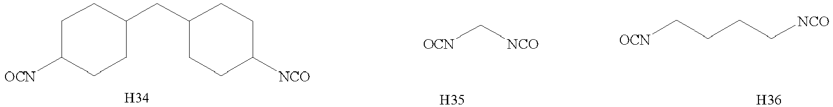

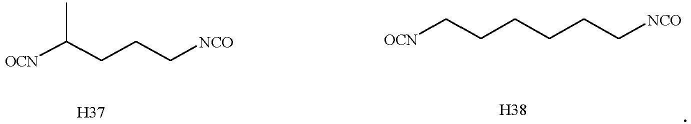

The inventors found in the course of their research that using at least one of the above compounds H1 to H38 as a first additive can further reduce the generation of HF and lower the acidity of the non-aqueous electrolytic solution, and at the same time help to generate a uniform and dense interfacial film with low impedance on the surface of the negative electrode active material, whereby the effect of improving the cycling performance and storage performance of the secondary battery can be further enhanced.

In embodiments of the present application, the first additive is present in an amount of W1% by weight, with W1 being from 0.01 to 20, optionally from 0.1 to 10, more optionally from 0.3 to 5, based on the total weight of the non-aqueous electrolytic solution. As a result, the cycling performance and storage performance of the secondary battery can be significantly improved without affecting the capacity exertion and rate performance of the secondary battery.

In embodiments of the present application, the first cladding layer is applied in an amount of C1% by weigh, with C1 being greater than 0 and less than or equal to 6, optionally greater than 0 and less than or equal to 5.5, more optionally greater than 0 and less than or equal to 2, based on the weight of the core.

In embodiments of the present application, the second cladding layer is applied in an amount of C2% by weight, with C2 being greater than 0 and less than or equal to 6, optionally greater than 0 and less than or equal to 5.5, more optionally from 2 to 4, based on the weight of the core.

In embodiments of the present application, the third cladding layer is applied in an amount of C3% by weight, with C3 being greater than 0 and less than or equal to 6, optionally greater than 0 and less than or equal to 5.5, more optionally greater than 0 and less than or equal to 2, based on the weight of the core.

The applied amounts of the three cladding layers are preferably within the above ranges, thereby enabling adequate cladding of the core and at the same time further improving the kinetic performance, cycling performance, storage performance and safety performance of the secondary battery without sacrificing the specific capacity of the positive electrode active material.

In embodiments of the present application, W1/(C1+C2+C3) is from 0.001 to 2, optionally from 0.01 to 1.5, and more optionally from 0.05 to 1. This can significantly enhance the improvement effect on the cycling performance and storage performance of the secondary battery, and at the same time improve the capacity exertion and rate performance of the secondary battery.

In embodiments of the present application, the non-aqueous electrolytic solution further comprises a second additive, and the second additive comprises one or more of ethylene sulfate, lithium difluorophosphate, lithium bisoxalatodifluorophosphate, R₂[FSO₃⁻]ₐ, and R₂[C_{b}F_{2b+1}SO₃⁻]ₐ, a being an integer from 1 to 5 and b being an integer from 1 to 6, and R₂ representing a metal cation or an organic group cation. Optionally, the metal cation comprises one or more selected from Li⁺, Na⁺, K⁺, Rb⁺, Cs⁺, Mg²⁺, Ca²⁺, Ba²⁺, Al³⁺, Fe²⁺, Fe³⁺, Cu²⁺, Ni²⁺ and Ni³⁺. Optionally, the organic group cation comprises one or more selected from NH₄⁺, N(CH₃)₄⁺, and N(CH₂CH₃)₄⁺.

When the non-aqueous electrolytic solution comprises both the first additive and the second additive, it helps to significantly improve the cycling performance and the storage performance of the secondary battery, and at the same time enhances the capacity exertion and the rate performance of the secondary battery.

In embodiments of the present application, the second additive is present in an amount of W2% by weight, with W2 being from 0.01 to 20, optionally from 0.1 to 10, more optionally from 0.3 to 5, based on the total weight of the non-aqueous electrolytic solution. This can thereby effectively improve the capacity exertion and rate performance of the secondary battery.

In embodiments of the present application, the non-aqueous electrolytic solution further comprises a third additive, and the third additive comprises one or more of a cyclic carbonate compound containing unsaturated bonds, a halogenated cyclic carbonate compound, a sulfate compound, a sulfite compound, a sultone compound, a disulfonate compound, a nitrile compound, a phosphonitrile compound, an aromatic hydrocarbon and halogenated aromatic hydrocarbon compound, an acid anhydride compound, a phosphite compound, a phosphate compound, and a borate compound. The third additive helps to form a more dense and stable interfacial film on the surface of the positive electrode and/or the negative electrode active material, thereby helping to further enhance at least one of the cycling performance, the storage performance, and the rate performance of the secondary battery.

In embodiments of the present application, the third additive is present in an amount of W3% by weight, with W3 being from 0.01 to 10, optionally from 0.1 to 10, more optionally from 0.3 to 5, based on the total weight of the non-aqueous electrolytic solution.

In embodiments of the present application, the first cladding layer has a thickness of from 1 nm to 10 nm, which is able to avoid the adverse effect on the dynamic performance of the positive electrode active material that otherwise may arise when the first cladding layer is too thick, and is able to avoid the problem that the first cladding layer is not able to effectively hinder the migration of the transition metal ions when the first cladding layer is too thin.

In embodiments of the present application, the second cladding layer has a thickness of from 2 nm to 15 nm. Thus the surface structure of the second cladding layer is stable, and the side reaction with the electrolyte is small, so that the interfacial side reaction can be effectively reduced, thereby improving the high-temperature cycling performance and high-temperature storage performance of the secondary battery.

In embodiments of the present application, the third cladding layer has a thickness of from 2 nm to 25 nm, which is capable of improving the electrical conductivity of the positive electrode active material and improving the compaction density of the positive electrode plate prepared from the positive electrode active material.

In embodiments of the present application, in the core the ratio of y to 1-y is from 1:10 to 1:1, optionally from 1:4 to 1:1. Thereby, the cycling performance and the rate performance of the secondary battery are further improved.

In embodiments of the present application, in the core the ratio of z to 1-z is from 1:9 to 1:999, optionally from 1:499 to 1:249. Thereby, the cycling performance and the rate performance of the secondary battery are further improved.

In embodiments of the present application, the crystalline pyrophosphate in the first cladding layer has an interplanar spacing ranging from 0.293 nm to 0.470 nm, and a crystal orientation (111) angle ranging from 18.00° to 32.00°.

In embodiments of the present application, the crystalline phosphate in the second cladding layer has an interplanar spacing ranging from 0.244 nm to 0.425 nm, and a crystal orientation (111) angle ranging from 20.00° to 37.00°.

Crystalline pyrophosphates and crystalline phosphates having interplanar spacing and angle within the above ranges can more effectively inhibit the lattice change rate of lithium manganese phosphate and leaching of manganese ion during the process of deintercalation and intercalation of lithium, and thereby enhance the high-temperature cycling performance and the high-temperature storage performance of the secondary battery.

In embodiments of the present application, the carbon of the third cladding layer is a mixture of SP2 carbon and SP3 carbon, optionally, the molar ratio of the SP2 carbon to SP3 carbon is any value in the range of 0.1 to 10, optionally any value in the range of 2.0 to 3.0. The present application improves the comprehensive performance of the secondary battery by limiting the molar ratio of the SP2 carbon to the SP3 carbon to the above range.

In embodiments of the present application, manganese is present a content of from 10 wt% to 35 wt%, optionally in the range of 15 wt% to 30 wt%, and more optionally in the range of 17 wt% to 20 wt%, based on the weight of the positive electrode active material. Thus, it is possible to effectively avoid problems such as poor structural stability of the positive electrode active material and density decline that may be caused if the manganese's content is too large, so as to improve the performance of the secondary battery in terms of cycling, storage, and compaction density, etc. In addition, it is also possible to avoid problems such as low voltage plateau that may be caused if the manganese's content is too small, so as to improve the energy density of the secondary battery.

In embodiments of the present application, phosphorus is present in a content of from 12 wt% to 25 wt%, optionally in the range of 15 wt% to 20 wt%, based on the weight of the positive electrode active material. Thus, the following can be effectively avoided: if the content of the elemental phosphorus is too high, it may cause the covalency of P-O to be too strong and affect the conductivity of the small polarizers, thereby affecting the electrical conductivity of the positive electrode active material; if the content of the elemental phosphorus is too small, it may make the lattice structure of the pyrophosphate in the core, in the first cladding layer, and/or of the phosphate in the second cladding layer less stable, thereby affecting the positive electrode active material's overall stability.

In embodiments of the present application, the weight ratio of manganese to phosphorus is in the range of 0.90 to 1.25, optionally in the range of 0.95 to 1.20, based on the weight of the positive electrode active material. Thus, the following can be effectively avoided: if the weight ratio is too large, it may lead to an increase in the leaching out of manganese ions, which affects the stability of the positive electrode active material, the cycling performance and the storage performance of the secondary battery; if the weight ratio is too small, it may cause a decrease in the discharge voltage plateau, which results in a decrease in the energy density of the secondary battery.

In embodiments of the present application, before and after complete intercalation/deintercalation of lithium, the positive electrode active material has a lattice change rate of 4% or less, optionally 3.8% or less, more optionally from 2.0% to 3.8%. Thus, the positive electrode active material can improve the capacity exertion and rate performance of the secondary battery.

In embodiments of the present application, the positive electrode active material has a Li/Mn anti-site defect concentration of 4% or less, optionally 2.2% or less, more optionally from 1.5% to 2.2%. By having the Li/Mn anti-site defect concentration within the above range, it is possible to avoid Mn²⁺ from hindering Li⁺ transmission, and at the same time to enhance the capacity exertion and rate performance of the positive electrode active material.

In embodiments of the present application, the positive electrode active material has a compaction density of 2.2 g/cm³ or more, optionally 2.2 g/cm³ or more and 2.8 g/cm³ or less, at 3T. Thus, it is beneficial to improving the volumetric energy density of the secondary battery.

In embodiments of the present application, the positive electrode active material has a surface oxygen valence of -1.90 or less, optionally -1.90 to -1.98. Thereby, by limiting the surface oxygen valence of the positive electrode active material in the above range as described above, it is possible to alleviate the interfacial side reaction of the positive electrode active material with the electrolytic solution, thereby improving the cycling performance and storage performance and the like of the secondary battery.

A second aspect of the present application provides a battery module, comprising the secondary battery according to the first aspect of the present application.

A third aspect of the present application provides a battery pack, comprising the battery module according to the second aspect of the present application.

A fourth aspect of the present application provides an electrical device comprising at least one of the secondary battery of the first aspect of the present application, the battery module of the second aspect of the present application or the battery pack of the third aspect of the present application.

The battery module, battery pack and electrical device include the secondary battery of the present application, and thus have at least the same advantages as said secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a schematic diagram of a secondary battery according to an embodiment of the present application.
FIG. 2 is an exploded view of a secondary battery according to an embodiment of the present application.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application as shown in FIG. 4.
FIG. 6 is a schematic diagram of an electrical device according to an embodiment of the present application using the secondary battery of the present application as power.

In the drawings, the accompanying drawings are not necessarily drawn to actual scale. The reference numerals are defined as follows:
1 battery pack
2 upper case body
3 lower case body
4 battery module
5 secondary battery
51 housing
52 electrode assembly
53 cover plate.

### DETAILED DESCRIPTION

Hereinafter, embodiments of the secondary battery and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

It should be noted that as used herein, the term "cladding layer" refers to a layer of material that covers the core of lithium manganese phosphate, and that the layer of material may completely or partially cover the core of lithium manganese phosphate, and that the term "cladding layer" is used for descriptive purposes only and is not intended to limit the present invention. In addition, each cladding layer may be fully or partially cladding. Similarly, the term "thickness of the cladding layer" refers to the thickness of the layer of the material cladding on the lithium manganese phosphate core in the radial direction of the lithium manganese phosphate core.

As used herein, the term "median particle size Dv50" is a particle size at which a cumulative volume distribution percentage of a material reaches to 50%. In the present application, the median particle size Dv50 of a material may be determined using a laser diffraction particle size analysis. For example, with reference to standard GB/T 19077-2016, it is determined using a laser particle size analyzer (e.g., Malvern Master Size 3000).

In the present application, an "approximate" value indicates a range of that the specified value ± 10%.

As used herein, the terms "a plurality of ", and "more" mean two or more.

As used herein, heteroatoms comprise N, O, S, Si and the like.

As used herein, the term "alkyl" refers to a saturated hydrocarbon group, including both straight chain and branched chain structures. Examples of alkyl include, without being limited to, methyl, ethyl, propyl (e.g., n-propyl, isopropyl), butyl (e.g., n-butyl, iso-butyl, sec-butyl, tert-butyl), and pentyl (e.g., n-pentyl, iso-pentyl, neopentyl).

As used herein, the term "heteroalkyl" refers to a group in which at least one carbon atom in the alkyl group is substituted with a heteroatom. For example, an oxoalkyl group is a group in which at least one carbon atom in the alkyl group is substituted with an oxygen atom. The number of heteroatoms in a heteroalkyl group may be one or more, and the plurality of heteroatoms may be the same or different.

As used herein, the term "alkenyl" refers to an unsaturated hydrocarbon group containing carbon-carbon double bonds, including both straight chain and branched chain structures, and the number of carbon-carbon double bonds may be one or more. Examples of alkenyl groups include, but are not limited to, vinyl, propenyl, allyl, and butadienyl.

As used herein, the term "alkynl" refers to an unsaturated hydrocarbon group containing a carbon-carbon triple bond, including both straight chain and branched chain structures, and the number of carbon-carbon triple bonds may be one or more. Examples of the alkynyl group include, but are not limited to, ethynyl, propynyl, butynyl, and butadiynyl.

As used herein, the term "aryl" refers to a closed aromatic ring or ring system. When not explicitly stated, an "aryl" structure may be a monocyclic, polycyclic, or fused ring, among others. Examples of aryl groups include, but are not limited to, phenyl, naphthyl, anthracenyl, phenanthryl, biphenyl, triphenyl, tetraphenyl, triphenylene, pyrenyl, chrysenyl, perylenyl, indenyl, benzophenanthrenyl, fluorenyl, 9,9-dimethylfluorenyl, and spiro-bifluorenyl

As used herein, the term "heteroaryl" means that one or more atoms in the ring of the aryl group are elements other than carbon (e.g., N, O, S, Si, etc.). Examples of the heteroaryl group include, but are not limited to, pyrrolyl, furanyl, thiophenyl, indolyl, benzofuranyl, benzothiophenyl, dibenzofuranyl, dibenzothiophenyl, carbazolyl, indenocarbazolyl, indolocarbazolyl, pyridinyl, pyrimidinyl, pyrazinyl, pyridazinyl, triazinyl, oxazolyl, isoxazolyl, thiazolyl, and isothiazolyl. The number of heteroatoms in the heteroaryl group may be one or more, and the plurality of heteroatoms may be the same or different.

The term "alicyclic group" refers to carbocyclic systems of aliphatic nature, including cyclized alkyl, alkenyl and alkynyl groups, which may be monocyclic or polycyclic in structure (e.g., fused, bridged, spiro). Examples of alicyclic groups include, but are not limited to, cyclopropyl, cyclobutyl, cyclopentyl, cyclohexyl, cycloheptyl, cyclopentenyl, cyclohexenyl, and cyclohexynyl.

The term "heterocyclyl" means that one or more atoms in the alicyclic ring are elements other than carbon (e.g., N, O, S, Si, etc.). The number of heteroatoms in a heterocyclic group may be one or more, and the plurality of heteroatoms may be the same or different. Examples of heterocyclyl ring groups include, but are not limited to, oxiranyl, aziridinyl, and propiolactone group.

As used herein, when the substituent is "divalent" or a group with the suffix "ene", it refers to a group formed by removing two H atoms from a molecule.

As used herein, when the substituent indicates a group consisting of certain groups, it includes a group formed by single bonding of these groups. For example, when the substituent denotes "at least one of the group consisting of a C2~C10 divalent alkyl group, a C6~C18 divalent aryl group", the substituent alone discloses alkylaryl or arylalkyl or alkylarylalkyl or arylalkylaryl formed by bonding a C2~C10 divalent alkyl group, a C6~C18 divalent aryl group, a C2~C10 divalent alkyl group with a C6~C18 divalent aryl group by a single bond.

In the context of the present application, substituents of compounds are disclosed as groups or ranges. It is explicitly expected that such a description includes each individual subcombination of members of these groups and ranges. For example, the term "C1-C6 alkyl group" is explicitly expected to disclose C1, C2, C3, C4, C5, C6, C1-C6, C1-C5, C1-C4, C1-C3, C1-C2, C2-C6, C2-C5, C2-C4, C1-C3, C1-C2, C3-C6, C3-C5, C3-C4, C4-C6, C4-C5, C5-C6, alkyl groups.

The inventors of the present application have found in practical operations that manganese ion's leaching out is serious during the deep charging and discharging of the the currently existing lithium manganese phosphate positive electrode active materials. Although there are attempts in the prior art to coat the lithium manganese phosphate with lithium iron phosphate, thereby reducing the interfacial side reaction, such coating cannot prevent the dissolved manganese ions from continuing to migrate into the non-aqueous electrolytic solution. The dissolved manganese ions are reduced to manganese metal after migrating to the negative electrode. The manganese metal thus produced is equivalent to a "catalyst", which can catalyze the decomposition of the SEI film (solid electrolyte interphase) on the surface of the negative electrode, and produce by-products; part of the by-products are gases, which will lead to expansion of the secondary battery and affect the safety performance of the secondary battery; in addition, this coating cannot prevent the dissolved manganese ions from continuing to migrate into the non-aqueous electrolytic solution. In addition, another part of the by-products is deposited on the surface of the negative electrode, which will hinder the passage of lithium ions in and out of the negative electrode, resulting in an increase in the impedance of the secondary battery, thereby affecting the kinetic performance of the secondary battery. In addition, in order to replenish the lost SEI film, the non-aqueous electrolytic solution and the active lithium ions inside the battery are constantly consumed, which can bring irreversible effects on the capacity retention rate of the secondary battery.

The inventors, after thorough consideration on a positive electrode and a non-aqueous electrolytic solution, have designed a secondary battery capable of simultaneously combining a high energy density with good rate performance, cycle performance, storage performance and safety performance.

Specifically, a first aspect of the present application provides a secondary battery.

### SECONDARY BATTERY

A secondary battery, also known as a rechargeable battery or accumulator, is a battery that can continue to be used by activating its active material by means of charging after the battery has been discharged. Typically, a secondary battery includes an electrode assembly and a non-aqueous electrolyte, and the electrode assembly includes a positive electrode plate, a negative electrode plate, and a separator. The separator is disposed between the positive electrode plate and the negative electrode plate, which mainly functions as preventing short circuit of the positive and negative electrodes while allowing lithium ions to pass through. The non-aqueous electrolytic solution functions as conducting active ions between the positive electrode plate and the negative electrode plate.

### [Positive electrode plate]

The secondary battery of the present application adopts a positive electrode plate comprising a positive electrode active material with a core-shell structure wherein the positive electrode active material comprises a core and a shell cladding the core.

The core has a chemical formula of Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S; the values of x, y and z satisfy the condition that the entire core is electrically neutral.

The shell comprises a first cladding layer covering the core, a second cladding layer covering the first cladding layer and a third cladding layer covering the second cladding layer, wherein the first cladding layer comprises crystalline pyrophosphates LiₐMP₂O₇ and/or M_{b}(P₂O₇)_{c}, 0 < a ≤ 2, 1 ≤ b ≤ 4, 1 ≤ c ≤ 6, in which the values of a, b, and c satisfy the condition that the crystalline pyrophosphate LiₐMP₂O₇ and/or M_{b}(P₂O₇)_{c} is electrically neutral, and in which each M in the crystalline pyrophosphates LiₐMP₂O₇ and/or M_{b}(P₂O₇)_{c} is independently one or more elements selected from Fe, Ni, Mg, Co, Cu, Zn, Ti, Ag, Zr, Nb, and Al; wherein the second cladding layer comprises crystalline phosphate XPO₄, X being one or more elements selected from Li, Fe, Ni, Mg, Co, Cu, Zn, Ti, Ag, Zr, Nb and Al; and wherein the third cladding layer is carbon.

Unless otherwise stated, in the above chemical formula, when A represents more than two elements, the above range for the y value is not only for the stoichiometric number of each element as A, but also for the sum of the stoichiometric numbers of each element as A. For example, when A represents more than two elements A1, A2 ...... and An, each of the respective stoichiometric numbers y1, y2 ......and yn of respective A1, A2 ......and An must fall within the numerical range defined by the present application for x, and the sum of y1, y2...... and yn must also fall within such numerical range of the present application. Similarly, in the case where R is more than two elements, the limitations on numerical ranges for the stoichiometric numbers of R in the present application also have the above meaning.

In an optional embodiment, when A is an element selected from one, two, three, or four of Zn, Al, Na, K, Mg, Mo, W, Ti, V, Zr, Fe, Ni, Co, Ga, Sn, Sb, Nb, and Ge, A_{y} is Qₙ₁Dₙ₂Eₙ₃Kₙ₄, with n1+n2+n3+n4=y and n1, n2, n3, and n4 being positive numbers and not simultaneously 0, and Q, D, E, and K are each independently one selected from Zn, Al, Na, K, Mg, Mo, W, Ti, V, Zr, Fe, Ni, Co, Ga, Sn, Sb, Nb, and Ge, and optionally at least one of Q, D, E, and K is Fe. Optionally, one of n1, n2, n3, and n4 is zero, and the rest are not zero; and more optionally, two of n1, n2, n3 and n4 are zero and the rest are not zero; more optionally, three of n1, n2, n3 and n4 are zero and the rest are not zero. In the core Li₁₊ₓMn_{1-y}A_{y}P_{1-z}R_{z}O₄, it is advantageous to dope one, two, three or four of the A elements at the manganese site, and optionally, to dope one, two or three of the A elements; furthermore, it is advantageous to dope one or two of the R elements at the phosphorus site, which facilitates a uniform distribution of dopant elements.

In the core Li₁₊ₓMn_{1-y}A_{y}P_{1-z}R_{z}O₄, the magnitude of x is affected by the magnitude of the valence states of A and R, and the magnitude of y and z, to ensure that the whole system exhibits electroneutrality. If the value of x is too small, it will lead to a lower lithium content of the whole core system, affecting the capacity exertion of the positive electrode active material. The value of y will limit the total amount of all the dopant elements, and if y is too small, i.e., the amount of doping is too small, the dopant elements cannot play a role, and if y is more than 0.5, it will lead to a lower content of Mn in the system, affecting the voltage plateau of the material. The R element is doped at the position of P. Since the P-O tetrahedron is more stable, and if the value of z is too large, the stability of the material will be affected, thus the value of z is limited to 0.001 to 0.100.

The inventors have found after conducting a large number of researches that by doping modification of lithium manganese phosphate and cladding lithium manganese phosphate with multiple layers, a new type of positive electrode active material having a core-shell structure can be obtained, and the positive electrode active material is capable of realizing a reduced leaching out of manganese ion and a reduced lattice change rate, so as to be able to improve rate performance, cycling performance, storage performance, safety performance of secondary batteries, and to increase the capacity exertion of the secondary batteries.

Although the mechanism is not clear, it is presumed that by doping the manganese and phosphorus sites of the lithium manganese phosphate core with element A and element R, respectively, not only can it effectively reduce the leaching out of manganese ions, and thus reduce manganese ions migrating to the negative electrode, and reduce the electrolyte consumed by the decomposition of the SEI membrane, and improve the cycling performance and the safety performance of the secondary batteries, but also can promote the adjustment of Mn-O bond, lowering the migration barrier of lithium ion, promoting lithium ion's migration, and improving the rate performance of the secondary battery; by covering the core with a first cladding layer comprising crystalline pyrophosphate, the migration resistance of manganese ions can be further increased, reducing their leaching, and reducing the content of surface heterolithium and the contact between the core and the electrolyte, thus reducing the interfacial side reaction, reducing the gas production, and improving the high-temperature storage performance, cycling performance and safety performance of the secondary battery; by further covering a crystalline phosphate cladding layer with excellent lithium ion conductivity, the interfacial side reaction between the positive electrode active material and the electrolyte can be effectively reduced, thereby improving the high-temperature cycling and storage performance of the secondary battery; and by further adding a carbon layer as a third cladding layer, the safety performance and kinetic performance of the secondary battery can be further improved.

In addition, in the core, the element A doped in the manganese position of the lithium manganese phosphate also helps to reduce the rate of lattice change of the e lithium manganese phosphate in the process of de-intercalation and intercalation of lithium in this material, improve the structural stability of the lithium manganese phosphate positive electrode active material, greatly reduce the leaching of the manganese ions and reduce the oxygen activity on the surface of the particles; and the element R doped in the phosphorus position also helps to change the degree of difficulty of the change in the bond length of the Mn-O bond, thereby improving the electronic conductivity and reducing the lithium ion migration barrier, promoting lithium ion migration, and improving the rate performance of the secondary battery.

In addition, the entire core system remains electrically neutral, which ensures that there are as few defects and heterogeneous phases in the positive electrode active material as possible. If there is an excessive amount of transition metal (e.g., manganese) in the positive electrode active material, due to the more stable structure of the material system itself, the excess transition metal is likely to precipitate in the form of elemental substance or form a heterogeneous phase inside the crystal lattice, and keeping the electro-neutrality can keep such heterogeneous phases as small as possible. Additionally, ensuring the system is electrically neutral can also lead to the creation of lithium vacancies in the positive electrode active material in some cases, which can lead to better kinetic performance of the positive electrode active material.

The average particle size of the core prepared in the present application ranges from 50 nm to 500 nm, and the Dv50 is from 200 nm to 300 nm. The primary particle size of the core is within the range of 50 nm to 500 nm, and the Dv50 is from 200 nm to 300 nm. If the average particle size of the core is too large (more than 500 nm), the capacity exertion of the secondary batteries using the material will be affected; if the average particle size of the core is too small, it has a large specific surface area and is prone to agglomeration, making it difficult to achieve uniform coating.

Through process control (e.g., sufficient mixing and grinding of materials from various sources), it is possible to ensure that the elements are uniformly distributed in the crystal lattice without agglomeration. The positions of the main characteristic peaks in the X-ray diffraction (XRD) patterns of lithium manganese phosphate doped with element A and element R are consistent with those of the un-doped LiMnPO₄, which indicates that the doping process has not introduced impurity phases, and thus the improvement of the performance of the core is mainly from the elemental doping rather than due to impurity phase. After preparing the positive electrode active material according to the present application, the inventors cut the middle region (the inner core region) of the prepared positive electrode active material particles by a focused ion beam (referred to as FIB), and tested it by a transmission electron microscope (referred to as TEM) as well as an X-ray energy spectrum analysis (referred to as EDS), and found that the distribution of the various elements was uniform, and that aggregation did not occur.

In the present application, "crystalline" means having a degree of crystallinity of 50% or more, i.e., 50% to 100%. A crystallinity of less than 50% is referred to as the glassy (or amorphous) state. The crystalline pyrophosphates and crystalline phosphates described in the present application have a crystallinity of 50% to 100%. Pyrophosphates and phosphates with a certain degree of crystallinity are not only conducive to giving full play to the functions of the pyrophosphate cladding layer in hindering the leaching out of manganese ions and the excellent lithium ion conductivity of the phosphate cladding layer, and reducing the interfacial side reactions, but also enable better lattice matching of the pyrophosphate cladding layer and the phosphate cladding layer so that a closer bonding of the cladding layers is achieved.

In the present application, the crystallinity of crystalline pyrophosphate as the material for the first cladding layer and crystalline phosphate as the material for the second cladding layer of the positive electrode active material can be tested by conventional technical means in the field, for example, by density method, infrared spectroscopy, differential scanning calorimetry, and nuclear magnetic resonance absorption method, and can also be tested, for example, by X-ray diffraction method.

A specific method for testing the crystallinity of crystalline pyrophosphate as the material for the first cladding layer and crystalline phosphate as the material for the second cladding layer of the positive electrode active material by the X-ray diffraction method may comprise the steps of taking a certain amount of the positive electrode active material powder and measuring the total scattering intensity by X-rays, which is the sum of the scattering intensities of the entire space substance, and is only related to the intensity of the primary rays, the chemical structure of the positive electrode active material powder, the total electron number (i.e., the mass), and not with the ordinal state of the sample; the crystalline scattering is then separated from the amorphous scattering from the diffractogram, and the degree of crystallinity, i.e., the ratio of the scattering of the crystalline portion to the total scattering intensity.

It should be noted that in the present application, the crystallinity of the pyrophosphate and phosphate in the cladding layer can be adjusted, for example, by adjusting the process conditions of the sintering process such as the sintering temperature, the sintering time and the like.

In the present application, since metal ions are difficult to migrate in the pyrophosphate, the pyrophosphate as the first cladding layer can effectively isolate the dopant metal ions from the non-aqueous electrolytic solution. The crystalline pyrophosphate has a stable structure, so the cladding with crystalline pyrophosphate can effectively inhibit the leaching out of the transition metal and improve the cycling performance of the secondary battery.

The bonding between the first cladding layer and the core is similar to a heterojunction, and the firmness of the bonding is limited by the degree of lattice matching. When the lattice mismatch is below 5%, the lattice matching is better, and the two materials are easy to combine tightly. The tight bonding can ensure that the cladding layer will not fall off in the subsequent cycling process, which is conducive to ensuring the long-term stability of the positive electrode active material. The measurement of the degree of bonding between the first cladding layer and the core is mainly carried out by calculating the degree of mismatch between the core and the respective lattice constant of the cladding. In the present application, after elements A and R are doped in the core, the matching degree between the core and the first cladding layer is improved and the core and the pyrophosphate cladding layer can be more tightly bonded with each other as compared to the non-doped elements.

Crystalline phosphate is chosen as the second cladding layer, firstly, because it has a higher lattice matching with the first cladding layer of crystalline pyrophosphate (the mismatch is only 3%); secondly, the stability of the phosphate itself is better than that of the pyrophosphate, and covering the pyrophosphate with it is conducive to the improvement of the stability of the positive electrode active material. The structure of crystalline phosphate is very stable, and it has excellent ability to conduct lithium ions, so the use of crystalline phosphate for covering can effectively reduce the interfacial side reaction between positive electrode active material and electrolyte, thus improving the high-temperature cycling performance and high-temperature storage performance of secondary battery. The lattice matching between the second cladding layer and the first cladding layer, among other things, is similar to the bonding between the first cladding layer and the nucleus as described above, and when the lattice mismatch is less than 5%, the lattice matching is better, and the two materials are easy to be bonded tightly.

The main reason for using carbon as the third cladding layer is the better electronic conductivity of the carbon layer. Since electrochemical reactions occur when applied in secondary batteries, which require the participation of electrons, carbon with excellent electrical conductivity can be used to cover the positive electrode active material in order to increase the electron transfer between particles and at different locations on the particles. Cladding with carbon can effectively improve the electrical conductivity and desolvation of the positive electrode active material.

In some embodiments, the primary particles of the positive electrode active material have an average particle size in the range of 50 nm to 500 nm, with a median volume particle size Dv50 in the range of 200 nm to 300 nm. Since the particles will agglomerate, the actual measured size of the secondary particles after agglomeration may be from 500 nm to 40,000 nm. The size of the particles of the positive electrode active material affects the processing of the material and the compaction density performance of the electrode plate. By selecting the average particle size of the primary particles to be within the above range, it is thereby possible to effectively avoid the following: the average particle size of the primary particles of the positive electrode active material being too small, which may cause agglomeration of the particles and make the particles difficult to be dispersed, and which requires a higher amount of binder, resulting in a poorer brittleness of the electrode plate; and the average particle size of the primary particles of the positive electrode active material being too large, which may result in larger inter-particle gaps and a lower compaction density.

By the above-described scheme, the lattice change rate of lithium manganese phosphate and manganese ion's leaching in the process of deintercalation and intercalation of lithium can be effectively suppressed, thereby enhancing the high-temperature cycling performance and high-temperature storage performance of the secondary battery.

In some embodiments, the crystalline pyrophosphate in the first cladding layer has an interplanar spacing ranging from 0.293 nm to 0.470 nm, and the angle of the crystal direction (111) ranges from 18.00° to 32.00°; the crystalline phosphate in the second cladding layer has an interplanar spacing ranging from 0.244 nm to 0.425 nm, and the angle of the crystal direction (111) ranges from 20.00° to 37.00°.

Both the first cladding layer and the second cladding layer in the positive electrode active material described in the present application use crystalline substances. The crystalline pyrophosphates and crystalline phosphates in the cladding layer can be characterized by means of techniques that are conventional in the art or, for example, with the aid of transmission electron microscopy (TEM). Under TEM, the core and the cladding layer can be distinguished by testing the interplanar spacing.

The specific test method for the interplanar spacing and angle of crystalline pyrophosphate and crystalline phosphate in the cladding layer may include the following steps: taking a certain amount of the sample powder of the clad positive electrode active material in a test tube and injecting a solvent, such as alcohol, into the test tube, and then carrying out sufficient stirring and dispersion, and then taking an appropriate amount of the above solution with a clean disposable plastic pipette and adding it dropwise to a 300-mesh copper mesh, and then leaving part of the powder on the copper mesh, and transferring the copper mesh with the sample to the TEM sample chamber for testing to obtain the original picture of the TEM test. The original picture obtained from the above TEM test was opened in the diffractometer software and Fourier transformed to obtain the diffraction pattern, and the distance from the diffracted spot to the center position in the diffraction pattern was measured to obtain the interplanar spacing, and the angle could be calculated according to Bragg's equation.

The difference between the range of the interplanar spacing of the crystalline pyrophosphate and that of the crystalline phosphate can be directly judged by the value of the interplanar spacing.

Crystalline pyrophosphates and crystalline phosphates having interplanar spacing and angle within the above range can more effectively inhibit the lattice change rate of lithium manganese phosphate and the leaching out of manganese ions in the process of deintercalation and intercalation of lithium, thereby enhancing the high-temperature cycling performance and high-temperature storage performance of the secondary battery.

In some embodiments, in the core, the ratio of y to (1-y) is from 1:10 to 1:1, optionally from 1:4 to 1:1. Herein y denotes the sum of the stoichiometric numbers of the Mn-site doping element A. The energy density and cycling performance of a secondary battery using the positive electrode active material may be further improved when the above conditions are met.

In some embodiments, in the core, the ratio of z to (1-z) is from 1:9 to 1:999, optionally from 1:499 to 1:249. Herein z denotes the sum of the stoichiometric numbers of the P-site doping element R. The energy density and cycling performance of a secondary battery using the positive electrode active material may be further improved when the above conditions are met.

In some embodiments, the carbon of the third cladding layer is a mixture of SP2 carbon and SP3 carbon; optionally, the molar ratio of the SP2 carbon to the SP3 carbon is any value in the range of 0.1 to 10, optionally any value in the range of 2.0 to 3.0.

In some embodiments, the molar ratio of the SP2 carbon to the SP3 carbon may be about 0.1, about 0.2, about 0.3, about 0.4, about 0.5, about 0.6, about 0.7, about 0.8, about 0.9, about 1, about 2, about 3, about 4, about 5, about 6, about 7, about 8, about 9, or about 10, or any value within any of the foregoing ranges.

By selecting the morphology of the carbon in the carbon cladding layer, the overall electrochemical performance of the secondary battery is thereby enhanced. Specifically, by using a mixed morphology of SP2 carbon and SP3 carbon and limiting the ratio of the SP2 carbon to the SP3 carbon to a certain range, the following can be effectively avoided: if the carbon in the cladding layer is all in the amorphous SP3 morphology, the electrical conductivity is poor, and if it is all in the graphitized SP2 morphology, although the electrical conductivity is good, there are few lithium-ion pathways, which is not conducive to the de-intercalation of lithium-ion. In addition, limiting the molar ratio of the SP2 carbon to the SP3 carbon to the above range achieves good electrical conductivity and ensures the lithium ion pathway, and is therefore conducive to improving the kinetic performance and cycling performance of the secondary battery.

The mixing ratio of the SP2 form and the SP3 form of the carbon for the third cladding layer can be controlled by sintering conditions such as sintering temperature and sintering time. For example, in the case where sucrose is used as a carbon source to prepare the third cladding layer, the sucrose is cracked at a high temperature and then deposited on the second cladding layer while at the same time under the action of high temperature, a carbon cladding layer with both the SP3 form and the SP2 form is produced. The ratio of the SP2 carbon to the SP3 carbon may be regulated by selecting the high temperature cracking conditions and the sintering conditions.

The structure and characterization of the carbon for the third cladding layer can be determined by Raman (Raman) spectroscopy as follows: the molar ratio of the SP2 carbon to the SP3 carbon is confirmed by splitting the energy spectrum of the Raman test to obtain I_{d}/I_{g} (I_{d} is the intensity of the peak of the carbon in the SP3 form and I_{g} is the intensity of the peak of the carbon in the SP2 form).

In some embodiments, the first cladding layer is applied in an amount of C1% by weight, with C1 being greater than 0 and less than or equal to 6, optionally greater than 0 and less than or equal to 5.5, more optionally greater than 0 and less than or equal to 2, based on the weight of the core.

In some embodiments, the second cladding layer is applied in an amount of C2% by weight, with C2 being greater than 0 and less than or equal to 6, optionally greater than 0 and less than or equal to 5.5, more optionally from 2 to 4, based on the weight of the core.

In some embodiments, the third cladding layer is applied in an amount of C3% by weight, with C3 being greater than 0 and less than or equal to 6, optionally greater than 0 and less than or equal to 5.5, more optionally greater than 0 and less than or equal to 2, based on the weight of the core.

In the present application, each layer has a non-zero applied amount.

In the positive electrode active material with a core-shell structure described in the present application, the applied amount of the three cladding layers is preferably within the above range, whereby the core can be sufficiently covered and at the same time further improve the dynamic performance, cycling performance, storage performance, and safety performance of the secondary battery without sacrificing the gram capacity of the positive electrode active material.

For the first cladding layer, by controlling the applied amount within the above range, the following situations can be effectively avoided: if the applied amount is too small, the thickness of the cladding layer is relatively thin, which may not be able to effectively impede the migration of the transition metal; if the applied amount that is too large, the cladding layer is too thick, which may affect the migration of Li⁺, and thus affect the rate performance of the secondary battery.

For the second cladding layer, by controlling the applied amount within the above range, the following situations can be effectively avoided: if the applied amount is too much, the overall platform voltage of the positive electrode active material may be affected; if the applied amount is too little, it may not be able to realize a sufficient cladding effect.

For the third cladding layer, the carbon covering mainly serves to enhance the electron transfer between the particles, however, since the structure also contains a large amount of amorphous carbon, the density of the carbon is relatively low, and therefore, if the applied amount is too large, the compaction density of the electrode plate may be affected.

In some embodiments, the first cladding layer has a thickness of 1 nm to 10 nm.

In some embodiments, the second cladding layer has a thickness of 2 nm to 15 nm.

In some embodiments, the third cladding layer has a thickness of 2 nm to 25 nm.

In some embodiments, the thickness of the first cladding layer may be about 2 nm, about 3 nm, about 4 nm, about 5 nm, about 6 nm, about 7 nm, about 8 nm, about 9 nm, or about 10 nm, or in any range of any of the above values.

In some embodiments, the thickness of the second cladding layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or in any range of any of the above values.

In some embodiments, the thickness of the third cladding layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm, or about 25 nm, or in any range of any of the above values.

When the thickness of the first cladding layer is within the range of 1 nm to 10 nm, it is possible to avoid an unfavorable effect on the kinetic performance of the positive electrode active material that may arise when the thickness of the first cladding layer is too thick, and it is possible to avoid a problem that may not be able to efficiently hinder the migration of the transition metal ions when the thickness of the first cladding layer is too thin.

When the thickness of the second cladding layer is within the range of 2 nm to 15 nm, the surface structure of the second cladding layer is stable, and the side reaction with the non-aqueous electrolytic solution is small, and thus the interfacial side reaction can be effectively mitigated, thereby improving the high-temperature cycling performance and high-temperature storage performance of the secondary battery.

When the thickness of the third cladding layer is within the range of 2 nm to 25 nm, the electrical conductivity of the positive electrode active material can be improved and the compaction density of the positive electrode plate prepared using the positive electrode active material can be improved.

The test for the thickness of the cladding layer is mainly carried out by FIB, and the specific method may comprise the following steps: randomly selecting a single particle from the positive electrode active material powder to be tested, cutting a thin slice with a thickness of about 100 nm from the middle position of the selected particle or from the vicinity of the middle position, and then carrying out a TEM test on the thin slice, measuring the thickness of the cladding layer, measuring 3-5 positions, and taking the average value.

In some embodiments, the content of manganese is in the range of 10 wt% to 35 wt%, optionally in the range of 15 wt% to 30 wt%, and more optionally in the range of 17 wt% to 20 wt%, based on the weight of the positive electrode active material.

In some embodiments, the content of phosphorus is in the range of 12 wt% to 25 wt%, optionally in the range of 15 wt% to 20 wt%, based on the weight of the positive electrode active material.

In some embodiments, the weight ratio of manganese to phosphorus is in the range of 0.90 to 1.25, optionally in the range of 0.95 to 1.20.

In the present application, where only the core of the positive electrode active material contains manganese, the amount of manganese may correspond to the amount of the core.

In the present application, limiting the content of manganese to the above range can effectively avoid problems such as deterioration of the structural stability of the positive electrode active material and decrease in density that may be caused if the content of manganese is too large, so as to improve the performance of the secondary battery in terms of cycling, storage and compaction density; and it can avoid problems such as a low voltage plateau that may be caused if the content of manganese is too small, so as to improve the energy density of the secondary battery.

In the present application, limiting the content of phosphorus to the above range can effectively avoid the following situations: if the content of phosphorus is too large, it may lead to the covalency of P-O being too strong and affect the conductivity of the small polarizers, thus affecting the electrical conductivity of the positive electrode active material; if the content of phosphorus is too small, it may cause the lattice structure of the pyrophosphate in the core, in the first cladding layer and/or of the phosphate in the second cladding layer to be less stable, thereby affecting the overall stability of the positive electrode active material.

The weight ratio of the manganese content to the phosphorus content has the following effects on the performance of the secondary battery: if the weight ratio is too large, it means that there is too much manganese, the manganese ion's leaching out increases, which affects the stability and capacity exertion of the positive electrode active material, and thus affects the cycling performance and the storage performance of the secondary battery; if the weight ratio is too small, it means that there is too much phosphorus, which is prone to form a heterogeneous phase, causing the discharge voltage plateau of the positive electrode active material to decrease, thus the energy density of the secondary battery is reduced.

The measurement of the elemental manganese and the elemental phosphorus may be carried out by technical means conventional in the art. In particular, the content of the manganese element and the phosphorus element is measured using the following method: the material is dissolved in dilute hydrochloric acid (concentration 10-30%), the content of each element of the solution is tested using ICP, and then the content of the manganese element is measured and converted to obtain its weight percentage.

In some embodiments, the positive electrode active material with a core-shell structure has a lattice change rate of 4% or less, optionally 3.8% or less, and more optionally from 2.0% to 3.8% before and after complete deintercalation and intercalation of lithium.

The deintercalation and intercalation of lithium in manganese phosphate (LiMnPO₄) is a two-phase reaction. The interfacial stress of the two phases is determined by the magnitude of the lattice change rate before and after the deintercalation and intercalation of lithium, and the smaller the lattice change rate is, the smaller the interfacial stress is, and the easier the Li⁺ transport is. Therefore, reducing the lattice change rate of the core will be favorable to enhance the Li⁺ transport ability, thereby improving the rate performance of the secondary battery. The positive electrode active material having a core-shell structure described in the present application is capable of realizing a lattice change rate before and after the deintercalation and intercalation of lithium of less than 4%, and thus the use of the positive electrode active material is capable of improving the rate performance of the secondary battery. The lattice change rate can be measured by methods known in the art, such as X-ray diffraction (XRD) mapping.

In some embodiments, the positive electrode active material with a core-shell structure has a Li/Mn anti-site defect concentration of 4% or less, optionally 2.2% or less, more optionally 1.5% to 2.2%.

The term Li/Mn anti-site defect refers to interchange of Li⁺ with Mn²⁺ in terms of its site in the LiMnPO₄ lattice. Accordingly, the Li/Mn anti-site defect concentration refers to a percentage of Li⁺ interchanged with Mn²⁺ relative to the total amount of Li⁺. The Li/Mn anti-site defect concentration in the present application may, for example, be tested according to JIS K 0131-1996.

The positive electrode active material with a core-shell structure described in the present application is capable of realizing the lower Li/Mn anti-site defect concentration described above. Although the mechanism is not yet well understood, the inventors of the present application speculate that since Li⁺ and Mn²⁺ will swap positions in the LiMnPO₄ lattice, and the Li⁺ transport channel is a one-dimensional channel, Mn²⁺ will be difficult to migrate in the Li⁺ channel, which in turn hinders the Li⁺ transport. As a result, the positive electrode active material with a core-shell structure described in the present application is able to avoid Mn²⁺ from hindering Li⁺ transmission and at the same time enhance the capacity exertion and rate performance of the positive electrode active material due to the low concentration of Li/Mn anti-site defects, which is within the above range.

In some embodiments, the positive electrode active material with a core-shell structure has a compaction density of 2.2 g/cm³ or more, optionally 2.2 g/cm³ or more and 2.8 g/cm³ or less, at 3T (tonne). The higher the compaction density is, the greater the weight of the positive electrode active material per unit volume is. Thus, increase of the compaction density is conducive to improving volumetric energy density of batteries. Compaction density can be measured according to GB/T 24533-2009.

In some embodiments, the positive electrode active material with a core-shell structure has a surface oxygen valence of -1.90 or less, optionally -1.90 to -1.98.

The stable valence state of oxygen is originally -2, and the closer the valence state is to the -2, the stronger the ability to gain electrons, i.e., the stronger the oxidizing property, and usually, the surface valence is below -1.7. By limiting the surface oxygen valence of the positive electrode active material to the above range as described above, the present application is able to mitigate the interfacial side reaction between the positive electrode active material and the electrolyte, thereby improving the cycling performance and the high-temperature storage performance of the secondary battery and the like.

The surface oxygen valence state can be measured by methods known in the art, such as by electron energy loss spectroscopy (EELS).

The present application further provides a method for preparing the positive electrode active material, comprising a step of providing a core material, a step of cladding.

Step of providing a core material: the core has the chemical formula of Li₁₊ₓMn_{1-y}A_{y}P_{1-z}R_{z}O₄, x being any value in the range of -0.100 to 0.100, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S.

The step of cladding comprises providing LiₐMP₂O₇ and/or M_{b}(P₂O₇)_{c} and XPO₄ suspensions, respectively, adding the core material to the suspensions and mixing them, and obtaining the positive electrode active material by sintering, wherein 0 ≤ a ≤ 2, 1 ≤ b ≤ 4, 1 ≤ c ≤ 6, and the values of a, b, and c satisfy the condition that the crystalline pyrophosphate LiₐMP₂O₇ and/or M_{b}(P₂O₇)_{c} is electrically neutral; wherein each M is independently one or more elements selected from Fe, Ni, Mg, Co, Cu, Zn, Ti, Ag, Zr, Nb and Al; wherein X is one or more elements selected from Li, Fe, Ni, Mg, Co, Cu, Zn, Ti, Ag, Zr, Nb and Al; wherein the positive electrode active material has a core-shell structure comprising the core and a shell covering the core, wherein the shell comprises a first cladding layer covering the core, a second cladding layer covering the first cladding layer, and a third cladding layer covering the second cladding layer, wherein the first cladding layer comprises crystalline pyrophosphate LiₐMP₂O₇ and/or M_{b}(P₂O₇)_{c}, the second cladding layer comprises crystalline phosphate XPO₄, and the third cladding layer is carbon.

In some embodiments, the step of providing a core material comprises the following Step (1) and Step (2).

Step (1): a manganese source, a dopant of element A and an acid are mixed in a container and stirred to obtain manganese salt particles doped with element A.

Step (2): the manganese salt particles doped with element A is mixed with a lithium source, a phosphorus source and a dopant of element R in a solvent to obtain a slurry, and a core doped with element A and element R is obtained after sintering under the protection of an inert gas atmosphere, wherein the core doped with element A and element R is Li₁₊ₓMn_{1-y}A_{y}P_{1-z}R_{z}O₄, x being any value in the range of -0.100 to 0.100, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S.

The preparation methods of the present application are not particularly limited to the source of the material, the source of an element may include one or more of elemental substance, sulfate, halide, nitrate, organic acid salt, oxide, or hydroxide of the element, and the precursor being the source may fulfill the purpose of the preparation methods of the present application.

In some embodiments, the dopant of element A is one or more of elemental substance carbonates, sulfates, chlorates, nitrates, organic acids, oxides, hydroxides of one or more of the respective elements selected from Zn, Al, Na, K, Mg, Mo, W, Ti, V, Zr, Fe, Ni, Co, Ga, Sn, Sb, Nb and Ge.

In some embodiments, the dopant of element R is one or more of an inorganic acid, an organic acid, a sulfate, a chloride, a nitrate, an organic acid salt, an oxide, a hydroxide of one or more of the elements of one or more of the respective elements of B, Si, N and S.

In the present application, the manganese source may be a manganese-containing substance known in the art that can be used to prepare lithium manganese phosphate. As an example, the manganese source may be one or more selected from elemental manganese, manganese dioxide, manganese phosphate, manganese oxalate, and manganese carbonate.

In the present application, the acid may be one or more selected from inorganic acids such as hydrochloric acid, sulfuric acid, nitric acid, phosphoric acid, silicic acid, metasilicic acid, and organic acids such as oxalic acid. In some embodiments, the acid is a dilute organic acid with a concentration of 60 wt% or less.

In some embodiments, the lithium source may be a lithium-containing substance known in the art that can be used to prepare lithium manganese phosphate. For example, the lithium source may be one or more selected from lithium carbonate, lithium hydroxide, lithium phosphate, and lithium dihydrogen phosphate.

In some embodiments, the phosphorus source may be a phosphorus-containing substance known in the art that can be used to prepare lithium manganese phosphate. For example, the phosphorus source may be one or more selected from diammonium hydrogen phosphate, ammonium dihydrogen phosphate, ammonium phosphate and phosphoric acid.

In some embodiments, after the manganese source, the dopant of element A and the acid react in a solvent to obtain a suspension of manganese salt doped with element A, the suspension is filtered, dried, and sanded to obtain manganese salt particles doped with element A having a particle size of 50-200 nm.

In some embodiments, the slurry in step (2) is dried to obtain a powder, and then the powder is sintered to obtain a core doped with element A and element R.

In some embodiments, the step (1) is mixed at a temperature of 20°C to 120°C, optionally 40°C to 120°C. The mixing in the step (1) proceeds with stirring at 400 rpm to 700 rpm for 1 h to 9 h, optionally 3 h to 7 h.

Optionally, the reaction temperature in the step (1) may be about 30°C, about 50°C, about 60°C, about 70°C, about 80°C, about 90°C, about 100°C, about 110°C, or about 120°C; the stirring in the step (1) proceeds for about 2 hours, about 3 hours, about 4 hours, about 5 hours, about 6 hours, about 7 hours, about 8 hours, or about 9 hours; optionally, the reaction temperature and the stirring time in step (1) may be within any range of any of the above values.

In some embodiments, the step (2) is mixed at a temperature of 20°C to 120°C, optionally 40°C to 120°C for 1 hour to 12 hours. Optionally, the reaction temperature in the step (2) may be about 30°C, about 50°C, about 60°C, about 70°C, about 80°C, about 90°C, about 100°C, about 110°C, or about 120°C; the mixing in the step (2) proceeds for about 2 hours, about 3 hours, about 4 hours, about 5 hours, about 6 hours, about 7 hours, about 8 hours, about 9 hours, about 10 hours, about 11 hours, or about 12 hours; optionally, the reaction temperature and the mixing time in the step (2) may be within any range of any of the above values.

When the temperature and time during the preparation of the core particles are within the above range, the core obtained by preparation and the positive electrode active material made therefrom have fewer lattice defects, which is favorable to suppressing manganese ion's leaching and reducing the interfacial side reaction between the positive electrode active material and the electrolyte, thereby improving the cycling performance and safety performance of the secondary battery.

In some embodiments, optionally, in the process of preparing the lithium manganese phosphate particles doped with element A and element R, pH of the solution is controlled to be from 3.5 to 6, optionally, the pH of the solution is controlled to be from 4 to 6, and more optionally, the pH of the solution is controlled to be from 4 to 5. It is to be noted that the pH of the resultant mixture can be adjusted in the present application by a method commonly used in the art, for example, by adding an acid or a base.

Optionally, in some embodiments, in the step (2), the molar ratio of the manganese salt particles doped with element A to the lithium source and the phosphorus source is 1:(0.5-2.1):(0.5-2.1), and more optionally, the molar ratio of the manganese salt particles doped with element A to the lithium source and to the phosphorus source is about 1:1:1.

In some embodiments, optionally, the sintering conditions in the process of preparing A-element and R-element doped lithium manganese phosphate are as follows: sintering at an atmosphere of inert gas or a mixture of inert gas and hydrogen at a temperature of from 600°C to 950°C for 4 hours to 10 hours; optionally, the sintering may be at a temperature of from about 650°C, to about 700°C, to about 750°C, to about 800°C, to about 850°C, or to about 900°C for about 2 hours, about 3 hours, about 4 hours, about 5 hours, about 6 hours, about 7 hours, about 8 hours, about 9 hours, or about 10 hours; optionally, the sintering may be at temperatures for sintering times, within any range of any of the above values. In the process of preparing A-element and R-element doped lithium manganese phosphate, when the sintering temperature is too low and the sintering time is too short, it will lead to a lower crystallinity of the core of the positive electrode active material, which will affect the overall performance, while when the sintering temperature is too high, the heterogeneous phases are likely to appear in the core of the positive electrode active material, which will affect the overall performance; and when the sintering time is too long, the particles of the core of the positive electrode active material will be larger in length, thus affecting the capacity exertion, compaction density, rate performance, and the like.

In some embodiments, optionally, the protective atmosphere is a mixture of 70-90 vol% nitrogen and 10-30 vol% hydrogen.

In some embodiments, the cladding step comprises a first cladding step, a second cladding step and a third cladding step:
a first cladding step: dissolving a source of element M, a source of phosphorus and an acid, and optionally a source of lithium, in a solvent to obtain a suspension of first cladding layer; mixing the core obtained in the step of providing a core material with the suspension of first cladding layer obtained in the first cladding step sufficiently, drying, and sintering to obtain a material covered with the first cladding layer;
a second cladding step: dissolving a source of element X, a phosphorus source, and an acid in a solvent to obtain a suspension of second cladding layer; mixing the material covered with first cladding layer obtained in the first cladding step with the suspension of second cladding layer obtained in the second cladding step sufficiently, drying, and sintering, to obtain a material covered with two cladding layers;
a third cladding step: dissolving a carbon source in a solvent and fully dissolving it to obtain a solution of third cladding layer; then adding the material covered with two cladding layers obtained in the second cladding step to the solution of third cladding layer, mixing well, drying and then sintering to obtain a material cover with three cladding layers, i.e., the positive electrode active material.

In some embodiments, the source of element M is one or more of elemental substance, carbonates, sulfates, chlorates, nitrates, organic acids, oxides, hydroxides of one or more of the respective elements selected from Fe, Ni, Mg, Co, Cu, Zn, Ti, Ag, Zr, Nb, and Al.

In some embodiments, the source of element X is one or more of elemental substance, carbonates, sulfates, chlorates, nitrates, organic acids, oxides, hydroxides of one or more of the respective elements Li, Fe, Ni, Mg, Co, Cu, Zn, Ti, Ag, Zr, Nb, and Al.

The amount of the sources of each of the elements A, R, M, and X added depends on the target doping amount, and the ratio of the amount of lithium source, manganese source, and phosphorus source conforms to the stoichiometric ratio.

As an example, the carbon source is one or more of starch, sucrose, glucose, polyvinyl alcohol, polyethylene glycol, and citric acid.

In some embodiments, in the first cladding step, the pH of the solution of the source dissolved with element M, the phosphorus source and acid, and optionally the lithium source, is controlled to be from 3.5 to 6.5, and then stirred and reacted for from 1 hour to 5 hours, and then the solution is warmed up to from 50°C to 120°C, and maintained at that temperature for from 2 hours to 10 hours. In some embodiments, sintering proceeds at 650°C to 800°C for 2 hours to 6 hours in the first cladding step.

Optionally, in the first cladding step, the reaction is fully carried out. Optionally, in the first cladding step, the reaction proceeds for about 1.5 hours, about 2 hours, about 3 hours, about 4 hours, about 4.5 hours, or about 5 hours. Optionally, the reaction time of the reaction in the first cladding step may be within any range of any of the above values.

Optionally, in the first cladding step, the solution pH is controlled to be from 4 to 6.

Optionally, in the first cladding step, the solution is warmed to about 55°C, about 60°C, about 70°C, about 80°C, about 90°C, about 100°C, about 110°C, or about 120°C and held at that temperature for about 2 hours, about 3 hours, about 4 hours, about 5 hours, about 6 hours, about 7 hours, about 8 hours , about 9 hours, or about 10 hours; optionally, the temperature at which the warming occurs and the holding time in the first cladding step may be within any range of any of the above values.

Optionally, in the first cladding step, the sintering may proceed at about 650°C, about 700°C, about 750°C, or about 800°C for about 2 hours, about 3 hours, about 4 hours, about 5 hours, or about 6 hours; optionally, the sintering temperature and the sintering time, may be within any range of any of the above values.

In the first cladding step, by controlling the sintering temperature and time within the above range, the following can be effectively avoided: when the sintering temperature in the first cladding step is too low and the sintering time is too short, it will result in the first cladding layer having a low degree of crystallinity and more amorphous matter, which will lead to a decrease in the effect of inhibiting the dissolution of metals, thereby affecting the cycling performance and the storage performance of the secondary battery; whereas, if the sintering temperature is too high, this will lead to the appearance of heterogeneous phases in the first cladding layer, which will also affect its effect of inhibiting metal dissolution, thereby affecting the cycling performance and storage performance of the secondary battery, etc.; and if the sintering time is too long, this will increase the thickness of the first cladding layer, affecting the migration of Li⁺, thereby affecting the capacity exertion and the rate performance of the secondary battery.

In some embodiments, in the second cladding step, the source of element X, the phosphorus source and the acid are dissolved in a solvent, then stirred and reacted for 1 hour to 10 hours, and then the solution is warmed up to 60°C to 150°C and maintained at that temperature for 2 hours to 10 hours. In some embodiments, the sintering in the second cladding step proceeds at 500°C to 700°C for 6 hours to 10 hours.

Optionally, in the second cladding step, the reaction is fully carried out. Optionally, in the second cladding step, the reaction proceeds for about 1.5 hours, about 2 hours, about 3 hours, about 4 hours, about 4.5 hours, about 5 hours, about 6 hours, about 7 hours, about 8 hours, about 9 hours, or about 10 hours. Optionally, the reaction time in the second cladding step may be within any range of any of the above values.

Optionally, in the second cladding step, the solution is warmed to about 65°C, about 70°C, about 80°C, about 90°C, about 100°C, about 110°C, about 120°C, about 130°C, about 140°C, or about 150°C and maintained at that temperature for about 2 hours, about 3 hours, about 4 hours, about 5 hours, about 6 hours, about 7 hours, about 8 hours, about 9 hours, or about 10 hours; optionally, the temperature at which the warming occurs and the holding time in the second cladding step may be within any range of any of the above values.

In the step of providing the core material and in the first cladding step and the second cladding step, prior to sintering, i.e., in the preparation of the core material in which the chemical reaction takes place (steps (1) and (2)) as well as in the preparation of the first cladding layer suspension and the second cladding layer suspension, it is possible to efficiently avoid the following by selecting the appropriate reaction temperatures and the reaction times, as described above: if the reaction temperature is too low, the reaction cannot occur or the reaction rate is slow; if the temperature is too high, the product decomposes or a heterogeneous phase is formed; if the reaction time is too long, the product particle size is large, which may increase the time and difficulty of the subsequent process; and if the reaction time is too short, then the reaction is incomplete and less product is obtained.

Optionally, in the second cladding step, the sintering may proceed at about 550°C, about 600°C, or about 700°C for about 6 hours, about 7 hours, about 8 hours, about 9 hours, or about 10 hours; optionally, the sintering temperature and the sintering time may be in any range of any of the above values.

In the second cladding step, by controlling the sintering temperature and time within the above range, the following can be effectively avoided: if the sintering temperature in the second cladding step is too low and the sintering time is too short, it will result in the second cladding layer having a low degree of crystallinity, more amorphous states, and a decline in its performance of lowering the surface reactive activity of the positive electrode active material, thereby affecting the cycling performance and storage performance of the secondary battery, etc.; and if the sintering temperature is too high, it will lead to the appearance of heterogeneous phases in the second cladding layer, which will also affect its effect of lowering the surface reaction activity of the positive electrode active material, thereby affecting the cycling performance and the storage performance of the secondary battery, etc.; and if the sintering time is too long, it will lead to an increase in the thickness of the second cladding layer, which will affect the voltage plateau of the positive electrode active material, thereby causing the energy density of the secondary battery to decrease, etc.

In some embodiments, the sintering in the third cladding step proceeds at 700°C to 800°C for 6 hours to 10 hours. Optionally, in the third cladding step, the sintering may be performed at about 700°C, about 750°C, or about 800°C for about 6 hours, about 7 hours, about 8 hours, about 9 hours, or about 10 hours; optionally, the temperature of the sintering, and the time of the sintering, may be within any range of any of the above values.

In the third cladding step, by controlling the sintering temperature and time within the above ranges, the following can be effectively avoided: if the sintering temperature in the third cladding step is too low, it will result in a decrease in the degree of graphitization of the third cladding layer, which will affect its electrical conductivity, thereby affecting the capacity exertion of the positive electrode active material; if the sintering temperature is too high, it will result in an excessive degree of graphitization of the third cladding layer, which will affect the Li⁺ transmission, thereby affecting the capacity exertion of the positive electrode active material, etc.; if the sintering time is too short, it will result in the cladding layer being too thin, affecting its electrical conductivity, thereby affecting the capacity exertion of the positive electrode active material; if the sintering time is too long, it will result in the cladding layer being too thick, affecting the compaction density of the positive electrode active material, etc.

In the above-described first cladding step, second cladding step, and third cladding step, the drying may all proceed at a drying temperature of 100°C to 200°C, optionally 110°C to 190°C, more optionally 120°C to 180°C, even more optionally 120°C to 170°C, and most optionally 120°C to 160°C, and the drying time may be from 3 hours to 9 hours, optionally 4 hours to 8 hours, more optionally 5 hours to 7 hours, and most optionally about 6 hours.

By the positive electrode active material prepared by the method for preparing the positive electrode active material described in the present application, the secondary battery prepared therefrom has a reduced amount of Mn and Mn-site doping elements dissolved after cycling, and the high-temperature storage performance, the cycling performance, and the rate performance are improved. In addition, the raw materials are widely available, low cost and simple process, which is conducive to industrialization.

The positive electrode plate of the present application comprises a positive electrode current collector and a positive electrode film layer provided on at least one surface of the positive electrode current collector. In particular, the positive electrode current collector has two surfaces opposite to each other in the direction of its own thickness, and the positive electrode film layer is provided on either or both of two opposite surfaces of the positive electrode current collector. The positive electrode film layer comprises the positive electrode active material of the present application described above.

In some embodiments, optionally, the positive electrode active material is present in said positive electrode film layer in a content of from 90 wt% to 99.5wt%, based on the total weight of the positive electrode film layer. More optionally, the positive electrode active material is present in the positive electrode film layer in a content of from 95 wt% to 99.5wt%, based on the total weight of the positive electrode film layer.

The positive electrode film layer does not exclude other positive electrode active materials than the positive electrode active material with a core-shell structure provided by the present application. For example, in some embodiments, the positive electrode film layer may further comprise at least one of a lithium transition metal oxide and a modified compound thereof. By way of example, the other positive electrode materials may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof.

In some embodiments, the positive electrode film layer optionally further comprises a positive electrode conductive agent. The present application does not specifically limit the type of said positive electrode conductive agent, and as an example, the positive electrode conductive agent includes at least one of superconducting carbon, conductive graphite, acetylene black, carbon black, Ketjen black, carbon dots, carbon nanotubes, graphene, and carbon nanofibers.

In some embodiments, said positive electrode film layer optionally further comprises a binder. The present application does not specifically limit the type of the positive electrode binder, and as an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode current collector may be a metal foil or a composite collector fluid. As an example of a metal foil, an aluminum foil may be used. The composite collector may include a polymeric material matrix and a metallic material layer formed on at least one surface of the polymeric material matrix. As an example, the metallic material may be selected from at least one of aluminum, aluminum alloy, nickel, nickel alloy, titanium, titanium alloy, silver, and silver alloy. As an example, the polymeric material matrix may be selected from polypropylene (PP), polyethylene terephthalate (PET), polybutylene terephthalate (PBT), polystyrene (PS), polyethylene (PE), etc.

The positive electrode film layer is usually made by applying a positive electrode slurry to the positive collector followed by drying and cold pressing. The positive electrode slurry is usually formed by dispersing the positive electrode active material, an optional conductive agent, an optional binder, and any other components in a solvent and stirring uniformly. The solvent may be N-methylpyrrolidone (NMP), but is not limited thereto.

### [Negative electrode plate]

In some embodiments, the negative electrode plate comprises a negative electrode current collector and a negative electrode film layer provided on at least one surface of the negative electrode current collector and comprising a negative electrode active material. For example, the negative electrode current collector has two surfaces opposite to each other in the direction of its own thickness, and the negative electrode film layer is provided on either or both of two opposite surfaces of the negative electrode current collector.

The negative electrode active material may be a negative electrode active material known in the art for use in secondary batteries. By way of example, the negative electrode active material includes, but is not limited to, at least one of natural graphite, artificial graphite, soft carbon, hard carbon, silicon-based material, tin-based material, and lithium titanate. The silicon-based material may include at least one of elemental silicon, a silicon oxide, a silicon carbon composite, a silicon nitrogen composite, a silicon alloy material. The tin-based materials may include at least one of elemental tin, a tin oxide, and a tin alloy material. The present application is not limited to these materials, and other conventionally known materials that can be used as negative electrode active materials for secondary batteries may also be used. These negative electrode active materials can be used alone, or in combination of two or more materials.

In some embodiments, the negative electrode film layer may optionally comprise a negative electrode conductive agent. In the present application, the type of the negative electrode conductive agent is not particularly limited and, as an example, the negative electrode conductive agent may include at least one of superconducting carbon, conductive graphite, acetylene black, carbon black, Ketjen black, carbon dots, carbon nanotubes, graphene, and carbon nanofibers.

In some embodiments, the negative electrode film layer may further optionally comprise a negative electrode binder. In the present application, the type of the negative electrode binder is not particularly limited and, as an example, the negative electrode binder may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, the negative electrode film layer may optionally include other additives. As an example, the other additives may include thickeners, e.g., sodium carboxymethyl cellulose (CMC), and PTC thermistor material, etc.

In some embodiments, the negative electrode current collector may be a metal foil or a composite current collector. As an example of a metal foil, a copper foil may be used. The composite current collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymeric material matrix may be selected from polypropylene (PP), polyethylene terephthalate (PET), polybutylene terephthalate (PBT), polystyrene (PS), polyethylene (PE), etc.

The negative electrode film layer is usually made by applying a negative electrode slurry to the negative electrode current collector followed by drying and cold pressing. The negative electrode slurry is usually formed by dispersing the negative electrode active material, an optional conductive agent, an optional binder, and any other optional additives in a solvent and stirring uniformly. The solvent may be N-methylpyrrolidone (NMP) and deionized water, but is not limited thereto.

The negative electrode plate does not exclude other additional functional layers than the negative electrode film layer. For example, in some embodiments, the negative electrode plate described in the present application further comprises a conductive primer (e.g. being composed of a conductive agent and a binder) sandwiched between the negative electrode current collector and the negative electrode film layer and disposed on the surface of the negative electrode current collector. In some other embodiments, the negative electrode plate described in this application further comprises a protective layer covering the surface of the negative electrode film layer.

### [Separator]

There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, the positive electrode plate, the separator, and the negative electrode plate may be made into an electrode assembly by a winding process or a stacking process.

### [Non-aqueous electrolytic solution]

The secondary battery comprises a non-aqueous electrolytic solution, which is a bridge for the passage of lithium ions in the secondary battery, takes the burden of transporting lithium ions between the positive and negative electrodes in the secondary battery, and plays a crucial role in capacity exertion, cycling performance, storage performance, and safety performance of the secondary battery.

At present, the most widely used non-aqueous electrolytic solution system commercially is a mixed carbonate solution of lithium hexafluorophosphate, but lithium hexafluorophosphate has poor thermal stability at high temperatures, and will decompose at higher temperatures to form PF₅, which has strong Lewis acidity and will decompose organic solvents by interacting with lone pairs of electrons on the oxygen atoms of organic solvents molecules; moreover, PF₅ has a high sensitivity to the trace amount of water in non-aqueous electrolytic solution, and will generate HF when it meets water, thereby increasing the acidity of non-aqueous electrolytic solution, and thus easily destroying the cladding layer on the surface of the positive electrode active material, and in particular, easily destroying the above-described first cladding layer comprising a crystalline pyrophosphate and the second cladding layer comprising a crystalline phosphate, accelerating manganese ions to leach out, and affecting the cycling performance and storage performance of the secondary battery.

The inventors have further conducted a great deal of research and skillfully added a first additive shown in Formula 1 below to the non-aqueous electrolytic solution, which is capable of being able to reduce the dissolution of the cladding layer, and thus is able to significantly improve the cycling performance and storage performance of the secondary battery.

In particular, the non-aqueous electrolytic solution according to the present application comprises a first additive comprising one or more of the compounds shown in Formula 1:

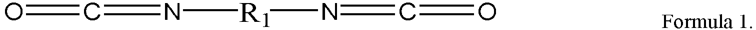

R₁ represents at least one of the group consisting of the following groups substituted or unsubstituted by Rₐ: C2~C10 divalent alkyl, C2~C10 divalent heteroalkyl, C6~C18 divalent aryl, C7~C18 divalent aryl alkyl, C7~C18 divalent alkyl aryl, C8~C18 divalent alkyl aryl alkyl, C13~C18 divalent aryl alkyl aryl, C2~C18 divalent heteroaryl, C3~C18 divalent heteroarylalkyl, C3~C18 divalent alkylheteroaryl, C4~C18 divalent alkylheteroarylalkyl, C5~C18 divalent heteroarylalkylheteroaryl, C3~C18 divalent alcyl, C4~C18 divalent alcyl alkyl, C4~C18 divalent alkyl alcyl, C5~C18 divalent alkyl alcyl alkyl, C7~C18 divalent alcyl alkyl alcyl, C2~C18 divalent heteroalcyl, C3~C18 divalent heteroalcyl alkyl, C3~C18 divalent alkyl heteroalcyl, C4~C18 divalent alkyl heteroalcyl alkyl, and C5~C18 divalent heteroalcyl alkyl heteroalcyl.

Rₐ comprises one or more selected from halogen atoms, -CN, -NCO, -OH, -COOH, -SOOH, carboxylate group, sulfonate group, sulfate group, C1~C10 alkyl, C2~C10 alkenyl, C2~C10 alkynyl, C2~C10 oxoalkyl, phenyl, and benzyl. Optionally, the halogen atom comprises one or more selected from a fluorine atom, a chlorine atom, a bromine atom. More optionally, the halogen atom is selected from a fluorine atom.

When the non-aqueous electrolytic solution comprises the first additive shown in Formula 1 above, the first additive can react with a trace amount of water in the non-aqueous electrolytic solution to form -NHCOOH, reduce the generation of HF, reduce the acidity of the non-aqueous electrolytic solution, and thereby reduce the dissolution of the cladding layer, the leaching out of manganese ions, and the generation of gas. At the same time, the first additive shown in Formula 1 is also capable of generating a uniform and dense interfacial film on the surface of the negative electrode active material, reducing the reduction reaction of the leached manganese ions at the negative electrode. As a result, when the non-aqueous electrolytic solution contains the first additive shown in the above Formula 1, the cycling performance and the storage performance of the secondary battery can be significantly improved, and in particular, the high-temperature cycling performance and the high-temperature storage performance of the secondary battery can be significantly improved.

In some embodiments of the present application, R₁ represents at least one of the group consisting of the following groups substituted or unsubstituted by Rₐ: C2~C10 alkylidene, C2~C10 oxoalkylidene, C2~C10 azidoalkylidene, phenylidene, o-phenylenedimethylene, m-phenylenedimethylene, p-phenylenedimethylene, monomethylphenylene, dimethylphenylene, trimethylphenylene, tetramethylphenylene, monoethylphenylene, diethylphenylene, triethylphenylene, tetraethylphenylene, biphenylene, terphenylene, quaterphenylene, diphenylmethyl, cyclobutylidene, o-cyclobutyldimethylene, m-cyclobutyldimethylene, p-cyclobutyldimethylene, cyclopentylidene, o-cyclopentyldimethylene, m-cyclopentyldimethylene, p-cyclopentyldimethylene, cyclohexylidene, monomethyl cyclohexylidene, dimethyl cyclohexylidene, trimethyl cyclohexylidene, tetramethyl cyclohexylidene, o-cyclohexyldimethylene, m-cyclohexyldimethylene, p-cyclohexyldimethylene, dicyclohexylmethane, methylcyclohexyl, naphthylene, anthrylene and perhydroanthrylene. Optionally, Rₐ comprises one or more selected from a fluorine atom, -CN, -NCO, -OH, -COOH, -SOOH, carboxylate group, sulfonate group, sulfate group, C1~C10 alkyl, C2~C10 alkenyl, C2~C10 alkynyl, C2~C10 oxoalkyl, phenyl and benzyl.

When R₁ represents the above substituent group, it is capable of further reducing the generation of HF and lowering the acidity of the non-aqueous electrolytic solution, and at the same time helping to generate a uniform, dense interfacial film with low impedance on the surface of the negative electrode active material, whereby the improvement effect on the cycling performance and the storage performance of the secondary battery can be further enhanced.

In some embodiments of the present application, the first additive comprises at least one of the following compounds:

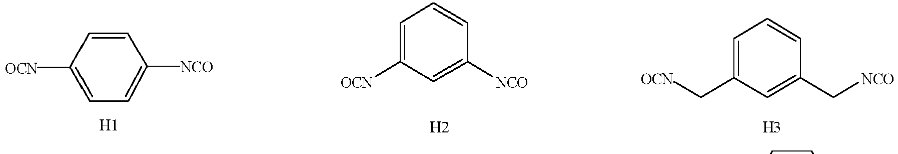

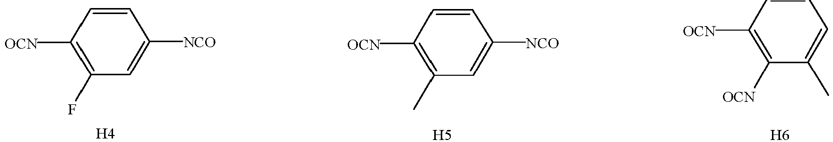

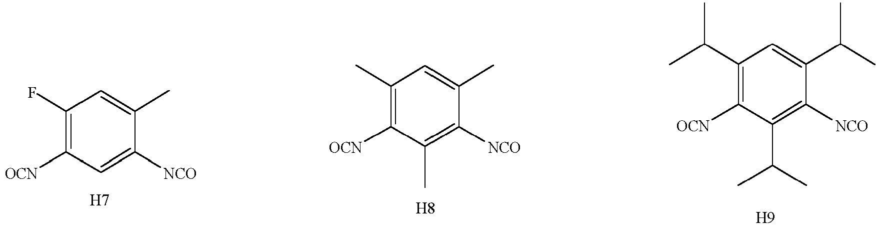

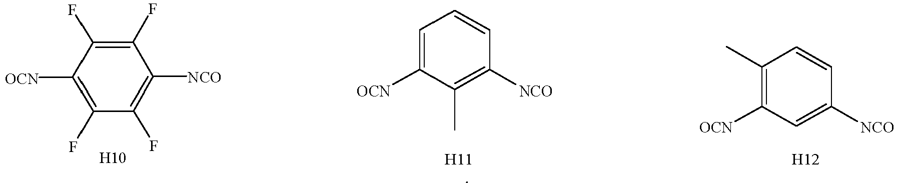

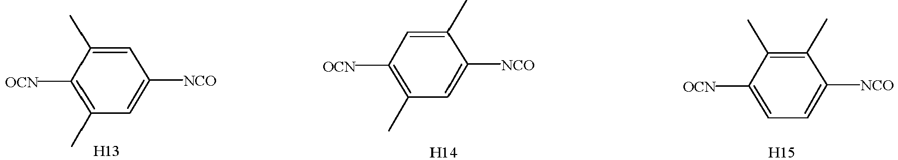

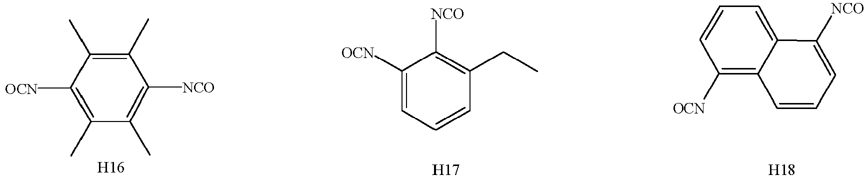

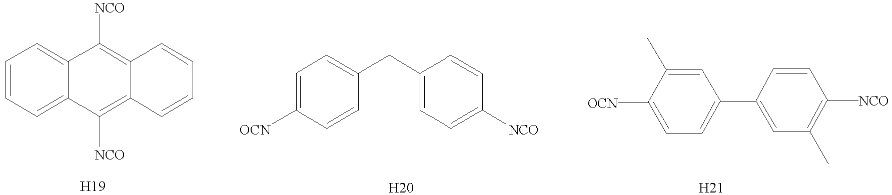

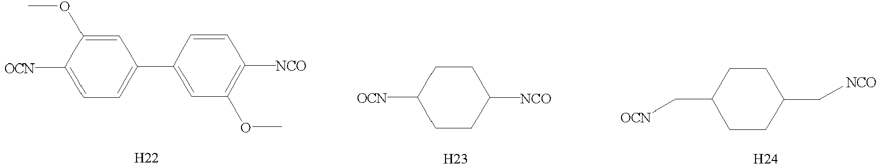

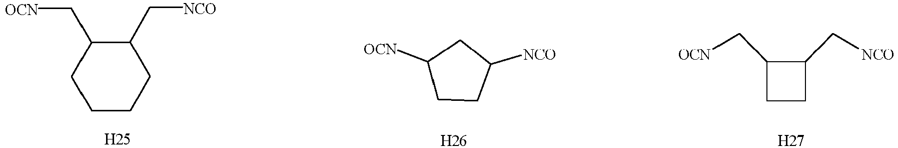

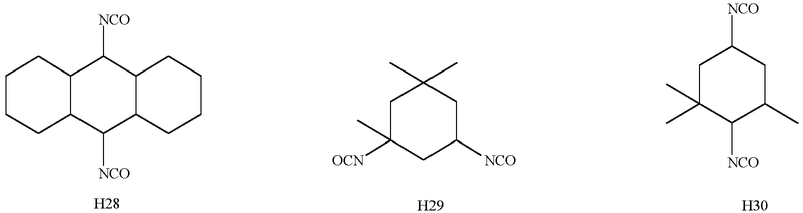

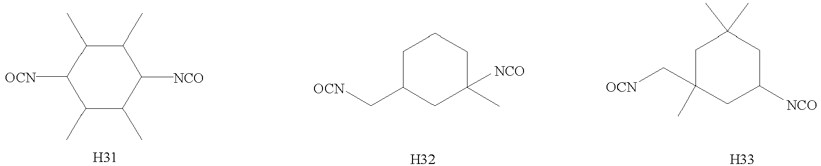

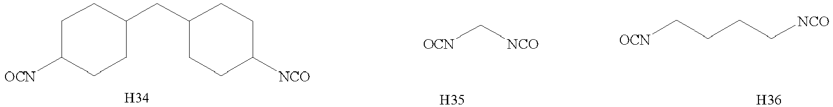

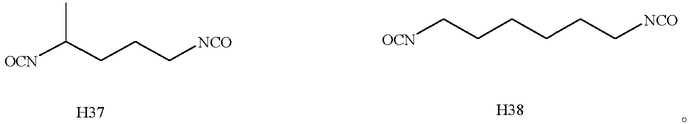

The inventors found in the course of their research that using at least one of the above compounds H1 to H38 as a first additive can further reduce the generation of HF and lower the acidity of the non-aqueous electrolytic solution, and at the same time help to generate a uniform and dense interfacial film with low impedance on the surface of the negative electrode active material, whereby the effect of improving the cycling performance and storage performance of the secondary battery can be further enhanced.

The inventor also found that when the non-aqueous electrolytic solution contains too much of the first additive, interfacial impedance on the negative electrode will increase, and capacity exertion and rate performance of the secondary battery will be affected. Therefore, the content of the first additive in the non-aqueous electrolytic solution should not be too high. In some embodiments, the content of the first additive is W1% by weight, W1 being from 0.01 to 20, optionally from 0.1 to 10, and more optionally from 0.3 to 5, based on the total weight of the non-aqueous electrolytic solution. When the first additive content is within the above range, it can reduce the generation of HF and lower the acidity of the non-aqueous electrolytic solution without deteriorating the negative electrode interfacial impedance, which in turn can significantly improve the cycling performance and the storage performance of the secondary battery without affecting the capacity exertion and the rate performance of the secondary battery.

In some embodiments, the first cladding layer is applied in an amount of C1% by weight, the second cladding layer is applied in an amount of C2% by weight, the third cladding layer is applied in an amount of C3% by weight, and the first additive is present in a content of W1% by weight, which satisfy the relationship of W1/(C1+C2+C3) of from 0.001 to 2. Optionally, W1/(C1+C2+C3) is from 0.01 to 2, from 0.01 to 1.5, from 0.01 to 1.5, from 0.05 to 1, or from 0.1 to 1. When W1/(C1+C2+C3) is within the above suitable ranges, it can significantly enhance the effect of improving the cycling performance and storage performance of the secondary battery, and at the same time improve the capacity exertion and rate performance of the secondary battery. In addition, it can effectively avoid the following situations: when W1/(C1+C2+C3) is small, there is no enough first additive to reduce the generation of HF and reduce the acidity of the non-aqueous electrolytic solution, which cannot significantly reduce the leaching out of manganese ions and the generation of gases, so that the further improvement of the cycling performance and storage performance of the secondary battery is not significant; when W1/(C1+C2+C3) is large, the negative electrode interface resistance increases, which affects the capacity performance of the secondary battery. When W1/(C1+C2+C3) is larger, the negative electrode interfacial impedance increases, affecting the capacity exertion and rate performance of the secondary battery.

In some embodiments, the non-aqueous electrolytic solution further comprises a second additive, the second additive comprising one or more of ethylene sulfate (DTD), lithium difluorophosphate (LiPO₂F₂), bisoxalatodifluorophosphate, R₂[FSO₃⁻]ₐ, and R₂[C_{b}F_{2b+1}SO₃⁻]ₐ, a being an integer from 1 to 5 and b being an integer from 1 to 6, and R₂ representing a metal cation or an organic group cation.

The second additive contributes to the formation of a low-impedance interfacial film on the surface of the negative electrode active material, thereby improving the capacity exertion and rate performance of the secondary battery. Thus, when the non-aqueous electrolytic solution contains both the first additive and the second additive, it helps to significantly improve the cycling performance and storage performance of the secondary battery, while enhancing the capacity exertion and rate performance of the secondary battery.

a represents the average valence of a metal cation or an organic group cation R₂. b represents an integer from 1 to 6, e.g., b represent 1, 2, 3, 4, 5, or 6; optionally, b represents 1, 2, or 3.

Optionally, the metal cation comprises one or more selected from Li⁺, Na⁺, K⁺, Rb⁺, Cs⁺, Mg²⁺, Ca²⁺, Ba²⁺, Al³⁺, Fe²⁺, Fe³⁺, Cu²⁺, Ni²⁺ and Ni³⁺.

Optionally, the organic group cation comprises one or more selected from NH₄⁺, N(CH₃)₄⁺, and N(CH₂CH₃)₄⁺.

Optionally, R₂[FSO₃⁻]a represents lithium fluorosulfonate LiFSO₃.

Optionally, R₂[C_{b}F_{2b+1}SO₃⁻]a represents lithium trifluoromethanesulfonate LiCF₃SO₃.

The inventors also found in the course of the research that when the non-aqueous electrolytic solution contains an excessive amount of the second additive, its effect of lowering the negative electrode interfacial impedance does not further increase, while the viscosity and conductivity of the non-aqueous electrolytic solution may be affected, and thus the capacity exertion and rate performance of the secondary battery may also be affected. Therefore, the content of the second additive in the non-aqueous electrolytic solution should not be too excessive. In some embodiments, the content of the second additive is W2% by weight, W2 being from 0.01 to 20, optionally from 0.1 to 10, more optionally from 0.3 to 5, based on the total weight of the non-aqueous electrolytic solution. When the second additive content is in a suitable range, it can effectively improve the capacity exertion and rate performance of the secondary battery.

The inventors have also found in the course of their research that the ratio of the content of the first additive (W1 wt%), to the content of the second additive (W2 wt%), also affects the electrochemical performance of the secondary battery. In some embodiments, W1/W2 is from 0.01 to 20. Optionally, W1/W2 is from 0.01 to 10, from 0.1 to 10, from 0.1 to 8, from 0.1 to 5, from 0.2 to 5, from 0.5 to 5, or from 1 to 5. When W1/W2 is in a suitable range, the synergistic effect of the two additives can be better fulfilled, whereby the effect of improving the cycling performance and storage performance of the secondary battery can be further enhanced, and at the same time enhance the capacity exertion and rate performance of the secondary battery. The following can be effectively avoided: when W1/W2 is large, the second additive cannot effectively reduce the negative electrode interfacial impedance, and the further improvement effect on the capacity and rate performance of the secondary battery may not be significant; when W1/W2 is small, the generation of HF cannot be significantly reduced and the acidity of the non-aqueous electrolytic solution cannot be reduced, and the improvement effect on the cycling performance and storage performance of the secondary battery may not be significant.

In some embodiments, the non-aqueous electrolytic solution further comprises a third additive, comprising one or more of a cyclic carbonate compound containing an unsaturated bond, a halogen-substituted cyclic carbonate compound, a sulfate compound, a sulfite compound, a sultone compound, a disulfonate compound, a nitrile compound, a phosphonitrile compound, an aromatic hydrocarbon and halogenated aromatic hydrocarbon compound, an acid anhydride compound, a phosphite compound, a phosphate compound, and a borate compound. When the non-aqueous electrolytic solution comprises both the first additive and the third additive or comprises the first additive, the second additive and the third additive at the same time, the third additive helps to form a more dense and stable interfacial film on the surface of the positive electrode and/or negative electrode active materials, so as to be able to further enhance at least one of cycling performance, storage performance, and rate performance of secondary batteries. In some embodiments, the third additive is present in a content of W3% by weight, with W3 being from 0.01 to 10, optionally from 0.1 to 10, more optionally from 0.3 to 5, based on the total weight of the non-aqueous electrolytic solution.

The present application does not specifically limit the type of the third additive as long as it does not detract from the main idea of the present application, e.g., the third additive may be selected in any ratio from the specific substances described below.

### (a) Cyclic carbonate compound containing carbon-carbon unsaturated bonds

The cyclic carbonate compound containing carbon-carbon unsaturated bonds may comprise one or more of the compounds shown in Formula 2-1. R₃ represents C1-C6 alkylene group with alkenyl or alkynyl substituents on its branched chain, or a substituted or unsubstituted C2-C6 straight-chain alkenylene group, wherein the substituent is one or more selected from a halogen atom, C1-C6 alkyl group, and a C2-C6 alkenyl group.

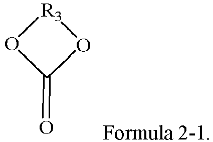

Optionally, the cyclic carbonate compound containing a carbon-carbon unsaturated bond may include, but is not limited to, one or more of the following compounds.

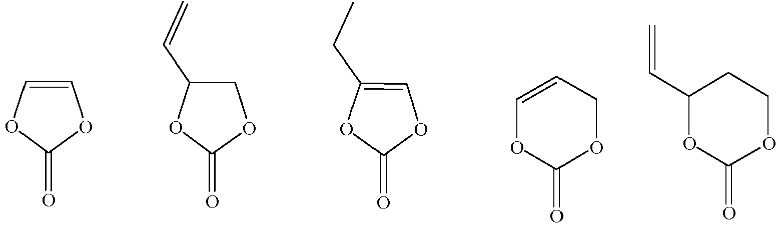

### (b) Halogen-substituted cyclic carbonate compound

The halogen-substituted cyclic carbonate compound may include one or more of the compounds shown in Formula 2-2. R₄ represents a halogen-substituted C1-C6 alkylene group, or a halogen-substituted C2-C6 alkenylene group.

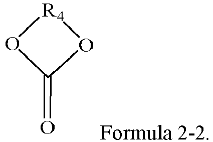

Optionally, the halogen-substituted cyclic carbonate compound may include, without being limited to, one or more of fluoro ethylene carbonate (FEC), fluoro propylene carbonate (FPC), trifluoro propylene carbonate (TFPC), and trans or cis-4,5-difluoro-1,3-dioxolan-2-one (hereinafter, both are collectively referred to as DFEC).

### (c) Sulfate compound

The sulfate compound may be a cyclic sulfate compound other than ethylene sulfate (DTD). The other cyclic sulfate compounds may include one or more of the compounds shown in Formulae 2-3. R₅ represents a substituted or unsubstituted C1~C6 alkylene, a substituted or unsubstituted C2~C6 alkenylene group, wherein the substituent group is selected from one or more of a halogen atom, a C1~C3 alkyl group, and a C2~C4 alkenyl group.

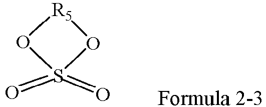

Optionally, the sulfate compound may comprise one or more of the following compounds, but not limited thereto:

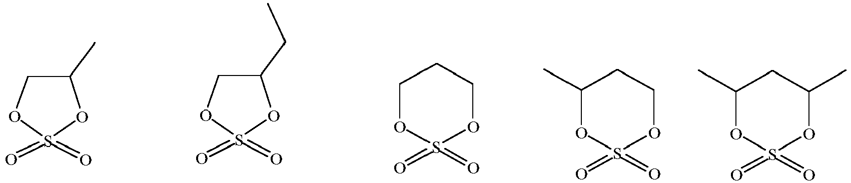

Further optionally, the sulfate compound comprises one or more of ethylene trimethylene sulfite (abbreviated as TMS), and propylene sulfate (abbreviated as PLS).

### (d) Sulfite compound

The sulfite compound may be a cyclic sulfite compound, and specifically may include one or more of the compounds shown in Formulas 2-4. R₆₉ represents substituted or unsubstituted C1-C6 alkylene, substituted or unsubstituted C2-C6 alkenylene, wherein the substituent is one or more selected from a halogen atom, C1-C3 alkylene, and C2-C4 alkenylene.

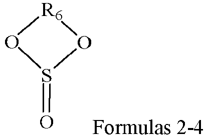

Optionally, the sulfite compound may include one or more of ethylene sulfite (ES), propylene sulfite (PS), butylene sulfite (BS).

### (e) Sultone compound

The sultone compound comprises one or more of the compounds represented by Formula 2-5, in which R₇ is selected from one or more of a substituted or unsubstituted C₁-C₆ alkylene group and a substituted or unsubstituted C₂-C₆ alkenylene group, wherein the substituent is selected from one or more of a halogen atom, a C₁-C₃ alkyl group, and a C₂-C₄ alkenyl group.

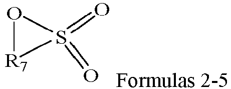

Optionally , the sultone compound may comprise one or more of the following compounds, but not limited thereto:

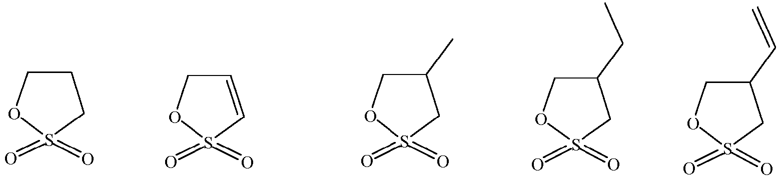

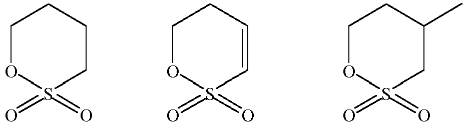

Further optionally, the sultone compound may comprise one or more of 1,3-propane sultone (abbreviated as PS) and 1,3-propene sultone (abbreviated as PES).

### (f) Disulfonate compound

The disulfonate compound is a compound containing two sulfonic acid ester groups (-S(=O)₂O-). Optionally, the disulfonate compound is a methylene disulfonate compound.

The methylene disulfonate compound may comprise one or more of the compounds represented by Formula 2-6. R₈, R₉, R₁₀ and R₁₁ are each independently selected from one or more of a hydrogen atom, a halogen atom, a substituted or unsubstituted C₁-C₁₀ alkyl group, and a substituted or unsubstituted C₂-C₁₀ alkenyl group, wherein the substituent is selected from one or more of a halogen atom, a C₁-C₃ alkyl group, and a C₂-C₄ alkenyl group.

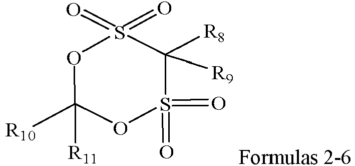

Optionally, the disulfonate compound may comprise one or more of the following compounds, but not limited thereto:

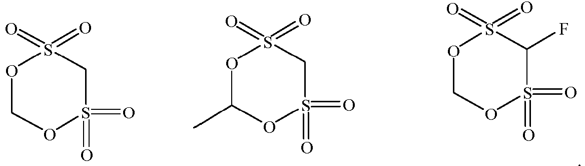

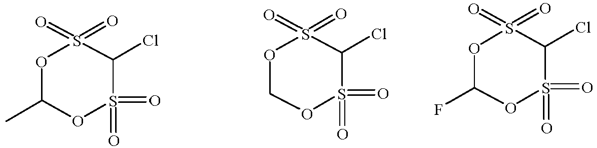

Further optionally, the disulfonate compound may be methylene methanedisulfonate.

### (g) Nitrile compound

The nitrile compound may be a dinitrile or trinitrile compound. Optionally, the nitrile compound may comprise one or more of the compounds shown in Formulae 2-7 and Formulae 2-8. R₁₂ represents substituted or unsubstituted C1-C12 alkylene, substituted or unsubstituted C1-C12 oxa-alkylene, substituted or unsubstituted C2-C12 alkenylene, or substituted or unsubstituted C2-C12 alkynylene, and R₁₃ to R₁₅ each independently represent, substituted or unsubstituted C0-C12 alkylene, substituted or unsubstituted C1-C12 oxa-alkylene, substituted or unsubstituted C2-C12 alkenylene, or substituted or unsubstituted C2-C12 alkynylene, wherein the substituent is one or more selected from a halogen atom, a nitrile group, C1-C6 alkyl, C2-C6 alkenyl, and C1-C6 alkoxy.

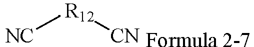

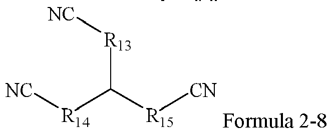

Optionally, the nitrile compound may include one or more of ethanedinitrile, propanedinitrile, butanedinitrile, pentanedinitrile, hexanedinitrile, heptanedinitrile, octanedinitrile, nonanedinitrile, decanedinitrile, undecanedinitrile, dodecanedinitrile, tetramethylsuccinonitrile, methylpentanedinitrile, butadienedinitrile, 2-pentenedinitrile, hex-2-enedinitrile, hex-3-enedinitrile, oct-4-enedinitrile, oct-4-ynedinitrile, 1,2,3-propane-tricarbonitrile, 1,3,5-pentanetricarbonitrile, and 1,3,6-hexanetrinitrile.

### (h) Phosphonitrile compound

The phosphonitrile compound may be a cyclic phosphonitrile compound. The cyclic phosphonitrile compound may include one or more of methoxy pentafluorocyclotriphosphonitrile, ethoxy pentafluorocyclotriphosphonitrile, phenoxy pentafluorocyclotriphosphonitrile, and ethoxy heptafluorocyclotetraphosphonitrile. Optionally, the cyclic phosphonitrile compound may include one or more of methoxy pentafluorocyclotriphosphonitrile, ethoxy pentafluorocyclotriphosphonitrile, phenoxy pentafluorocyclotriphosphonitrile. Further optionally, the cyclic phosphonitrile compound may include methoxy pentafluorocyclotriphosphonitrile, ethoxy pentafluorocyclotriphosphonitrile, or a combination thereof.

### (i) Aromatic hydrocarbon and halogenated aromatic hydrocarbon compound

The aromatic hydrocarbon and halogenated aromatic hydrocarbon compound may include one or more of cyclohexylbenzene, fluorinated cyclohexylbenzene compounds (e.g., 1-fluoro-2-cyclohexylbenzene, 1-fluoro-3-cyclohexylbenzene, 1-fluoro-4-cyclohexylbenzene), t-butylbenzene, t-amylbenzene, 1-fluoro-4-t-butylbenzene, biphenyl, terphenyl (ortho-, meta-, para-), diphenyl ether, fluoro-benzene, difluorobenzene (ortho-, meta-, para-), anisole, 2,4-difluoroanisole, partial hydrides of terphenyl (e.g., 1,2-dicyclohexylbenzene, 2-phenylbicyclohexyl, 1,2-diphenylcyclohexane, o-cyclohexylbiphenyl). Optionally, the aromatic hydrocarbon and halogenated aromatic hydrocarbon compound may include one or more of biphenyl, terphenyl (ortho-, meta-, para-), fluorobenzene, cyclohexylbenzene, t-butylbenzene, t-amylbenzene. Further optionally, the aromatic hydrocarbon and halogenated aromatic hydrocarbon compound may include one or more of biphenyl, o-terphenyl, fluorobenzene, cyclohexylbenzene, and tert-pentylbenzene.

### (j) Acid anhydride compound

The acid anhydride compound may be a chain acid anhydride or a cyclic acid anhydride. Specifically, the acid anhydride compound may include one or more of acetic anhydride, propionic anhydride, succinic anhydride, maleic anhydride, 2-allyl succinic anhydride, glutaric anhydride, itaconic anhydride, and 3-sulfo-propionic anhydride. Optionally, the acid anhydride compound may include one or more of succinic anhydride, maleic anhydride, and 2-allyl succinic anhydride. Further optionally, the acid anhydride compound may include succinic anhydride, 2-allyl succinic anhydride, or a combination thereof.

### (k) Phosphite compound

The phosphite compound may be a silane phosphite compound, and specifically may include one or more of the compounds shown in Formulae 2-9, with R₁₆ to R₂₄ each independently representing halogen-substituted or unsubstituted C1-C6 alkyl.

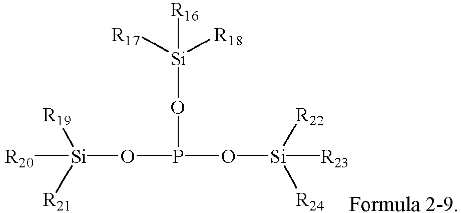

Optionally, the silane phosphite compound may include, but is not limited to, one or more of the following compounds.

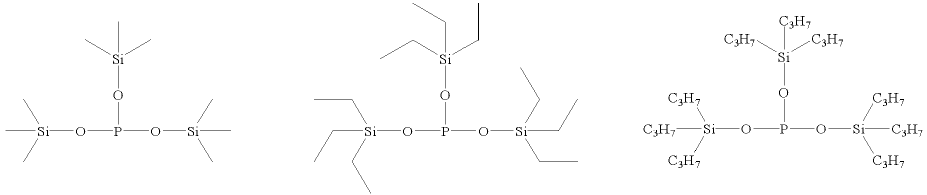

### (1) Phosphate compound

The phosphate compound may be a silane phosphate compound, and specifically may include one or more of the compounds shown in Formula 2-10, with R₂₅ to R₃₃ each independently representing halogen-substituted or unsubstituted C1-C6 alkyl.

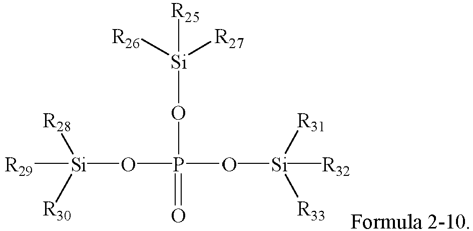

Optionally, the silane phosphate compound may include, but is not limited to, one or more of the following compounds.

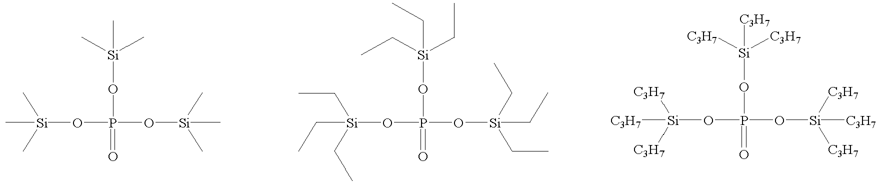

### (m) Borate compound

The borate compound may be a silane borate compound, and specifically may include one or more of the compounds shown in Formula 2-11, with R₃₄ to R₆₈ each independently denoting halogen-substituted or unsubstituted C1-C6 alkyl.

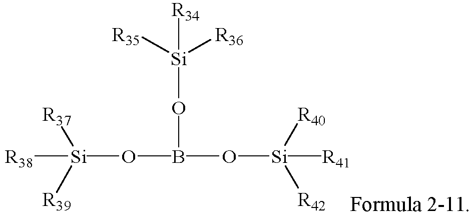

Optionally, the silane borate compound may include, but is not limited to, one or more of the following compounds:

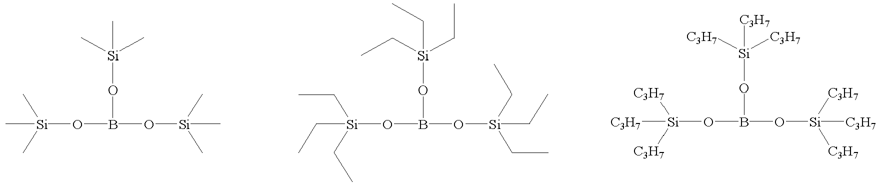

Optionally, the third additive may comprise one or more of vinylidene carbonate (VC), vinyl ethylene carbonate (VEC), and fluoroethylene carbonate (FEC). These third additives are electrochemical reduction additives, and their reduction potential is higher than that of an organic solvent, so that electrochemical reduction can preferentially occur on the surface of the negative electrode active materials to form an interfacial membrane with excellent performances, thereby reducing destruction of the interfacial membrane by the organic solvent, and thus the secondary battery adopting the same can have better electrochemical performance and safety performance.

The non-aqueous electrolytic solution further comprises a lithium salt and an organic solvent. The present application has no particular limitation on the types of the lithium salt and the organic solvent, which may be selected according to actual needs.

As an example, the organic solvent may include one or more of chain carbonate, cyclic carbonate, carboxylic acid ester. Among them, the present application has no specific limitation on the types of said chain carbonate, said cyclic carbonate, and said carboxylic acid ester, which can be selected according to actual needs. Optionally, said organic solvent includes one or more of dimethyl carbonate (DMC), diethyl carbonate (DEC), dipropyl carbonate (DPC), methyl ethyl carbonate (EMC), methyl propyl carbonate (MPC), ethyl propyl carbonate (EPC), ethylene carbonate (EC), propylene carbonate (PC), butylene carbonate (BC), gamma-butyrolactone (GBL), methyl formate (MF), ethyl formate (EF), methyl acetate (MA), ethyl acetate (EA), propyl acetate (PA), methyl propionate (MP), ethyl propionate (EP), propyl propionate (PP), and tetrahydrofuran (THF).

As an example, said lithium salt may include one or more of LiN(CₘF₂ₘ₊₁SO₂)(CₙF₂ₙ₊₁SO₂), LiPF₆, LiBF₄, LiBOB, LiAsF₆, Li(FSO₂)₂N, LiCF₃SO₃, and LiClO₄, with m and n being natural numbers. When the non-aqueous electrolytic solution includes the lithium salt described above, this helps to form a dense, stable and low-impedance interfacial film on the surface of the positive electrode and/or negative electrode active materials, and effectively improves at least one of cycle performance, storage performance and rate performance of the secondary battery.

The cyclic carbonate has a higher dielectric constant, which facilitates dissociation of lithium salts. In some embodiments, said cyclic carbonate may be present in a content of 20 wt% or more, optionally from 20 wt% to 80 wt%, more optionally from 20 wt% to 50 wt%, based on the total weight of said organic solvent. Optionally, the cyclic carbonate includes one or more of ethylene carbonate (EC), propylene carbonate (PC), and butylene carbonate (BC).

The chain carbonate has a smaller dielectric constant and a weaker ability to dissociate lithium salts, but has a low viscosity and good fluidity and thus it can increase migration rate of lithium ions. In some embodiments, the chain carbonate may be present in a content of 10 wt% or more, optionally from 10 wt% to 80 wt%, based on the total weight of the organic solvent. Optionally, the chain carbonate comprises one or more of dimethyl carbonate (DMC), diethyl carbonate (DEC), dipropyl carbonate (DPC), methyl ethyl carbonate (EMC), methyl propyl carbonate (MPC), and ethyl propyl carbonate (EPC).

Carboxylic acid esters have advantages of low viscosity and high dielectric constant and thus it may enhance conductivity of a non-aqueous electrolytic solution. In some embodiments, said carboxylic acid ester may be present in a content of from 0 wt% to 70 wt%, optionally from 0 wt% to 60 wt%, based on the total weight of said organic solvent. Optionally, the carboxylic acid ester comprises one or more of methyl formate (MF), ethyl formate (EF), methyl acetate (MA), ethyl acetate (EA), propyl acetate (PA), methyl propionate (MP), ethyl propionate (EP), and propyl propionate (PP).

With increasing the content of lithium salts, the total number of migratable lithium ions increases, but at the same time, viscosity of the non-aqueous electrolytic solution will also increase, and migration rate of lithium ions slows down instead. Thus, an optimal value for the content of lithium salts occurs. In some embodiments, said lithium salt may be present in a content of from 6 wt% to 39 wt%, optionally from 10 wt% to 31 wt%, more optionally from 11 wt% to 24 wt%, still more optionally from 12 wt% to 20 wt%, based on the total weight of the non-aqueous electrolytic solution.

The non-aqueous electrolytic solution of the present application can be prepared in accordance with conventional methods in the field. For example, the additives, the organic solvent, the lithium salt and the like can be mixed well to obtain a non-aqueous electrolytic solution. There is no particular limitation on the order of addition of each material. For example, the additives, the lithium salt and the like can be added to the organic solvent and mixed homogeneously to obtain a non-aqueous electrolytic solution.

In the present application, components and their contents in the non-aqueous electrolytic solution can be determined according to methods conventional in the art. For example, they can be determined by gas chromatography-mass spectrometry (GC-MS), ion chromatography (IC), liquid chromatography (LC), nuclear magnetic resonance spectrometry (NMR) and the like.

It should be noted that the non-aqueous electrolytic solution of the present application can also be obtained from a secondary battery. An exemplary method of obtaining a non-aqueous electrolytic solution from a secondary battery comprises the step of discharging the secondary battery to a discharge cut-off voltage and then centrifuging it, after which an appropriate amount of liquid obtained from centrifugation is taken for testing.

### [Outer package]

In some embodiments, the secondary battery may include an outer package. The outer package may be used to encapsulate the electrode assembly and the non-aqueous electrolytic solution.

In some embodiments, the outer package of said secondary battery may be a hard case, such as a hard plastic case, an aluminum case, a steel case, and the like. The outer package of the secondary battery may also be a soft package, such as a pouch-type soft package. Material of the soft bag can be plastic, such as at least one of polypropylene (PP), polybutylene terephthalate (PBT), and polybutylene succinate (PBS).

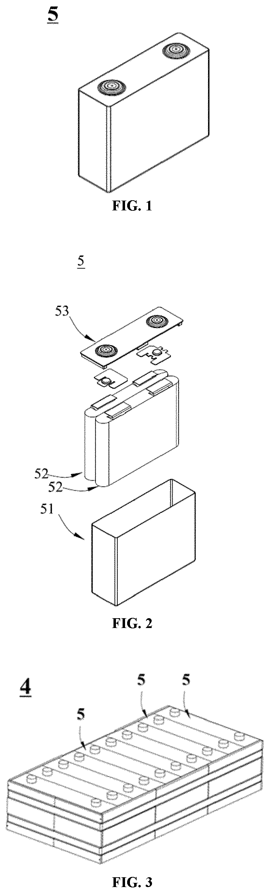

The shape of the secondary battery is not particularly limited in the present application, and it may be cylindrical, square, rectangular or any other shape. FIG. 1 is a schematic diagram of a secondary battery 5 of a rectangular structure as an example.

In some embodiments, as shown in FIG. 2, the outer package may include a casing 51 and a cover plate 53, wherein the casing 51 may include a bottom plate and side plates connected to the bottom plate, and the bottom plate and the side plates enclose and form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or more, and may be adjusted according to requirements.

A process for preparing the secondary battery of the present application is well known in the art. In some embodiments, a positive electrode plate, a separator, a negative electrode plate and a non-aqueous electrolytic solution may be assembled into a secondary battery. As an example, a positive electrode plate, a separator, and a negative electrode plate can be made into an electrode assembly by a winding process or a stacking process, and the electrode assembly can be placed in an outer package and is subjected to drying, to which a non-aqueous electrolytic solution is injected. After vacuum encapsulation, resting, chemical formation, and shaping process, a secondary battery can be obtained.

### Battery Module

In some embodiments, the secondary batteries according to the present application can be assembled into a battery module, and the number of secondary batteries contained in the battery module can be more than one, and the specific number can be adjusted according to application and capacity of the battery module.

FIG. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

### Battery pack

In some embodiments, the above-mentioned battery modules can also be assembled into a battery pack, and the number of battery modules included in the battery pack can be adjusted according to the application and capacity of the battery pack.

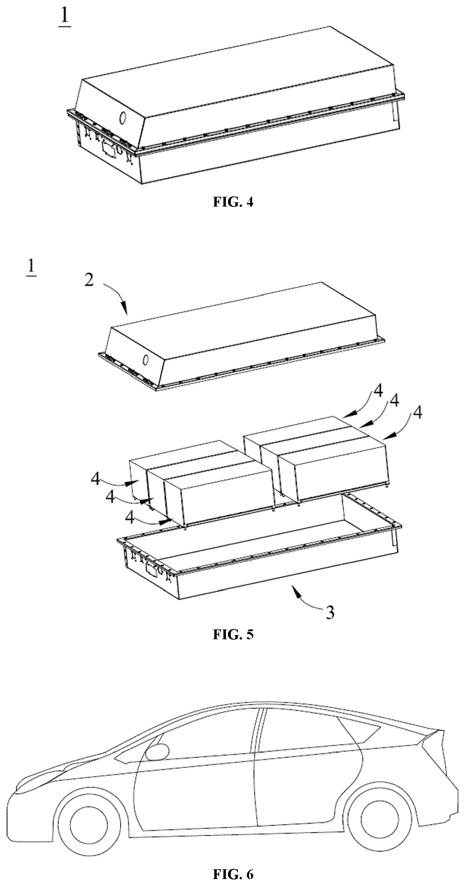

FIGS. 4 and 5 are schematic diagrams of the battery pack 1 as an example. As shown in FIGS. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

The present application further provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

The sources of raw materials involved in examples of the present application are as follows:

| Name | Chemical Formula | Supplier | Specification |
|---|---|---|---|
| Manganese Carbonate | MnCO₃ | Shandong West Asia Chemical Industry Co. | 1Kg |
| Lithium Carbonate | Li₂CO₃ | Shandong West Asia Chemical Industry Co. | 1Kg |
| Magnesium carbonate | MgCO₃ | Shandong West Asia Chemical Industry Co. | 1Kg |
| Zinc Carbonate | ZnCO₃ | Wuhan Xinru Chemical Co. | 25Kg |
| Ferrous Carbonate | FeCO₃ | Xi'an Lanzhiguang Fine Material Co. | 1Kg |
| Nickel Carbonate | NiCO₃ | Shandong West Asia Chemical Industry Co. | 1Kg |
| Titanium Sulfate | Ti(SO₄)₂ | Shandong West Asia Chemical Industry Co. | 1Kg |
| Cobalt Sulfate | CoSO₄ | Xiamen Zhixin Chemical Co. | 500g |
| Vanadium Dichloride | VCl₂ | Shanghai Jin Jin Le Industry Co. | 1Kg |
| Oxalic acid dihydrate | C₂H_{2O4}•2H₂O | Shanghai Jin Jin Le Industry Co. | 1Kg |
| Ammonium dihydrogen phosphate | NH₄H₂PO₄ | Shanghai Chengshao Biotechnology Co. | 500g |
| Sucrose | C₁₂H₂₂O₁₁ | Shanghai Yuanye Biotechnology Co. | 100g |
| Dilute sulfuric acid | H₂SO₄ | Shenzhen Haisian Biotechnology Co. | In a mass percentage of 60% |
| Dilute nitric acid | HNO₃ | Anhui Lingtian Fine Chemical Co. | In a mass percentage of 60% |
| Metasilicic acid | H₂SiO₃ | Shanghai Yuanye Biotechnology Co. | 100g, in a mass percentage of 99.8% |

### I. Preparation of battery

### Example 1

### Step 1: Preparation of positive electrode active materials

### Step S1: Preparation of Fe, Co and V co-doped manganese oxalate

689.6 g of manganese carbonate, 455.27 g of ferrous carbonate, 4.65 g of cobalt sulphate, and 4.87 g of vanadium dichloride were thoroughly mixed for 6 hours in a mixer. The mixture was transferred to a reactor to which 5 liters of deionized water and 1260.6 g of oxalic acid dihydrate were added. The reaction kettle was heated to 80°C and the content was stirred at 500 rpm for 6 hours until the reaction ended (no bubbles were generated) to obtain a Fe, Co, V and S co-doped manganese oxalate suspension. The suspension was then filtered and the filter cake was dried at 120°C, after which it was milled to obtain manganese oxalate particles with a median particle size Dv50 of 100 nm.

### Step S2: Preparation of Li_{0.997}Mn_{0.60}Fe_{0.393}V_{0.004}Co_{0.003}P_{0.997}S_{0.003}O₄:

1793.1 g of manganese oxalate prepared in step S1 as well as 368.3 g of lithium carbonate, 1146.6 g of ammonium dihydrogen phosphate, and 4.9 g of dilute sulfuric acid were added into 20 L of deionized water, stirred thoroughly, and allowed to react under homogeneous mixing for 10 hours at 80°C to obtain a slurry. The slurry was transferred to a spray drying equipment for spray drying and granulation, and dried at a temperature of 250°C to obtain powder. The powder was sintered in a roller kiln at 700°C for 4 hours in a protective atmosphere (90% nitrogen and 10% hydrogen) to obtain the core material.

### Step S3: Preparation of a suspension for a first cladding layer

Li₂FeP₂O₇ solution was prepared by dissolving 7.4 g of lithium carbonate, 11.6 g of ferrous carbonate, 23.0 g of ammonium dihydrogen phosphate, and 12.6 g of oxalic acid dihydrate in 500 mL of deionized water, controlling pH to be 5, followed by stirring and reacting for 2 hours at room temperature to obtain the solution, after which the solution was warmed up to 80°C and kept at this temperature for 4 hours to obtain the first cladding layer suspension.

### Step S4: Cladding of the first cladding layer

1571.9 g of the doped lithium manganese phosphate core material obtained in step S2 is added to the suspension for a first cladding layer with a cladding material content of 15.7 g obtained in step S3, and mixed with sufficient stirring for 6 hours, and after mixing well, transferred to an oven at 120°C for drying for 6 hours, and then sintered at 650°C for 6 hours to obtain a material clad with pyrophosphate.

### Step S5: Preparation of a suspension for a second cladding layer

3.7 g of lithium carbonate, 11.6 g of ferrous carbonate, 11.5 g of ammonium dihydrogen phosphate, and 12.6 g of oxalic acid dihydrate were dissolved in 1500 mL of deionized water, and then stirred and reacted for 6 hours to obtain a solution, and then the solution was warmed up to 120°C and kept at this temperature for 6 hours to obtain a suspension for a second cladding layer.

### Step S6: Cladding of the second cladding layer

1586.8 g of the material clad with pyrophosphate obtained in Step S4 was added to the suspension for a second cladding layer with a cladding material content of 47.1 g obtained in Step S5, and mixed with thorough stirring for 6 hours, and after the mixture was homogeneous, it was transferred to an oven at 120°C for drying for 6 hours, and then sintered at 700°C for 8 hours to obtain a material clad with two layers.

### Step S7: Preparation of an aqueous solution for a third cladding layer

37.3 g of sucrose was dissolved in 500 g of deionized water, then stirred and fully dissolved to obtain an aqueous solution of sucrose.

### Step S8: Cladding of the third cladding layer

1633.9 g of the material clad with two layers obtained in Step S6 was added to the sucrose solution obtained in Step S7, stirred and mixed together for 6 hours, and after mixing uniformly, transferred to an oven at 150°C to dry for 6 hours, and then sintered at 700°C for 10 hours to obtain a material clad with three layers, i.e., the positive electrode active material.

### Step 2: Preparation of positive electrode plate

The positive electrode active material with a three-cladding layer structure prepared above, acetylene black as a conductive agent, and polyvinylidene fluoride (PVDF) as a binder were added to N-methylpyrrolidone (NMP) at a weight ratio of 97.0:1.2:1.8 with stirring until these materials were mixed homogeneously to obtain a positive electrode slurry. The positive electrode slurry was then uniformly applied to an aluminum foil at 0.280 g/1540.25 mm², and then dried, cold pressed, and slit to obtain a positive electrode plate.

### Step 3: Preparation of negative electrode plate

Artificial graphite as a negative electrode active material, hard carbon, acetylene black as a conductive agent, styrene butadiene rubber (SBR) as a binder, sodium carboxymethyl cellulose (CMC) as a thickener at a weight ratio of 90:5:2:2:1 were dissolved in a solvent deionized water, which was stirred and mixed well to prepare a negative electrode slurry. The negative electrode slurry was uniformly applied to a copper foil as a current collector at 0.117 g/1540.25 mm², and then dried, cold pressed, and slit to obtain a negative electrode plate.

### Step 4: Preparation of non-aqueous electrolytic solution

In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H38 were dissolved, and the resulting mixture was stirred homogeneously, to obtain a non-aqueous electrolytic solution.

### Step 5: Preparation of separator

A commercially available PP-PE copolymer microporous film with a thickness of 20 µm and an average pore size of 80 nm was used (from Trico Electronic Technology, model 20).

### Step 6: Preparation of full battery

The positive electrode plate, separator and negative electrode plate were stacked in order, so that the separator was sandwiched between the positive and negative electrodes for isolation, and then they were wound to form an electrode assembly. The electrode assembly was placed in an outer package, filled with the above electrolytic solution, and encapsulated to obtain a full battery (hereinafter also referred to as "full battery").

### [Preparation of button battery]

The positive electrode active material prepared above, polyvinylidene fluoride (PVDF), and acetylene black were added to N-methyl pyrrolidone (NMP) at a weight ratio of 90: 5: 5 and stirred in a drying room to make a slurry. The above slurry was applied to an aluminum foil, dried and cold pressed to form a positive electrode plate. The applied amount was 0.2g/cm² and the compaction density was 2.0g/cm³.

Lithium plate was used as a negative electrode, it was assembled together with the above prepared positive electrode plate and the non-aqueous electrolytic solution in a button battery box to form a button battery (hereinafter also referred to as "button").

### Examples 2-67 to Comparative Examples 1-18

Examples 2-67 and Comparative Examples 1-18 were the same as Example 1 in terms of the preparation of positive electrode active material, preparation of non-aqueous electrolytic solution and preparation of battery. Examples 30-42 were the same as Example 1 with the exception for the material for a first cladding layer and the material for a second cladding layer. Examples 43-67 were the same as Example 1 with the exception for the preparation of non-aqueous electrolytic solution. The differences in the preparation of positive electrode active material were listed in tables 1 to 8 wherein Comparative Examples 1-2, 4-10 and 12 did not comprise a first cladding layer and thus none of steps S3 and S4 was involved; and Comparative Examples 1-11 did not comprise a second cladding layer and thus none of steps S5 and S6 was involved. The differences in the preparation of non-aqueous electrolytic solution were listed in table 9.

In addition, in all Examples and Comparative Examples of the present application, the materials for a first cladding layer and for a second cladding layer were by default crystalline if not indicated.

**Table 1: Materials for the core**

| No. | Core | Materials used in step S1 | Materials used in step S2 |
|---|---|---|---|
| Comparative Examples 1 and 13 | LiMnPO₄ | manganese carbonate, 1149.3g; water, 5L; oxalic acid dihydrate, 1260.6g | manganese oxalate dihydrate obtained in step S1 (counted as C₂O₄Mn•2H₂O), 1789.6g; lithium carbonate, 369.4g; ammonium dihydrogen phosphate, 1150.1g; water, 20L |
| Comparative Example 2 | LiMn_{0.60}Fe_{0.40}PO₄ | manganese carbonate, 689.6g; ferrous carbonate, 463.4g; water, 5L; oxalic acid dihydrate, 1260.6g | ferromanganese oxalate dihydrate obtained in step S1(counted as C₂O₄Mn_{0.60}Fe_{0.40}•2H₂O), 1793.2g; lithium carbonate, 369.4g; ammonium dihydrogen phosphate, 1150.1g; water, 20L |
| Comparative Example 3 | LiMn_{0.80}Fe_{0.20}PO₄ | manganese carbonate, 919.4g; ferrous carbonate, 231.7g; water, 5L; oxalic acid dihydrate, 1260.6g | ferromanganese oxalate dihydrate obtained in step S1(counted as C₂O₄Mn_{0.80}Fe_{0.20}•2H₂O), 1791.4g; lithium carbonate, 369.4g; ammonium dihydrogen phosphate, 1150.1g; water, 20L |
| Comparative Example 4 | LiMn_{0.70}Fe_{0.295}V_{0.005}PO₄ | manganese carbonate, 804.5g; ferrous carbonate, 341.8g; vanadium dichloride, 6.1g; water, 5L; oxalic acid dihydrate, 1260.6g | ferrovanadium manganese oxalate dihydrate obtained in step S1(counted as C₂O₄Mn_{0.70}Fe_{0.295}V_{0.005}•2H₂O), 1792.0g;lithium carbonate, 369.4g; ammonium dihydrogen phosphate, 1150.1g; water, 20L |
| Comparative Examples 5 and 15 | LiMn_{0.60}Fe_{0.395}Mg_{0.005}PO₄ | manganese carbonate, 689.6g; ferrous carbonate, 457.6g; magnesium carbonate, 4.2g; water, 5L; oxalic acid dihydrate, 1260.6g | ferromanganese magnesium oxalate dihydrate obtained in step S1(counted as C₂O₄Mn_{0.60}Fe_{0.395}Mg_{0.005}•2H₂O), 1791.6g;lithium carbonate, 369.4g; ammonium dihydrogen phosphate, 1150.1g; water, 20L |
| Comparative Example 6 | LiMn_{0.60}Fe_{0.35}Ni_{0.05}PO₄ | manganese carbonate, 689.6g; ferrous carbonate, 405.4g; nickel carbonate, 59.3g; water, 5L; oxalic acid dihydrate, 1260.6g | nickel ferromanganese oxalate dihydrate obtained in step S1(counted as C₂O₄Mn_{0.60}Fe_{0.35}Ni_{0.05}•2H₂O), 1794.6g; lithium carbonate, 369.4g; ammonium dihydrogen phosphate, 1150.1g; water, 20L |
| Comparative Example 7 and 9 | LiMn_{0.60}Fe_{0.395}V_{0.002}Ni_{0.003}PO₄ | manganese carbonate, 689.6g; ferrous carbonate, 457.6g; vanadium dichloride, 2.4g; nickel carbonate, 3.6g; water, 5L; oxalic acid dihydrate, 1260.6g | nickel manganese iron vanadium oxalate dihydrate obtained in step S1(counted as C₂O₄Mn_{0.60}Fe_{0.395}V_{0.002}Ni_{0.003}•2H₂O), 1793.2g; lithium carbonate, 369.4g; ammonium dihydrogen phosphate, 1150.1g; water, 20L |
| Comparative Example 8 | LiMn_{0.60}Fe_{0.395}V_{0.002}Mg_{0.003}PO₄ | manganese carbonate, 689.6g; ferrous carbonate, 457.6g; vanadium dichloride, 2.4g; magnesium carbonate, 2.53g; water, 5L; oxalic acid dihydrate, 1260.6g | magnesium manganese iron vanadium oxalate dihydrate obtained in step S1(counted as C₂O₄Mn_{0.60}Fe_{0.395}V_{0.002}Mg_{0.003}•2H₂O), 1792.1g; lithium carbonate, 369.4g; ammonium dihydrogen phosphate, 1150.1g; water, 20L |
| Comparative Examples 10-12, | Li_{0.997}Mn_{0.60}Fe_{0.393}V_{0.004}Co_{0.003}P_{0.997}S_{0.003}O₄ | manganese carbonate, 689.6g; ferrous carbonate, 455.3g; cobalt sulfate, 4.7g; vanadium dichloride, | manganese iron vanadium cobalt oxalate dihydrate obtained in step S1(counted as C₂O₄Mn_{0.60}Fe_{0.393}V_{0.004}Co_{0.003}•2H₂O), 1793.1g; lithium carbonate, 368.3g; ammonium dihydrogen |
| Comparative Example 16-18 and Example 1-10 | | 4.9g; water, 5L; oxalic acid dihydrate, 1260.6g | phosphate, 1146.6g; dilute sulfuric acid, 4.9g; water, 20L |
| Comparative Example 14 | Li_{1.2}MnP_{0.8}Si_{0.2}O₄ | manganese carbonate, 1149.3g; water, 5L; oxalic acid dihydrate, 1260.6g | manganese oxalate dihydrate obtained in step S1(counted as C₂O₄Mn•2H₂O), 1789.6g; lithium carbonate, 443.3g; ammonium dihydrogen phosphate, 920.1g; metasilicic acid, 156.2g; water, 20L |
| Example 11 | Li_{1.001}Mn_{0.60}Fe_{0.393}V_{0.004}Co_{0.003}P_{0.999}Si_{0.001}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O), 1793.1g; lithium carbonate, 369.8g; ammonium dihydrogen phosphate, 1148.9g; metasilicic acid, 0.8g; water, 20L |
| Example 12 | LiMn_{0.60}Fe_{0.393}V_{0.004}Co_{0.003}P_{0.998}N_{0.002}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O), 1793.1g; lithium carbonate, 369.4g; ammonium dihydrogen phosphate, 1147.8g; dilute nitric acid, 2.7g; water, 20L |
| Example 13 | Li_{0.995}Mn_{0.65}Fe_{0.341}V_{0.004}Co_{0.005}P_{0.995}S_{0.005}O₄ | manganese carbonate, 747.1g; ferrous carbonate, 395.1g; cobalt sulfate, 7.8g; vanadium dichloride, 4.9g; water, 5L; oxalic acid dihydrate, 1260.6g | manganese iron vanadium cobalt oxalate dihydrate obtained in step S1 (counted as C₂O₄Mn_{0.65}Fe_{0.341}V_{0.004}Co_{0.005}•2H₂O), 1792.7g; lithium carbonate, 367.6g; ammonium dihydrogen phosphate, 1144.3g; dilute sulfuric acid, 8.2g; water, 20L |
| Example 14 | Li_{1.002}Mn_{0.70}Fe_{0.293}V_{0.004}Co_{0.003}P_{0.998}Si_{0.002}O₄ | manganese carbonate, 804.6g; ferrous carbonate, 339.5g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.70}Fe_{0.203}V_{0.004}Co_{0.003}•2H₂O), 1792.2g; lithium carbonate, 370.2g; 1147.8; metasilicic acid, 1.6g; water, 20L |
| Examples 15 and 17 | LiMn_{0.60}Fe_{0.393}V_{0.004}Co_{0.003}P_{0.999}N_{0.001}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O), 1793.1g; lithium carbonate, 369.4g; ammonium dihydrogen phosphate, 1148.9g; dilute nitric acid, 1.4g; water, 20L |
| Example 16 | Li_{0.997}Mn_{0.60}Fe_{0.393}V_{0.004}Co_{0.003}P_{0.997}S_{0.003}O₄ | manganese carbonate, 689.6g; ferrous carbonate, 455.3g; cobalt sulfate, 4.7g; vanadium dichloride, 4.9g; water, 5L; oxalic acid dihydrate, 1260.6g | manganese iron vanadium cobalt oxalate dihydrate obtained in step S1 (counted as C₂O₄Mn_{0.60}Fe_{0.393}V_{0.004}Co_{0.003}•2H₂O), 1793.1g; lithium carbonate, 368.7g; ammonium dihydrogen phosphate, 1146.6g; dilute sulfuric acid, 4.9g; water, 20L |
| Example 18 | LiMn_{0.60}Fe_{0.393}V_{0.004}Mg_{0.003}P_{0.995}N_{0.005}O₄ | manganese carbonate, 689.6g; ferrous carbonate, 455.3g; magnesium carbonate, 2.5g; vanadium dichloride, 4.9g; water, 5L; oxalic acid dihydrate, 1260.6g | magnesium manganese iron vanadium oxalate dihydrate obtained in step S1 (counted as C₂O₄Mn_{0.60}Fe_{0.393}V_{0.004}Mg_{0.003}•2H₂O), 1791.1g; lithium carbonate, 369.4g; ammonium dihydrogen phosphate, 1144.3g; dilute nitric acid, 7.0g; water, 20L |
| Example 19 | Li_{0.999}Mn_{0.60}Fe_{0.393}V_{0.004}Mg_{0.003}P_{0.999}S_{0.001}O₄ | manganese carbonate, 689.6g; ferrous carbonate, 455.3g; magnesium carbonate, 2.5g; vanadium dichloride, 4.9g; water, 5L; oxalic acid dihydrate, 1260.6g | magnesium manganese iron vanadium oxalate dihydrate obtained in step S1 (counted as C₂O₄Mn_{0.60}Fe_{0.393}V_{0.004}Mg_{0.003}•2H₂O), 1791.1g; lithium carbonate, 369.0g; ammonium dihydrogen phosphate, 1148.9g; dilute sulfuric acid, 1.6g; water, 20L |
| Example 20 | Li_{0.998}Mn_{0.60}Fe_{0.393}V_{0.004}Ni_{0.003}P_{0.998}S_{0.002}O₄ | manganese carbonate, 689.6g; ferrous carbonate, 455.3g; nickel carbonate, 3.6g; vanadium dichloride, 4.9g; water, 5L; oxalic acid dihydrate, 1260.6g | nickel manganese iron vanadium oxalate dihydrate obtained in step S1(counted as C₂O₄Mn_{0.60}Fe_{0.393}V_{0.004}Ni_{0.003}•2H₂O), 1792.2g; lithium carbonate, 368.7g; ammonium dihydrogen phosphate, 1147.8g; dilute sulfuric acid, 3.2g; water, 20L |
| Example 21-24 | Li_{1.001}Mn_{0.60}Fe_{0.393}V_{0.004}Ni_{0.003}P_{0.999}Si_{0.001}O₄ | manganese carbonate, 689.6g; ferrous carbonate, 455.3g; nickel carbonate, 3.6g; vanadium dichloride, 4.9g; water, 5L; oxalic acid dihydrate, 1260.6g | nickel manganese iron vanadium oxalate dihydrate obtained in step S1(counted as C₂O₄Mn_{0.60}Fe_{0.393}V_{0.004}Ni_{0.003}•2H₂O), 1793.1g; lithium carbonate, 369.8g; ammonium dihydrogen phosphate, 1148.9g; metasilicic acid, 0.8g; water, 20L |
| Example 25 | Li_{1.001}Mn_{0.50}Fe_{0.493}V_{0.004}Ni_{0.003}P_{0.999}Si_{0.001}O₄ | manganese carbonate, 574.7g; ferrous carbonate, 571.2g; nickel carbonate, 3.6g; vanadium dichloride, 4.9g; water, 5L; oxalic acid dihydrate, 1260.6g | nickel manganese iron vanadium oxalate dihydrate obtained in step S1(counted as C₂O₄Mn_{0.50}Fe_{0.493}V_{0.004}Ni_{0.003}•2H₂O), 1794.0g; lithium carbonate, 369.8g; ammonium dihydrogen phosphate, 1148.9g; metasilicic acid, 0.8g; water, 20L |
| Example 26 | Li_{1.001}Mn_{0.999}Fe_{0.001}P_{0.999}Si_{0.001}O₄ | manganese carbonate, 1148.2g; ferrous carbonate, 1.2g; water, 5L; oxalic acid dihydrate, 1260.6g | ferromanganese oxalate dihydrate obtained in step S1(counted as C₂O₄Mn_{0.999}Fe_{0.001}•2H₂O), 1789.6g; lithium carbonate, 369.8g; ammonium dihydrogen phosphate, 1148.9g; metasilicic acid, 0.8g; water, 20L |
| Example 27 | LiMn_{0.60}Fe_{0.393}V_{0.004}Ni_{0.003}P_{0.9}N_{0.100}O₄ | manganese carbonate, 689.6g; ferrous carbonate, 455.3g; nickel carbonate, 3.6g; vanadium dichloride, 4.9g; water, 5L; oxalic acid dihydrate, 1260.6g | nickel manganese iron vanadium oxalate dihydrate obtained in step S1(counted as C₂O₄Mn_{0.60}Fe_{0.393}V_{0.004}Ni_{0.003}•2H₂O), 1793.1g; lithium carbonate, 369.4g; ammonium dihydrogen phosphate, 1035.1g; dilute nitric acid, 140.0g; water, 20L |
| Example 28 | Li_{1.001}Mn_{0.40}Fe_{0.593}V_{0.004}Ni_{0.003}P_{0.999}Si_{0.001}O₄ | manganese carbonate, 459.7g; ferrous carbonate, 686.9g; vanadium dichloride, 4.8g; nickel carbonate, 3.6g; water, 5L; oxalic acid dihydrate, 1260.6g | nickel manganese iron vanadium oxalate dihydrate obtained in step S1(counted as C₂O₄Mn_{0.40}Fe_{0.593}V_{0.004}Ni_{0.003}•2H₂O), 1794.9g; lithium carbonate, 369.8g; ammonium dihydrogen phosphate, 1148.9g; metasilicic acid, 0.8g; water, 20L |
| Example 29 | Li_{1.001}Mn_{0.40}Fe_{0.393}V_{0.204}Ni_{0.003}P_{0.996}Si_{0.001}O₄ | manganese carbonate, 459.7g; ferrous carbonate, 455.2g; vanadium dichloride, 248.6g; nickel carbonate, 3.6g; water, 5L; oxalic acid dihydrate, 1260.6g | nickel manganese iron vanadium oxalate dihydrate obtained in step S1(counted as C₂O₄Mn_{0.40}Fe_{0.393}V_{0.204}Ni_{0.003}•2H₂O), 1785.1g; lithium carbonate, 369.8g; ammonium dihydrogen phosphate, 1148.9g; metasilicic acid, 0.8g; water, 20L |

**Table 2: Preparation of suspension for a first cladding layer (Step S3)**

| No. | Materials for a first cladding layer | Preparation of suspension for a first cladding layer |
|---|---|---|
| Comparative Examples 3, 16 | Amorphous Li₂FeP₂O₇ | 7.4g lithium carbonate; 11.6g ferrous carbonate; 23.0g ammonium dihydrogen phosphate; 12.6g oxalic acid dihydrate; pH being controlled to 5 |
| Comparative Example 11, 13-15, 17-18; Examples 1-14, 19, 21-29 | crystalline Li₂FeP₂O₇ | 7.4g lithium carbonate; 11.6g ferrous carbonate; 23.0g ammonium dihydrogen phosphate; 12.6g oxalic acid dihydrate; pH being controlled to 5 |
| Examples 15-16 | crystalline Al₄(P₂O₇)₃ | 53.3g aluminum chloride; 34.5g ammonium dihydrogen phosphate; 18.9g oxalic acid dihydrate; pH being controlled to 4 |
| Examples 17-18, 20 | crystalline Li₂NiP₂O₇ | 7.4g lithium carbonate; 11.9g nickel carbonate; 23.0g ammonium dihydrogen phosphate; 12.6g oxalic acid dihydrate; pH being controlled to 5 |

**Table 3: Cladding of the first cladding layer (Step S4)**

| No. | Material for a first cladding layer and its amount (based on the weight of the core) | The addition amount of the core in step S4 | Step S4: Cladding of the first cladding layer | | | | |
|---|---|---|---|---|---|---|---|
| | | | The amount of corresponding cladding material in suspension for a first cladding layer | Mixing time (hour) | Drying temperature (°C) | Sintering temperature (°C) | Sintering time (hour) |
| Comparative Example 3 | 2% amorphous Li₂FeP₂O₇ | 1570.4g | 31.4g | 6 | 120 | 500 | 4 |
| Comparative Example 11 | 1% crystalline Li₂FeP₂O₇ | 1571.1g | 15.7g | 6 | 120 | 650 | 6 |
| Comparative Example 13 | 2% crystalline Li₂FeP₂O₇ | 1568.5g | 31.4g | 6 | 120 | 650 | 6 |
| Comparative Example 14 | 2% crystalline Li₂FeP₂O₇ | 1562.8g | 31.2g | 6 | 120 | 650 | 6 |
| Comparative Example 15 | 2% crystalline Li₂FeP₂O₇ | 1570.6g | 31.4g | 6 | 120 | 650 | 6 |
| Comparative Example 16 | 2% amorphous Li₂FeP₂O₇ | 1571.1g | 31.4g | 6 | 120 | 500 | 4 |
| Comparative Example 17 | 2% crystalline Li₂FeP₂O₇ | 1571.1g | 31.4g | 6 | 120 | 650 | 6 |
| Comparative Example 18 | 1% crystalline Li₂FeP₂O₇ | 1571.9g | 15.7g | 6 | 120 | 650 | 6 |
| Examples 1-4, 8-10 | 1% crystalline Li₂FeP₂O₇ | 1571.9g | 15.7g | 6 | 120 | 650 | 6 |
| Example 5 | 2%crystalline Li₂FeP₂O₇ | 1571.9g | 31.4g | 6 | 120 | 650 | 6 |
| Example 6 | 3% crystalline Li₂FeP₂O₇ | 1571.1g | 47.1g | 6 | 120 | 650 | 6 |
| Example 7 | 5% crystalline Li₂FeP₂O₇ | 1571.9g | 78.6g | 6 | 120 | 650 | 6 |
| Example 11 | 1% crystalline Li₂FeP₂O₇ | 1572.1g | 15.7g | 6 | 120 | 650 | 6 |
| Example 12 | 1% crystalline Li₂FeP₂O₇ | 1571.7g | 15.7g | 6 | 120 | 650 | 6 |
| Example 13 | 2% crystalline Li₂FeP₂O₇ | 1571.4g | 31.4g | 6 | 120 | 650 | 6 |
| Example 14 | 2.5% crystalline Li₂FeP₂O₇ | 1571.9g | 39.3g | 6 | 120 | 650 | 6 |
| Example 15 | 2% crystalline Al₄(P₂O₇)₃ | 1571.9g | 31.4g | 6 | 120 | 680 | 8 |
| Example 16 | 3% crystalline Al₄(P₂O₇)₃ | 1571.9g | 47.2g | 6 | 120 | 680 | 8 |
| Example 17 | 1.5% crystalline Li₂NiP₂O₇ | 1571.9g | 23.6g | 6 | 120 | 630 | 6 |
| Example 18 | 1% crystalline Li₂NiP₂O₇ | 1570.1g | 15.7g | 6 | 120 | 630 | 6 |
| Example 19 | 2% crystalline Li₂FeP₂O₇ | 1571.0g | 31.4g | 6 | 120 | 650 | 6 |
| Example 20 | 1% crystalline Li₂NiP₂O₇ | 1571.9g | 15.7g | 6 | 120 | 630 | 6 |
| Examples 21-24 | 2% crystalline Li₂FeP₂O₇ | 1572.1g | 31.4g | 6 | 120 | 650 | 6 |
| Example 22 | 5.50% crystalline Li₂FeP₂O₇ | 1572.1g | 86.5g | 6 | 120 | 650 | 6 |
| Example 25 | 1% crystalline Li₂FeP₂O₇ | 1573.0g | 15.7g | 6 | 120 | 650 | 6 |
| Example 26 | 1% crystalline Li₂FeP₂O₇ | 1568.6g | 15.7g | 6 | 120 | 650 | 6 |
| Example 27 | 1% crystalline Li₂FeP₂O₇ | 1569.2g | 15.7g | 6 | 120 | 650 | 6 |
| Example 28 | 2% crystalline Li₂FeP₂O₇ | 1573.9g | 31.4g | 6 | 120 | 650 | 6 |
| Example 29 | 2%crystalline Li₂FeP₂O₇ | 1564.1g | 31.2g | 6 | 120 | 650 | 6 |

**Table 4: Preparation of the second cladding layer suspension (Step S5)**

| No. | Material for the second cladding layer | Step S5: Preparation of suspension for a second cladding layer |
|---|---|---|
| Comparative Example 12, 18; Example 1-14, 18-19, 25-27 | crystalline LiFePO₄ | 3.7g lithium carbonate; 11.6g ferrous carbonate; 11.5g ammonium dihydrogen phosphate; 12.6g oxalic acid dihydrate |
| Comparative Example 13-16; Example 15, 17, 20, 21-24, 28-29 | crystalline LiCoPO₄ | 3.7g lithium carbonate; 15.5g cobalt sulfate; 11.5g ammonium dihydrogen phosphate; 12.6g oxalic acid dihydrate |
| Comparative Example 17 | amorphous LiCoPO₄ | 3.7g lithium carbonate; 15.5g cobalt sulfate; 11.5g ammonium dihydrogen phosphate; 12.6g oxalic acid dihydrate |
| Example 16 | crystalline LiNiPO₄ | 3.7g lithium carbonate; 11.9g nickel carbonate; 11.5g ammonium dihydrogen phosphate; 12.6g oxalic acid dihydrate |

**Table 5: Cladding of the second cladding layer (Step S6)**

| No. | Material for a second cladding layer and its amount (based on the weight of the core) | Addition amount of pyrophosph ate-clad material in step S6 (g) | Step S6: Cladding of the second cladding layer | | | | |
|---|---|---|---|---|---|---|---|
| | | | The amount of corresponding cladding material in suspension for a second cladding layer (g) | Mixing time (hour) | Drying temperature (°C) | Sintering temperatur e (°C) | Sintering time (hour) |
| Comparative Example 12 | 3% crystalline LiFePO₄ | 1571.1 | 47.1 | 6 | 120 | 700 | 8 |
| Comparative Example 13 | 4% crystalline LiCoPO₄ | 1599.9 | 62.7 | 6 | 120 | 750 | 8 |
| Comparative Example 14 | 4% crystalline LiCoPO₄ | 1594.0 | 62.5 | 6 | 120 | 750 | 8 |
| Comparative Example 15 | 4% crystalline LiCoPO₄ | 1602.0 | 62.8 | 6 | 120 | 750 | 8 |
| Comparative Example 16 | 4% crystalline LiCoPO₄ | 1602.5 | 62.8 | 6 | 120 | 750 | 8 |
| Comparative Example 17 | 4% amorphous LiCoPO₄ | 1602.5 | 62.8 | 6 | 120 | 650 | 8 |
| Comparative Example 18 | 3% crystalline LiFePO₄ | 1586.8 | 47.1 | 6 | 120 | 700 | 8 |
| Examples 1-4 | 3% crystalline LiFePO₄ | 1586.8 | 47.1 | 6 | 120 | 700 | 8 |
| Example 5 | 3% crystalline LiFePO₄ | 1602.5 | 47.1 | 6 | 120 | 700 | 8 |
| Example 6 | 3% crystalline LiFePO₄ | 1618.2 | 47.1 | 6 | 120 | 700 | 8 |
| Example 7 | 3% crystalline LiFePO₄ | 1649.6 | 47.1 | 6 | 120 | 700 | 8 |
| Example 8 | 1% crystalline LiFePO₄ | 1586.8 | 15.7 | 6 | 120 | 700 | 8 |
| Example 9 | 4% crystalline LiFePO₄ | 1586.8 | 62.8 | 6 | 120 | 700 | 8 |
| Example 10 | 5% crystalline LiFePO₄ | 1586.8 | 78.6 | 6 | 120 | 700 | 8 |
| Example 11 | 2.50% crystalline LiFePO₄ | 1587.8 | 39.3 | 6 | 120 | 700 | 8 |
| Example 12 | 3% crystalline LiFePO₄ | 1587.4 | 47.2 | 6 | 120 | 700 | 8 |
| Example 13 | 2% crystalline LiFePO₄ | 1602.8 | 31.4 | 6 | 120 | 700 | 8 |
| Example 14 | 3.50% crystalline LiFePO₄ | 1610.5 | 55.0 | 6 | 120 | 700 | 8 |
| Example 15 | 2.5% crystalline LiCoPO₄ | 1603.3 | 39.3 | 6 | 120 | 750 | 8 |
| Example 16 | 3% crystalline LiNiPO₄ | 1619.0 | 47.2 | 6 | 120 | 680 | 8 |
| Example 17 | 2.5% crystalline LiCoPO₄ | 1595.5 | 39.3 | 6 | 120 | 750 | 8 |
| Example 18 | 3% crystalline LiFePO₄ | 1585.9 | 47.1 | 6 | 120 | 700 | 8 |
| Example 19 | 4% crystalline LiFePO₄ | 1602.4 | 62.8 | 6 | 120 | 700 | 8 |
| Example 20 | 3% crystalline LiCoPO₄ | 1587.7 | 47.2 | 6 | 120 | 750 | 8 |
| Example 21 | 4% crystalline LiCoPO₄ | 1603.5 | 62.9 | 6 | 120 | 750 | 8 |
| Example 22 | 4% crystalline LiCoPO₄ | 1658.6 | 62.9 | 6 | 120 | 750 | 8 |
| Example 23 | 5.50% crystalline LiCoPO₄ | 1603.5 | 86.5 | 6 | 120 | 750 | 8 |
| Example 24 | 4% crystalline LiCoPO₄ | 1603.5 | 62.9 | 6 | 120 | 750 | 8 |
| Example 25 | 3% crystalline LiFePO₄ | 1588.7 | 47.2 | 6 | 120 | 700 | 8 |
| Example 26 | 3% crystalline LiFePO₄ | 1584.3 | 47.1 | 6 | 120 | 700 | 8 |
| Example 27 | 3% crystalline LiFePO₄ | 1584.9 | 47.1 | 6 | 120 | 700 | 8 |
| Example 28 | 4% crystalline LiCoPO₄ | 1605.4 | 63.0 | 6 | 120 | 750 | 8 |
| Example 29 | 4% crystalline LiCoPO₄ | 1605.4 | 63.0 | 6 | 120 | 750 | 8 |
| Note: Comparative Example 12 relates to the amount of the added core. | | | | | | | |

**Table 6: Cladding of the third cladding layer (Step S8)**

| No. | Material for a third cladding layer | Mola r ratio of SP2 to SP3 | Addition amount of material that has been covered with two layers in step S8 (g) | Step S8: Cladding of the third cladding layer | | | | |
|---|---|---|---|---|---|---|---|---|
| | | | | Amount of sucrose (g) | Mixin g time (hour) | Drying temperatu re (°C) | Sintering temperatu re (°C) | Sinterin g time (hour) |
| Comparati ve Example 1 | 1%carbon | 2.5 | 1568.5 | 37.3 | 6 | 150 | 650 | 8 |
| Comparati ve Example 2 | 2%carbon | 2.8 | 1572.2 | 74.7 | 6 | 150 | 680 | 8 |
| Comparati ve Example 3 | 2%carbon | 2.7 | 1601.8 | 74.6 | 6 | 150 | 680 | 7 |
| Comparati ve Example 4 | 1%carbon | 2.4 | 1571.0 | 37.3 | 6 | 150 | 630 | 8 |
| Comparati ve Example 5 | 1.5%carb on | 2.6 | 1570.6 | 56.0 | 6 | 150 | 650 | 7 |
| Comparati ve Example 6 | 2.5%carb on | 2.8 | 1573.6 | 93.4 | 6 | 150 | 680 | 8 |
| Comparati ve Example 7 | 1%carbon | 2.7 | 1572.2 | 37.3 | 6 | 150 | 680 | 7 |
| Comparati ve Example 8 | 1.5%carb on | 2.9 | 1571.1 | 56.0 | 6 | 150 | 680 | 10 |
| Comparati ve Example 9 | 1%carbon | 2.2 | 1572.2 | 37.3 | 6 | 150 | 600 | 8 |
| Comparati ve Example 10 | 1%carbon | 2.4 | 1571.1 | 37.3 | 6 | 150 | 630 | 8 |
| Comparati ve Example 11 | 1%carbon | 2.3 | 1586.8 | 37.3 | 6 | 150 | 620 | 8 |
| Comparati ve Example 12 | 1%carbon | 2.1 | 1618.2 | 37.3 | 6 | 150 | 600 | 6 |
| Comparati ve Example 13 | 1%carbon | 2 | 1662.6 | 37.3 | 6 | 120 | 600 | 6 |
| Comparati ve Example 14 | 1%carbon | 1.8 | 1656.5 | 37.1 | 6 | 120 | 600 | 6 |
| Comparati ve Example 15 | 1%carbon | 1.7 | 1664.8 | 37.3 | 6 | 100 | 600 | 6 |
| Comparati ve Example 16 | 1%carbon | 3.1 | 1665.4 | 37.3 | 6 | 150 | 700 | 10 |
| Comparati ve Example 17 | 1%carbon | 3.5 | 1665.4 | 37.3 | 6 | 150 | 750 | 10 |
| Comparati ve Example 18 | 1%carbon | 2.2 | 1633.9 | 37.3 | 6 | 150 | 700 | 10 |
| Example 1 | 1%carbon | 2.2 | 1633.9 | 37.3 | 6 | 150 | 700 | 10 |
| Example 2 | 3%carbon | 2.3 | 1633.9 | 111.9 | 6 | 150 | 600 | 9 |
| Example 3 | 4%carbon | 2.1 | 1633.9 | 149.2 | 6 | 150 | 600 | 6 |
| Example 4 | 5%carbon | 2.4 | 1633.9 | 186.5 | 6 | 150 | 630 | 8 |
| Example 5 | 1%carbon | 2.5 | 1649.6 | 37.3 | 6 | 150 | 650 | 8 |
| Example 6 | 1%carbon | 2.5 | 1665.3 | 37.3 | 6 | 150 | 650 | 8 |
| Example 7 | 1%carbon | 2.4 | 1696.7 | 37.3 | 6 | 150 | 630 | 8 |
| Example 8 | 1%carbon | 2.3 | 1602.5 | 37.3 | 6 | 150 | 600 | 9 |
| Example 9 | 1%carbon | 2.2 | 1649.6 | 37.3 | 6 | 150 | 600 | 8 |
| Example 10 | 1%carbon | 2.2 | 1665.3 | 37.3 | 6 | 150 | 600 | 9 |
| Example 11 | 1.5%carb on | 2.3 | 1629.0 | 56.1 | 6 | 150 | 600 | 9 |
| Example 12 | 2%carbon | 2.4 | 1634.6 | 74.7 | 6 | 150 | 630 | 8 |
| Example 13 | 2%carbon | 2.5 | 1634.2 | 74.6 | 6 | 150 | 650 | 8 |
| Example 14 | 2.5%carb on | 2.7 | 1665.5 | 93.3 | 6 | 150 | 680 | 7 |
| Example 15 | 2%carbon | 2.8 | 1642.6 | 74.7 | 6 | 150 | 680 | 8 |
| Example 16 | 1%carbon | 2.7 | 1666.2 | 37.3 | 6 | 150 | 680 | 7 |
| Example 17 | 1.5%carb on | 2.3 | 1634.8 | 56.0 | 6 | 150 | 600 | 9 |
| Example 18 | 1%carbon | 2.6 | 1633.0 | 37.3 | 6 | 150 | 650 | 7 |
| Example 19 | 1.5%carb on | 2.4 | 1665.2 | 56.0 | 6 | 150 | 630 | 8 |
| Example 20 | 1.5%carb on | 2.2 | 1634.8 | 56.0 | 6 | 150 | 600 | 9 |
| Example 21 | 1%carbon | 2.2 | 1666.4 | 37.3 | 6 | 150 | 600 | 9 |
| Example 22 | 1%carbon | 2.3 | 1721.4 | 37.3 | 6 | 150 | 600 | 9 |
| Example 23 | 1%carbon | 2.4 | 1690.0 | 37.3 | 6 | 150 | 630 | 8 |
| Example 24 | 5.5%carb on | 2.6 | 1666.4 | 205.4 | 6 | 150 | 650 | 7 |
| Example 25 | 1%carbon | 2.4 | 1635.9 | 37.4 | 6 | 150 | 630 | 8 |
| Example 26 | 1%carbon | 2.3 | 1631.3 | 37.3 | 6 | 150 | 600 | 9 |
| Example 27 | 1.5%carb on | 2.1 | 1631.9 | 55.9 | 6 | 150 | 600 | 6 |
| Example 28 | 1%carbon | 0.07 | 1668.3 | 37.4 | 6 | 80 | 600 | 6 |
| Example 29 | 1%carbon | 13 | 1668.3 | 37.4 | 6 | 150 | 850 | 10 |
| Note: Comparative Examples 1-2 and 4-10 relate to the amount of the added core, Comparative Examples 3 and 11 relate to the amount of the added material which has been covered by the first layer. | | | | | | | | |

**Table 7: Examination of materials for a first cladding layer**

| No. | Materials for a first cladding layer | Preparation of suspension for a first cladding layer |
|---|---|---|
| Example 30 | crystalline Li₂MgP₂O₇ | Dissolving 7.4g lithium carbonate, 8.4g magnesium carbonate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 31 | crystalline Li₂CoP₂O₇ | Dissolving 7.4g lithium carbonate, 15.5g cobalt sulfate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 32 | crystalline Li₂CuP₂O₇ | Dissolving 7.4g lithium carbonate, 16.0g copper sulfate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 33 | crystalline Li₂ZnP₂O₇ | Dissolving 7.4g lithium carbonate, 12.5g zinc carbonate,23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 34 | crystalline TiP₂O₇ | Dissolving 24.0g titanium sulfate, 23.0g ammonium dihydrogen phosphate and 12.6g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 35 | crystalline Ag₄P2O₇ | Dissolving 67.9g silver Nitrate, 23.0g ammonium dihydrogen phosphate and 25.2goxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |
| Example 36 | crystalline ZrP₂O₇ | Dissolving 56.6g zirconium sulfate, 23.0g ammonium dihydrogen phosphate and 25.2g oxalic acid dihydrate in 500 mL of deionized water with a controlled pH of 5, and then stirring and fully reacting for 2 hours to obtain a solution, after which the solution was warmed to 80°C and maintained at this temperature for 4 hours to obtain a suspension |

**Table 8: Examination of materials for a second cladding layer**

| No. | Materials for a second cladding layer | Preparation of suspension for a second cladding layer |
|---|---|---|
| Example 37 | crystalline Cu₃(PO₄)₂ | Dissolving 48.0g copper sulfate, 23.0g ammonium dihydrogen phosphate, 37.8g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 38 | crystalline Zn₃(PO₄)₂ | Dissolving 37.6g zinc carbonate, 23.0g ammonium dihydrogen phosphate and 37.8g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 39 | crystalline Ti₃(PO₄)₄ | Dissolving 72.0g titanium sulfate, 46.0g ammonium dihydrogen phosphate and 75.6goxalic acid dihydrate in 1500mL of deionized water, then stirring and fully reacting for 6 hours to obtain a solution, after which the solution was heated to 120°C and maintained at this temperature for 6 hours to obtain a suspension |
| Example 40 | crystalline Ag₃PO₄ | Dissolving 50.9g silver Nitrate, 11.5g ammonium dihydrogen phosphate and 18.9g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 41 | crystalline Zr₃(PO₄)₄ | Dissolving 85.0g zirconium sulfate,46.0g ammonium dihydrogen phosphate and 37.8g oxalic acid dihydrate in 1500mL of deionized water, then stirring and fully reacting for 6 hours to obtain a solution, after which the solution was heated to 120°C and maintained at this temperature for 6 hours to obtain a suspension |
| Example 42 | crystalline AlPO₄ | Dissolving 13.3g aluminum chloride, 11.5g ammonium dihydrogen phosphate and 18.9g oxalic acid dihydrate in 1500mL of deionized water, then stirring and fully reacting for 6 hours to obtain a solution, after which the solution was heated to 120°C and maintained at this temperature for 6 hours to obtain a suspension |

**Table 9: preparation of non-aqueous electrolytic solution (Step 4)**

| No. | Preparation of non-aqueous electrolytic solution |
|---|---|
| Comparative Examples 1-18 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ was dissolved, and the resulting mixture was stirred homogeneously, to obtain a non-aqueous electrolytic solution. |
| Examples 1-42 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H38 were dissolved, and the resulting mixture was stirred homogeneously, to obtain a non-aqueous electrolytic solution. |
| Example 43 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H2 were dissolved, and the resulting mixture was stirred homogeneously, to obtain a non-aqueous electrolytic solution. |
| Example 44 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H3 were dissolved, and the resulting mixture was stirred homogeneously, to obtain a non-aqueous electrolytic solution. |
| Example 45 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H12 were dissolved, and the resulting mixture was stirred homogeneously, to obtain a non-aqueous electrolytic solution. |
| Example 46 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H19 were dissolved, and the resulting mixture was stirred homogeneously, to obtain a non-aqueous electrolytic solution. |
| Example 47 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H20 were dissolved, and the resulting mixture was stirred homogeneously, to obtain a non-aqueous electrolytic solution. |
| Example 48 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H24 were dissolved, and the resulting mixture was stirred homogeneously, to obtain a non-aqueous electrolytic solution. |
| Example 49 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H28 were dissolved, and the resulting mixture was stirred homogeneously, to obtain a non-aqueous electrolytic solution. |
| Example 50 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H35 were dissolved, and the resulting mixture was stirred homogeneously, to obtain a non-aqueous electrolytic solution. |
| Example 51 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H36 were dissolved, and the resulting mixture was stirred homogeneously, to obtain a non-aqueous electrolytic solution. |
| Example 52 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H37 were dissolved, and the resulting mixture was stirred homogeneously, to obtain a non-aqueous electrolytic solution. |
| Example 53 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of DTD were dissolved, and the resulting mixture was stirred homogeneously, to obtain a non-aqueous electrolytic solution. |
| Example 54 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of lithium difluorophosphate were dissolved, and the resulting mixture was stirred homogeneously, to obtain a non-aqueous electrolytic solution. |
| Example 55 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of lithium difluorodioxalate phosphate were dissolved, and the resulting mixture was stirred homogeneously, to obtain a non-aqueous electrolytic solution. |
| Example 56 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of lithium fluorosulfonate were dissolved, and the resulting mixture was stirred homogeneously, to obtain a non-aqueous electrolytic solution. |
| Example 57 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38 and 1 wt% (based on the total weight of the non-aqueous electrolytic solution) of lithium trifluoromethanesulfonate were dissolved, and the resulting mixture was stirred homogeneously, to obtain a non-aqueous electrolytic solution. |
| Example 58 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38, 1 wt% (based on the total weight of the non-aqueous electrolytic solution) of DTD and 1 wt% (based on the total weight of the non-aqueous electrolytic solution) of VC were dissolved, and the resulting mixture was stirred homogeneously, to obtain a non-aqueous electrolytic solution. |
| Example 59 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38, 1 wt% (based on the total weight of the non-aqueous electrolytic solution) of DTD and 1 wt% (based on the total weight of the non-aqueous electrolytic solution) of VC were dissolved, and the resulting mixture was stirred homogeneously, to obtain a non-aqueous electrolytic solution. |
| Example 60 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 1 wt% (based on the total weight of the non-aqueous electrolytic solution) of compound H38, 1 wt% (based on the total weight of the non-aqueous electrolytic solution) of DTD and 1 wt% (based on the total weight of the non-aqueous electrolytic solution) of FEC were dissolved, and the resulting mixture was stirred homogeneously, to obtain a non-aqueous electrolytic solution. |
| Example 61 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 0.01 wt% (based on the total weight of the non-aqueous electrolytic solution) of compound H38 were dissolved, and the resulting mixture was stirred homogeneously, to obtain a non-aqueous electrolytic solution. |
| Example 62 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 0.1 wt% (based on the total weight of the non-aqueous electrolytic solution) of compound H38 were dissolved, and the resulting mixture was stirred homogeneously, to obtain a non-aqueous electrolytic solution. |
| Example 63 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 0.3 wt% (based on the total weight of the non-aqueous electrolytic solution) of compound H38 were dissolved, and the resulting mixture was stirred homogeneously, to obtain a non-aqueous electrolytic solution. |
| Example 64 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 5 wt% (based on the total weight of the non-aqueous electrolytic solution) of compound H38 were dissolved, and the resulting mixture was stirred homogeneously, to obtain a non-aqueous electrolytic solution. |
| Example 65 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 8 wt% (based on the total weight of the non-aqueous electrolytic solution) of compound H38 were dissolved, and the resulting mixture was stirred homogeneously, to obtain a non-aqueous electrolytic solution. |
| Example 66 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 10 wt% (based on the total weight of the non-aqueous electrolytic solution) of compound H38 were dissolved, and the resulting mixture was stirred homogeneously, to obtain a non-aqueous electrolytic solution. |
| Example 67 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 20 wt% (based on the total weight of the non-aqueous electrolytic solution) of compound H38 were dissolved, and the resulting mixture was stirred homogeneously, to obtain a non-aqueous electrolytic solution. |

### II. Performance evaluation

### 1. Determination of lattice variability

Under a constant temperature environment of 25°C, a positive electrode active material sample was placed in X-ray powder diffractometer (Bruker D8 Discover model) and tested at 1°/minute. The test data was organized and analyzed. Referring to the standard PDF card, the lattice constants a0, b0, c0, and v0 (a0, b0, and c0 represent the length size in individual directions of lattice cell, respectively, v0 represents the volume of lattice cell, which can be directly obtained through XRD refinement results) were calculated.

Using the preparation of button battery as shown in examples, the positive electrode active material sample was prepared into a button battery. The button battery was charged at a small rate of 0.05C until the current was decreased to 0.01C. Then the positive electrode plate was taken out the button battery and soaked in dimethyl carbonate (DMC) for 8 hours. After drying and scraping the powder, the particles with a particle size less than 500 nm were screened out. A sample was taken and its lattice volume v1 was calculated in the same way as the fresh sample was tested above. (v0-v1)/v0 ×100% representing the lattice variability (lattice volume variability) of before and after complete de-intercalation and deintercalation of lithium was shown in the table.

### 2. Li/Mn anti-site defect concentration

The XRD results measured in the "Measurement method for lattice change rate" were compared with the PDF (Powder Diffusion File) card of standard crystal to obtain the Li/Mn anti-site defect concentration. Specifically, the XRD results tested in the "Measurement method for lattice change rate" were imported into the General Structural Analysis System (GSAS) software to automatically obtain refined results, which include the occupancy of different atoms. The Li/Mn anti-site defect concentration was obtained by reading the refined results.

### 3. Compaction density

5g of the above prepared positive electrode active material powders were taken and placed in a special mold for compaction (CARVER mold in the United States, model 13mm), and then the mold was placed on a compaction density instrument. 3T (tonnes) of pressure was applied and thickness of powders under the pressure was read on the equipment (i.e. the thickness after the pressure is removed, the area of the container used for testing being 1540.25mm²). The compaction density was calculated via ρ= m/v.

### 4. Determination of surface oxygen valence

5g of the above prepared positive electrode active material sample was taken and prepared into a button battery according to the preparation of button battery as described in the example. The button battery was charged at a low rate of 0.05C until the current decreased to 0.01C. Then the positive electrode plate was taken out of the button battery and soaked in dimethyl carbonate (DMC) for 8 hours. After drying and scraping the powder, the particles with a particle size less than 500 nm were obtained by sieving. The obtained particles were measured with Electron Energy Loss Spectroscopy (EELS, Talos F200S model) to obtain the energy loss near edge structure (ELNES), which can reflect the state density and energy level distribution of elements. Based on the density of states and energy level distribution, the number of occupied electrons was calculated by integrating the density of states in valence band, thereby calculating the surface oxygen valence after charge.

### 5. Determination of leaching out of transition metal Mn (and Fe doped at Mn site)

At 45 °C, a full battery prepared in each of the above Examples and Comparative Examples with capacity reduced to 80% was discharged to the cutoff voltage of 2.0V at a rate of 0.1 C. Then the battery was disassembled, the negative electrode plate was taken out. 30 discs having a unit area (1540.25mm²) were randomly taken from the negative electrode plate. Inductively coupled plasma emission spectrum (ICP) was tested by using Agilent ICP-OES730. The amounts of Fe (if Fe was doped at Mn site of the positive electrode active material) and of Mn were calculated on the basis of the ICP results, and then the amount of leaching out of Mn (and Fe doped at Mn site) after cycle was calculated. The testing standard was based on EPA-6010D-2014.

### 6. Measurement of manganese and phosphorus in positive electrode active material

5g of the positive electrode active material made above was dissolved in 100mL of reverse aqua regia (i.e. a mixture of concentrated hydrochloric acid and concentrated nitric acid with a ratio of 1:3), the content of each element in the solution was tested using ICP, and then the content of manganese element or the phosphorus element was measured and converted (amount of manganese element or phosphorus element/amount of positive electrode active material×100%), to obtain its weight percentage.

### 7. Determination of initial specific capacity of button battery

The above prepared button battery in each of the Examples and Comparative Examples was charged to 4.3V at 0.1C, then charged at a constant voltage of 4.3V until the current was less than or equal to 0.05 mA. It was allowed to stand for 5 minutes. Then the button battery was discharged at 0.1C to 2.0V. The discharge capacity measured at this moment was initial specific capacity, denoted as D0.

### 8. 3C charge constant current ratio

Under a constant temperature environment of 25°C, the above prepared fresh button battery in each of the Examples and Comparative Examples was allowed to stand for 5 minutes, then was discharged to 2.5V at 1/3C, then was allowed to stand for 5 minutes, then charged to 4.3 V at 1/3C, then was charged at a constant voltage of 4.3V until the current was less than or equal to 0.05mA, then was allowed to stand for 5 minutes. The charge capacity at the moment was recorded as C0. The button battery was then discharged to 2.5V at 1/3C, was allowed to stand for 5 minutes and then charged to 4.3V at 3C and was allowed to stand for 5 minutes. The charge capacity at the moment was recorded as C1. A 3C charge constant current ratio was C1/C0×100%.

A higher 3C charge constant current ratio indicates that the secondary battery had a better rate performance.

### 9. Test of expansion of full battery upon storage at 60°C for 30 days

The above prepared full battery in the Examples and Comparative Examples was stored at 100% state of charge (SOC) at 60°C. Before, during, and after storage, open circuit voltage (OCV) and AC internal impedance (IMP) of the battery were tested to monitor SOC and the volume of the battery was measured. After every 48 hours of storage, the full battery was taken out and allowed to stand for 1 hour, and then open circuit voltage (OCV) and internal impedance (IMP) were tested. After it was cooled to room temperature, the volume of the battery was measured using a drainage method. The drainage method included measuring gravity F₁ of the battery alone with a balance that can automatically perform unit conversion with a dial data, and then placing the battery completely in deionized water (with a density of 1g/cm³), measuring gravity F₂ of the battery at this moment wherein a buoyant force F_{b} of the battery was F₁-F₂, and then according to the Archimedes principle F_{b} = ρ× g × V, the volume of the battery was calculated: V=( F₁-F₂)/(ρ×g).

From the OCV and IMP test results, it can be seen that the batteries of the examples maintain a SOC of 99% or higher throughout the testing process until the end of storage.

After 30 days of storage, the volume of battery was measured, and the increased percentage in battery volume after storage compared to the previous battery volume was calculated.

### 10. Test of cycle performance at 45 °C of full battery

Under a constant temperature environment of 45°C, the above prepared full battery was charged at 1C to 4.3V, and then charged at a constant voltage at 4.3V until the current was less than or equal to 0.05 mA. The full battery was allowed to stand for 5 minutes, then discharged at 1C to 2.5V. The discharge capacity at this moment was reported as D0. The above charge-discharge cycle was repeated until the discharge capacity was reduced to 80% of D0. The number of cycles that the battery had undergone at this moment was recorded, i.e. cycle number corresponding to 80% capacity retention at 45°C.

### 11. Test of crystal plane spacing and orientation angle:

1g of the above prepared positive electrode active material powder each was placed in a 50mL test tube, to which 10mL of alcohol with 75% by mass was injected, and then it was subjected to sufficient stirring and dispersion for 30 minutes. And then an appropriate amount of the above solution was dropped on ta 300-mesh copper mesh with a clean disposable plastic pipette. At this time, some of the powder would be left on the copper mesh, and then the copper mesh with samples would be transferred to a TEM (Talo F200s G2) sample chamber for testing, thereby obtaining original images of TEM testing.

The above TEM images were opened in DigitalMicrograph software and subjected to Fourier transform (automatically done by the software after clicking the operation) to get a diffraction pattern, the distance from the diffracted spot to the center of diffraction pattern was measured to get a crystal plane spacing, and the orientation angle was calculated according to the Bragg's equation.

A cladding layer could be recognized for different substances contained therein by comparing the resulting data of crystal plane spacing and corresponding orientation angle with their standard values.

### 12. Test of thickness of cladding layer

A cladding layer was tested for its thickness by FIB by cutting a thin slice of about 100 nm thickness from an individual particle of the positive electrode active material as described above at its middle position, and then subjecting the thin slice to a TEM test, to obtain an original image of TEM.

The original image obtained from the above TEM test was opened in DigitalMicrograph software, and the cladding layer was recognized by the lattice spacing and orientation angle information and then measured for its thickness.

The thickness was measured at three locations for the selected particles and averaged.

### 13. Determination of a molar ratio of the SP2 and SP3 carbon in a third cladding layer

This test was carried out by Raman spectroscopy. A molar ratio of the two carbons was determined by splitting energy spectrum from the Raman test to obtain I_{d}/I_{g} in which I_{d} was a peak intensity of the carbon in the SP3 form and I_{g} was a peak intensity of the carbon in the SP2 form.

### 14. Determination of the chemical formula of core and the composition of different cladding layers

The internal microstructure and surface structure of the positive electrode active material were characterized with high spatial resolution by a spherical Aberration Corrected Scanning Transmission Electron Microscope (ACSTEM). By combining with a three-dimensional reconstruction technology, the chemical formula of the core and the compositions of the different cladding layers of the positive electrode active material were obtained.

Table 10 illustrates properties of the positive electrode active material powder and properties of the prepared positive electrode plates and batteries in Examples 1-42 and Comparative Examples 1-18.

Table 11 illustrates a thickness of each cladding layer and a weight ratio of manganese and phosphorus elements of the positive electrode active materials prepared in Examples 1-14 and Comparative Examples 3-4 and 12.

Table 12 illustrates a crystal plane spacing and orientation angle of materials for a first cladding layer and of materials for a second cladding layer in Examples 1, 30-42.

**Table 10**

| No. | Lattice variability (%) | Li/Mn anti-site defect concentration (%) | Compaction density (g/cm³) | Surface oxygen valence | 3C charge constant current ratio (mAh/g) | Leaching out of Fe and Mn (ppm) after cycle | 0.1 C capacity of button battery (V) | Battery expansion after storage at 60°C for 30 d (%) | Cycle numbers corresponding to 80% capacity retention at 45°C |
|---|---|---|---|---|---|---|---|---|---|
| Comparative Example 1 | 11.4 | 5.2 | 1.5 | -1.55 | 50.1 | 2060 | 125.6 | 48.6 | 185 |
| Comparative Example 2 | 10.6 | 3.3 | 1.67 | -1.51 | 54.9 | 1810 | 126.4 | 47.3 | 243 |
| Comparative Example 3 | 10.8 | 3.4 | 1.64 | -1.64 | 52.1 | 1728 | 144.7 | 41.9 | 378 |
| Comparative Example 4 | 4.3 | 2.8 | 1.69 | -1.82 | 56.3 | 1096 | 151.2 | 8.4 | 551 |
| Comparative Example 5 | 2.8 | 2.5 | 1.65 | -1.85 | 58.2 | 31 | 148.4 | 7.5 | 668 |
| Comparative Example 6 | 3.4 | 2.4 | 1.61 | -1.86 | 58.4 | 64 | 149.6 | 8.6 | 673 |
| Comparative Example 7 | 4.5 | 2.4 | 1.73 | -1.83 | 59.2 | 85 | 148.6 | 8.3 | 669 |
| Comparative Example 8 | 2.3 | 2.4 | 1.68 | -1.89 | 59.3 | 30 | 152.3 | 7.3 | 653 |
| Comparative Example 9 | 2.3 | 2.4 | 1.75 | -1.89 | 59.8 | 30 | 152.3 | 7.3 | 672 |
| Comparative Example 10 | 2.3 | 2.2 | 1.81 | -1.9 | 64.1 | 28 | 154.2 | 7.2 | 685 |
| Comparative Example 11 | 2.3 | 2.2 | 1.92 | -1.92 | 65.4 | 12 | 154.3 | 5.4 | 985 |
| Comparative Example 12 | 2.3 | 2.1 | 1.95 | -1.95 | 65.5 | 18 | 154.6 | 4.2 | 795 |
| Comparative Example 13 | 11.4 | 5.2 | 1.63 | -1.96 | 52.4 | 56 | 130.2 | 5.4 | 562 |
| Comparative Example 14 | 8.1 | 3.8 | 1.76 | -1.96 | 58.3 | 41 | 135.1 | 5.1 | 631 |
| Comparative Example 15 | 2 | 1.8 | 2.13 | -1.96 | 61.3 | 8 | 154.3 | 3.7 | 1126 |
| Comparative Example 16 | 2 | 1.9 | 1.95 | -1.96 | 60.5 | 18 | 152.7 | 4.5 | 1019 |
| Comparative Example 17 | 2 | 1.9 | 1.9 | -1.89 | 60.4 | 24 | 152.4 | 5.1 | 897 |
| Comparative Example 18 | 2.5 | 1.8 | 2.35 | -1.93 | 70.3 | 7 | 157.2 | 4.2 | 1128 |
| Example 1 | 2.5 | 1.8 | 2.35 | -1.93 | 77.3 | 5 | 159.6 | 2.0 | 1548 |
| Example 2 | 2.5 | 1.8 | 2.24 | -1.94 | 77.2 | 5 | 158.6 | 1.8 | 1719 |
| Example 3 | 2.5 | 1.8 | 2.22 | -1.94 | 77.1 | 3 | 157.7 | 1.6 | 1885 |
| Example 4 | 2.5 | 1.8 | 2.21 | -1.95 | 77.2 | 3 | 156.0 | 1.4 | 1929 |
| Example 5 | 2.5 | 1.8 | 2.33 | -1.93 | 77.1 | 5 | 159.1 | 1.5 | 2059 |
| Example 6 | 2.5 | 1.8 | 2.31 | -1.93 | 76.7 | 4 | 158.5 | 1.4 | 2162 |
| Example 7 | 2.5 | 1.8 | 2.28 | -1.93 | 75.2 | 3 | 158.1 | 1.2 | 2260 |
| Example 8 | 2.5 | 1.8 | 2.29 | -1.93 | 76.0 | 7 | 158.7 | 1.6 | 1452 |
| Example 9 | 2.5 | 1.8 | 2.46 | -1.98 | 80.7 | 5 | 160.0 | 1.4 | 1764 |
| Example 10 | 2.5 | 1.8 | 2.49 | -1.98 | 82.9 | 4 | 160.2 | 1.2 | 2039 |
| Example 11 | 2.6 | 1.9 | 2.38 | -1.97 | 79.6 | 4 | 159.7 | 1.7 | 1408 |
| Example 12 | 2.4 | 1.8 | 2.41 | -1.97 | 82.0 | 4 | 158.6 | 1.2 | 1559 |
| Example 13 | 2.7 | 1.9 | 2.42 | -1.97 | 82.8 | 5 | 158.9 | 1.7 | 1656 |
| Example 14 | 2.8 | 1.9 | 2.45 | -1.97 | 84.2 | 3 | 156.1 | 1.8 | 1795 |
| Example 15 | 2.2 | 1.9 | 2.46 | -1.97 | 81.7 | 3 | 156.1 | 1.8 | 1522 |
| Example 16 | 2.1 | 1.9 | 2.47 | -1.98 | 80.4 | 5 | 156.5 | 1.8 | 1553 |
| Example 17 | 2.5 | 1.7 | 2.41 | -1.98 | 82.8 | 4 | 157.7 | 2.2 | 1726 |
| Example 18 | 2.3 | 1.6 | 2.42 | -1.97 | 83.7 | 4 | 156.6 | 2.3 | 1891 |
| Example 19 | 2.2 | 1.7 | 2.43 | -1.97 | 84.5 | 5 | 156.6 | 2.3 | 1822 |
| Example 20 | 2.6 | 1.8 | 2.42 | -1.94 | 82.9 | 4 | 156.2 | 1.6 | 2000 |
| Example 21 | 2.4 | 1.7 | 2.41 | -1.97 | 83.7 | 3 | 156.8 | 1.7 | 1821 |
| Example 22 | 2.4 | 1.8 | 2.32 | -1.95 | 79.3 | 2 | 154.4 | 1.3 | 2135 |
| Example 23 | 2.3 | 1.7 | 2.46 | -1.96 | 84.0 | 3 | 153.7 | 1.2 | 2257 |
| Example 24 | 2.2 | 1.8 | 2.47 | -1.95 | 83.9 | 3 | 154.4 | 1.2 | 2124 |
| Example 25 | 2.1 | 1.7 | 2.49 | -1.98 | 86.2 | 3 | 161.0 | 1.4 | 2110 |
| Example 26 | 3.6 | 2.5 | 2.21 | -1.97 | 62.0 | 7 | 154.6 | 2.3 | 1395 |
| Example 27 | 2.8 | 2.1 | 2.24 | -1.98 | 81.7 | 5 | 157.7 | 1.8 | 1545 |
| Example 28 | 2.5 | 1.9 | 1.95 | -1.94 | 60.2 | 7 | 157.2 | 3.1 | 1353 |
| Example 29 | 2.4 | 1.8 | 1.98 | -1.95 | 75.2 | 6 | 157.9 | 2.2 | 1436 |
| Example 30 | 2.4 | 1.9 | 2.36 | -1.97 | 75.6 | 12 | 158.5 | 2.3 | 1397 |
| Example 31 | 2.5 | 1.7 | 2.36 | -1.96 | 77.1 | 11 | 157.9 | 2.2 | 1491 |
| Example 32 | 2.5 | 1.7 | 2.38 | -1.97 | 76.0 | 11 | 158.2 | 2.1 | 1446 |
| Example 33 | 2.6 | 1.8 | 2.39 | -1.98 | 76.3 | 18 | 158.5 | 2.6 | 1368 |
| Example 34 | 2.6 | 1.9 | 2.34 | -1.96 | 78.4 | 13 | 158.7 | 2.2 | 1377 |
| Example 35 | 2.4 | 1.7 | 2.36 | -1.94 | 78.0 | 10 | 159.9 | 2.5 | 1512 |
| Example 36 | 2.5 | 1.9 | 2.33 | -1.92 | 78.8 | 12 | 158.1 | 2.6 | 1405 |
| Example 37 | 2.5 | 1.7 | 2.34 | -1.92 | 75.2 | 15 | 158.4 | 2.4 | 1446 |
| Example 38 | 2.4 | 1.9 | 2.33 | -1.95 | 74.3 | 21 | 157.0 | 2.9 | 1309 |
| Example 39 | 2.2 | 1.8 | 2.36 | -1.94 | 76.3 | 19 | 158.7 | 2.8 | 1395 |
| Example 40 | 2.4 | 1.9 | 2.37 | -1.91 | 78.8 | 25 | 158.1 | 2.6 | 1360 |
| Example 41 | 2.6 | 1.9 | 2.38 | -1.94 | 77.9 | 23 | 157.1 | 2.5 | 1338 |
| Example 42 | 2.4 | 1.9 | 2.36 | -1.92 | 78.7 | 12 | 159.2 | 2.0 | 1583 |

| No. | Thickness of first cladding layer (nm) | Thickness of second cladding layer (nm) | Thickness of third cladding layer (nm) | Content of Mn element (wt %) | Weight ratio of Mn element to P element |
|---|---|---|---|---|---|
| Comparative Example 3 | 4 | - | 10 | 26.1 | 1.383 |
| Comparative Example 4 | - | - | 5 | 24.3 | 1.241 |
| Comparative Example 12 | - | 7.5 | 5 | 19.6 | 1.034 |
| Example 1 | 2 | 7.5 | 5 | 19 | 1.023 |
| Example 2 | 2 | 7.5 | 15 | 18.3 | 1.023 |
| Example 3 | 2 | 7.5 | 20 | 18 | 1.023 |
| Example 4 | 2 | 7.5 | 25 | 17.9 | 1.023 |
| Example 5 | 4 | 7.5 | 5 | 18.7 | 1.011 |
| Example 6 | 6 | 7.5 | 5 | 18.3 | 0.999 |
| Example 7 | 10 | 7.5 | 5 | 17.6 | 0.975 |
| Example 8 | 2 | 2.5 | 5 | 19.8 | 1.043 |
| Example 9 | 2 | 10 | 5 | 18.7 | 1.014 |
| Example 10 | 2 | 12.5 | 5 | 18.4 | 1.004 |
| Example 11 | 2 | 6.3 | 7.5 | 19 | 1.026 |
| Example 13 | 4 | 5 | 10 | 18.7 | 1.108 |
| Example 14 | 5 | 8.8 | 12.5 | 17.8 | 1.166 |

### Table 11

**Table 12**

| No. | Crystal plane spacing of materials for first cladding layer (nm) | Orientation (111) angle of materials for first cladding layer (°) | Crystal plane spacing of materials for second cladding layer (nm) | Orientation (111) angle of materials for second cladding layer (°) |
|---|---|---|---|---|
| Example 1 | 0.303 | 29.496 | 0.348 | 25.562 |
| Example 30 | 0.451 | 19.668 | 0.348 | 25.562 |
| Example 31 | 0.297 | 30.846 | 0.348 | 25.562 |
| Example 32 | 0.457 | 19.456 | 0.348 | 25.562 |
| Example 33 | 0.437 | 20.257 | 0.348 | 25.562 |
| Example 34 | 0.462 | 19.211 | 0.348 | 25.562 |
| Example 35 | 0.450 | 19.735 | 0.348 | 25.562 |
| Example 36 | 0.372 | 23.893 | 0.348 | 25.562 |
| Example 37 | 0.303 | 29.496 | 0.374 | 23.789 |
| Example 38 | 0.303 | 29.496 | 0.360 | 24.710 |
| Example 39 | 0.303 | 29.496 | 0.350 | 25.428 |
| Example 40 | 0.303 | 29.496 | 0.425 | 20.885 |
| Example 41 | 0.303 | 29.496 | 0.356 | 24.993 |
| Example 42 | 0.303 | 29.496 | 0.244 | 36.808 |

As shown in Table 10, the positive electrode active materials obtained by doping modification of lithium manganese phosphate and cladding lithium manganese phosphate with multiple layers achieve smaller lattice variability, smaller concentration of Li/Mn anti-site defects, larger compaction density, surface oxygen valence closer to -2, less leaching out of Mn and Fe after cycle, and better battery performance, such as better high-temperature cycle performance and high-temperature storage performance. The presence of a first additive in a non-aqueous electrolyte is beneficial to reducing the generation of HF, lowering the acidity of the non-aqueous electrolytic solution, and thereby reducing the leaching out of manganese ions and the generation of gases; at the same time, the first additive is also capable of generating a homogeneous and dense interfacial film on the surface of the negative electrode active material, reducing the reduction reaction of the dissolved manganese ions at the negative electrode. As a result, when the non-aqueous electrolytic solution contains the first additive, the cycling performance and storage performance of the battery can be further improved.

As can be seen from Table 11, by doping lithium manganese iron phosphate (with a manganese content of 35% and a phosphorus content of about 20%) at manganese and phosphorus sites and cladding it with three cladding layers, the content of manganese element in the positive electrode active material as well as a weight ratio of the manganese element to the phosphorus element are significantly reduced. Furthermore, comparing Examples 1-14 with Comparative Examples 3, 4, and 12, and combining with Table 10, it can be seen that the decrease in the manganese element and phosphorus element in the positive electrode active material results in the decrease of leaching out of manganese ions and iron ions and the improvement of performance of the battery prepared therefrom.

Examples 30-42 were the same as Example 1 with the exception for materials for a first cladding layer or materials for a second cladding layer. As can be seen from the combination of Examples 30-42, the use of the first cladding layer and the second cladding layer comprising other elements within the scope of the present application has also resulted in a positive electrode active material with good performance and has achieved good battery performance. As can be seen from Table 12, the crystal plane spacing and orientation angle of the first cladding layer and the second cladding layer of the present application are within the range described in the present application.

Examples 43-67 were the same as Example 1 with the exception for the preparation of non-aqueous electrolytic solution. Table 13 shows performances of the batteries prepared by Examples 43-60. Table 14 shows performances of the batteries prepared by Examples 61-67.

**Table 13**

| No. | First additive | | Second additive | | Third additive | | 3C charge constant current ratio (%) | Leaching out of Fe and Mn (ppm) after cycle | 0.1C capacity of button battery (mAh/g) | Battery expansion after storage at 60°C for 30 d (%) | Cycle numbers corresponding to 80% capacity retention at 45°C |
|---|---|---|---|---|---|---|---|---|---|---|---|
| | Type | W1 (wt%) | Type | W2 (wt%) | Type | W3 (wt%) | | | | | |
| Example 43 | H2 | 1 | / | / | / | / | 77.1 | 5 | 159.4 | 2.3 | 1511 |
| Example 44 | H3 | 1 | / | / | / | / | 75.2 | 5 | 159.2 | 2.8 | 1405 |
| Example 45 | H12 | 1 | / | / | / | / | 76.3 | 5 | 159.3 | 2.5 | 1467 |
| Example 46 | H19 | 1 | / | / | / | / | 72.1 | 6 | 158.1 | 3.8 | 1235 |
| Example 47 | H20 | 1 | / | / | / | / | 74.6 | 5 | 159.0 | 3.1 | 1367 |
| Example 48 | H24 | 1 | / | / | / | / | 73.2 | 6 | 158.5 | 3.5 | 1289 |
| Example 49 | H28 | 1 | / | / | / | / | 70.5 | 6 | 157.5 | 4.0 | 1201 |
| Example 50 | H35 | 1 | / | / | / | / | 75.6 | 5 | 159.1 | 2.7 | 1398 |
| Example 51 | H36 | 1 | / | / | / | / | 76.4 | 5 | 159.3 | 2.4 | 1434 |
| Example 52 | H37 | 1 | / | / | / | / | 77 | 5 | 159.5 | 2.0 | 1501 |
| Example 53 | H38 | 1 | DTD | 1 | / | / | 88.2 | 4 | 162.2 | 0.8 | 1898 |
| Example 54 | H38 | 1 | Lithium difluorophosphate | 1 | / | / | 86.5 | 4 | 161.9 | 1.1 | 1801 |
| Example 55 | H38 | 1 | Lithium difluorodioxalate phosphate | 1 | / | / | 84.7 | 4 | 161.4 | 1.4 | 1734 |
| Example 56 | H38 | 1 | Lithium fluorosulfonate | 1 | / | / | 82.4 | 5 | 161.0 | 1.5 | 1711 |
| Example 57 | H38 | 1 | Lithium trifluoromethanesulfonate | 1 | / | / | 80.3 | 5 | 160.3 | 1.8 | 1623 |
| Example 58 | H38 | 1 | DTD | 1 | VC | 1 | 91.2 | 3 | 162.9 | 0.4 | 2167 |
| Example 59 | H38 | 1 | DTD | 1 | VEC | 1 | 89.7 | 4 | 162.5 | 0.6 | 1976 |
| Example 60 | H38 | 1 | DTD | 1 | FEC | 1 | 90.3 | 3 | 162.7 | 0.5 | 2101 |

**Table 14**

| No. | First additive | | W1/(C1+C2+C3) | 3C charge constant current ratio (%) | leaching out of Fe and Mn (ppm) after cycle | 0.1C capacity of button battery (mAh/g) | Battery expansion after storage at 60°C for 30 d (%) | Cycle numbers corresponding to 80% capacity retention at 45°C |
|---|---|---|---|---|---|---|---|---|
| | Type | W1 (wt%) | | | | | | |
| Example 61 | H38 | 0.01 | 0.002 | 70.5 | 7 | 157.4 | 4.0 | 1187 |
| Example 62 | H38 | 0.1 | 0.02 | 74.1 | 6 | 158.1 | 3.5 | 1301 |
| Example 63 | H38 | 0.3 | 0.06 | 75.4 | 6 | 158.6 | 3.2 | 1445 |
| Example 64 | H38 | 5 | 1.00 | 76.5 | 5 | 159.1 | 1.5 | 1478 |
| Example 65 | H38 | 8 | 1.60 | 75.4 | 5 | 158.5 | 1.0 | 1398 |
| Example 66 | H38 | 10 | 2.00 | 73.2 | 4 | 158.1 | 0.8 | 1245 |
| Example 67 | H38 | 20 | 4.00 | 70.4 | 3 | 157.3 | 0.5 | 1150 |

As can be seen from the combination of Example 1 and Examples 43-52, the improvement effect on battery performances varies slightly depending on the type of the first additive.

As can be seen from the combination of Example 1 and Examples 53-60, when the non-aqueous electrolytic solution further comprises an appropriate amount of a second additive and/or a third additive, it helps to further improve the specific capacity, the rate performance, the high-temperature cycling performance and the high-temperature storage performance of the battery.

As can be seen from the combination of Example 1 and Examples 61-67, as the content of the first additive is increased from 0.01 wt% to 20 wt%, the leaching out of Fe and Mn from the resulting material after cycle gradually decreases, and the storage performance at 60°C of the corresponding batteries also improves, but the specific capacity, the 3C charge constant current ratio and the cycling performance at 45°C will decrease to a certain extent when the content of the first additive is higher.

## Claims

1. A secondary battery (5), comprising a positive electrode plate and an non-aqueous electrolytic solution, wherein
the positive electrode plate comprises a positive electrode active material with a core-shell structure, which comprises an core and a shell covering the core,
the core has a chemical formula of Li₁₊ₓMn_{1-y}A_{y}P_{1-z}R_{z}O₄, x being any value in the range of -0.100 to 0.100, optionally any value in the range of -0.005 to 0.002, y being any value in the range of 0.001 to 0.500, and z being any value in the range of 0.001 to 0.100; A being one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co, and Mg; R being one or more elements selected from B, Si, N, and S, optionally R being an element selected from among B, Si, N and S; and the values of x, y and z satisfy the condition that the entire core is electrically neutral;
the shell comprises a first cladding layer covering the core, a second cladding layer covering the first cladding layer and a third cladding layer covering the second cladding layer, in which
the first cladding layer comprises crystalline pyrophosphates LiₐMP₂O₇ and/or M_{b}(P₂O₅)_{c}, 0 ≤ a ≤ 2, 1 ≤ b ≤ 4, 1 ≤ c ≤ 6, and the values of a, b, and c satisfy the condition that the crystalline pyrophosphate LiₐMP₂O₇ and/or M_{b}(P₂O₇)_{c} is electrically neutral, each M in the crystalline pyrophosphates L LiₐMP₂O₇ and M_{b}(P₂O₇)_{c} being independently one or more elements selected from Fe, Ni, Mg, Co, Cu, Zn, Ti, Ag, Zr, Nb, and Al;
the second cladding layer comprises crystalline phosphate XPO₄, X being one or more elements selected from Li, Fe, Ni, Mg, Co, Cu, Zn, Ti, Ag, Zr, Nb and Al; and
the third cladding layer is carbon;
the non-aqueous electrolytic solution comprises a first additive comprising one or more of the compounds shown in Formula 1: 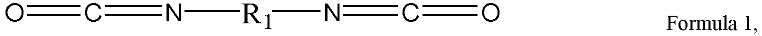 in which R₁ represents at least one of the group consisting of the following groups substituted or unsubstituted by Rₐ: C2~C10 divalent alkyl, C2~C10 divalent heteroalkyl, C6~C18 divalent aryl, C7~C18 divalent aryl alkyl, C7~C18 divalent alkyl aryl, C8~C18 divalent alkyl aryl alkyl, C13~C18 divalent aryl alkyl aryl, C2~C18 divalent heteroaryl, C3~C18 divalent heteroarylalkyl, C3~C18 divalent alkylheteroaryl, C4~C18 divalent alkylheteroarylalkyl, C5~C18 divalent heteroarylalkylheteroaryl, C3~C18 divalent alcyl, C4~C18 divalent alcyl alkyl, C4~C18 divalent alkyl alcyl, C5~C18 divalent alkyl alcyl alkyl, C7~C18 divalent alcyl alkyl alcyl, C2~C18 divalent heteroalcyl, C3~C18 divalent heteroalcyl alkyl, C3~C18 divalent alkyl heteroalcyl, C4~C18 divalent alkyl heteroalcyl alkyl, and C5~C18 divalent heteroalcyl alkyl heteroalcyl;
optionally, Rₐ comprises one or more selected from halogen atoms, -CN, -NCO, -OH, -COOH, -SOOH, carboxylate group, sulfonate group, sulfate group, C1~C10 alkyl, C2~C10 alkenyl, C2~C10 alkynyl, C2~C10 oxoalkyl, phenyl and benzyl.

2. The secondary battery (5) according to claim 1, wherein R₁ represents at least one of the group consisting of the following groups substituted or unsubstituted by Rₐ: C2~C10 alkylidene, C2~C10 oxoalkylidene, C2~C10 azidoalkylidene, phenylidene, o-phenylenedimethylene, m-phenylenedimethylene, p-phenylenedimethylene, monomethylphenylene, dimethylphenylene, trimethylphenylene, tetramethylphenylene, monoethylphenylene, diethylphenylene, triethylphenylene, tetraethylphenylene, biphenylene, terphenylene, quaterphenylene, diphenylmethyl, cyclobutylidene, o-cyclobutyldimethylene, m-cyclobutyldimethylene, p-cyclobutyldimethylene, cyclopentylidene, o-cyclopentyldimethylene, m- cyclopentyldimethylene, p- cyclopentyldimethylene, cyclohexylidene, monomethyl cyclohexylidene, dimethyl cyclohexylidene, trimethyl cyclohexylidene, tetramethyl cyclohexylidene, o-cyclohexyldimethylene, m-cyclohexyldimethylene, p-cyclohexyldimethylene, dicyclohexylmethane, methylcyclohexyl, naphthylene, anthrylene and perhydroanthrylene;
optionally, Rₐ comprises one or more selected from a fluorine atom, -CN, -NCO, -OH, -COOH, -SOOH, carboxylate group, sulfonate group, sulfate group, C1~C10 alkyl, C2~C10 alkenyl, C2~C10 alkynyl, C2~C10 oxoalkyl, phenyl and benzyl.

3. The secondary battery (5) according to any one of claims 1 to 2, wherein the first additive comprises at least one of the following compounds:

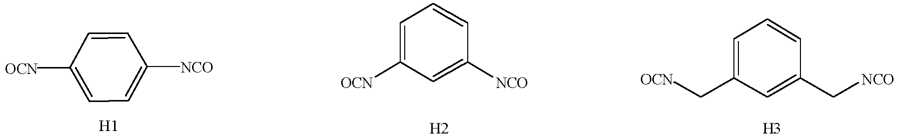

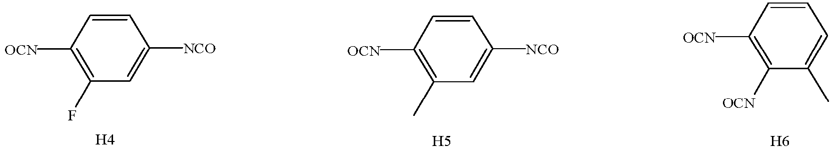

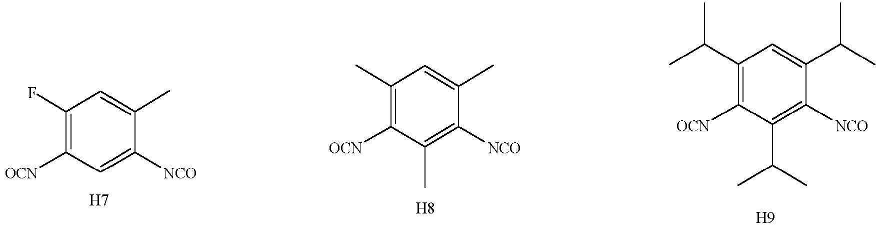

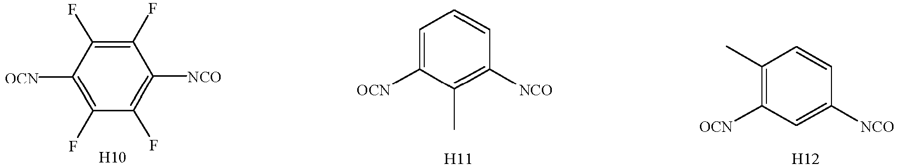

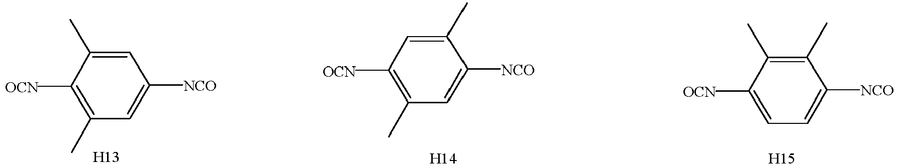

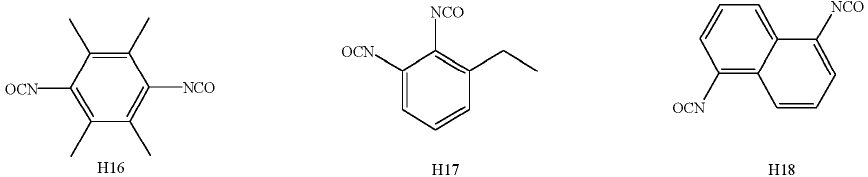

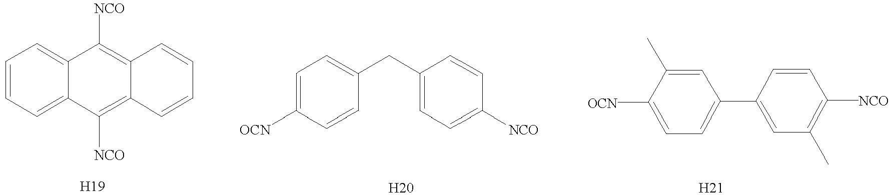

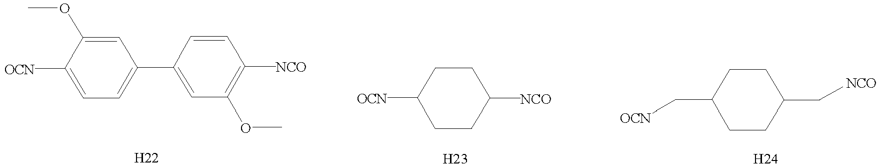

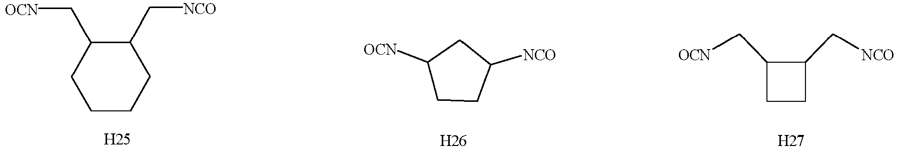

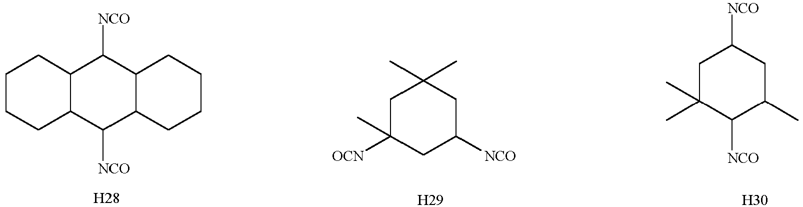

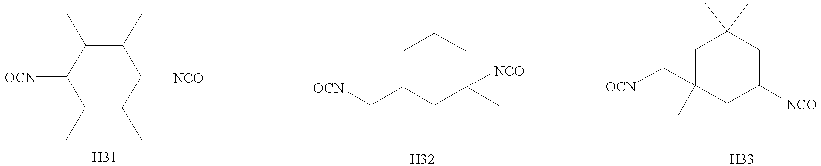

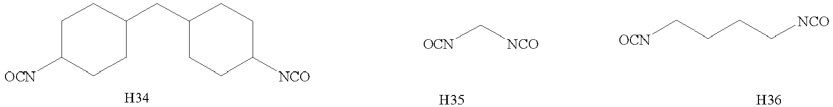

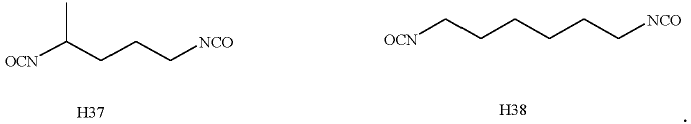

4. The secondary battery (5) according to any one of claims 1-3, wherein
the first additive is present in an amount of W1% by weight, with W1 being 0.01 to 20, optionally 0.1 to 10, more optionally 0.3 to 5, based on the total weight of the non-aqueous electrolytic solution; and/or
the first cladding layer is applied in an amount of C1% by weight, with C1 being greater than 0 and less than or equal to 6, optionally greater than 0 and less than or equal to 5.5, more optionally greater than 0 and less than or equal to 2, based on the weight of the core; and/or
the second cladding layer is applied in an amount of C2% by weight, with C2 being greater than 0 and less than or equal to 6, optionally greater than 0 and less than or equal to 5.5, more optionally from 2 to 4, based on the weight of the core; and/or
the third cladding layer is applied in an amount of C3% by weight, with C3 being greater than 0 and less than or equal to 6, optionally greater than 0 and less than or equal to 5.5, more optionally greater than 0 and less than or equal to 2, based on the weight of the core.

5. The secondary battery (5) according to claim 4, wherein W1/(C1+C2+C3) is from 0.001 to 2, optionally from 0.01 to 1.5, and more optionally from 0.05 to 1.

6. The secondary battery (5) according to any one of claims 1-5, wherein the non-aqueous electrolytic solution further comprises a second additive, and the second additive comprises one or more of ethylene sulfate, lithium difluorophosphate, lithium bisoxalatodifluorophosphate, R₂[FSO₃⁻]ₐ, R₂[C_{b}F_{2b+1}SO₃⁻]ₐ, a being an integer from 1 to 5 and b being an integer from 1 to 6, and R2 representing a metal cation or an organic group cation;
optionally, the metal cation comprises one or more selected from Li⁺, Na⁺, K⁺, Rb⁺, Cs⁺, Mg²⁺, Ca²⁺, Ba²⁺, Al³⁺, Fe²⁺, Fe³⁺, Cu²⁺, Ni²⁺ and Ni³⁺;
optionally, the organic group cation comprises one or more selected from NH₄⁺, N(CH₃)₄⁺, and N(CH₂CH₃)₄⁺.

7. The secondary battery (5) according to claim 6, wherein the second additive is present in an amount of W2% by weight, with W2 being 0.01 to 20, optionally 0.1 to 10, more optionally 0.3 to 5, based on the total weight of the non-aqueous electrolytic solution.

8. The secondary battery (5) according to any one of claims 1-7, wherein the non-aqueous electrolytic solution further comprises a third additive, and the third additive comprises one or more of a cyclic carbonate compound containing unsaturated bonds, a halogenated cyclic carbonate compound, a sulfate compound, a sulfite compound, a sultone compound, a disulfonate compound, a nitrile compound, a phosphonitrile compound, an aromatic hydrocarbon and halogenated aromatic hydrocarbon compound, an acid anhydride compound, a phosphite compound, a phosphate compound, and a borate compound;
optionally, the third additive is present in an amount of W3% by weight, with W3 being 0.01 to 10, optionally 0.1 to 10, more optionally 0.3 to 5, based on the total weight of the non-aqueous electrolytic solution.

9. The secondary battery (5) according to any one of claims 1-8, wherein
the first cladding layer has a thickness of 1 nm to 10 nm; and/or
the second cladding layer has a thickness of 2 nm to 15 nm; and/or
the third cladding layer has a thickness of 2 nm to 25 nm;
and/or
wherein
in the core the ratio of y to 1-y is from 1:10 to 1:1, optionally from 1:4 to 1:1; and/or
in the core the ratio of z to 1-z is from 1:9 to 1:999, optionally from 1:499 to 1:249.

10. The secondary battery (5) according to any one of claims 1-9, wherein
the crystalline pyrophosphate in the first cladding layer has an interplanar spacing ranging from 0.293 nm to 0.470 nm, and a crystal orientation (111) angle ranging from 18.00° to 32.00°; and/or
the crystalline phosphate in the second cladding layer has an interplanar spacing ranging from 0.244 nm to 0.425 nm, and a crystal orientation (111) angle ranging from 20.00° to 37.00°;
and/or
wherein the carbon of the third cladding layer is a mixture of SP2 carbon and SP3 carbon, optionally, the molar ratio of the SP2 carbon to SP3 carbon is any value in the range of 0.1 to 10, optionally any value in the range of 2.0 to 3.0.

11. The secondary battery (5) according to any one of claims 1-10, wherein
manganese is present in a content of 10 wt% to 35 wt%, optionally in the range of 15 wt% to 30 wt%, and more optionally in the range of 17 wt% to 20 wt%, based on the weight of the positive electrode active material;
phosphorus is present in a content of 12 wt% to 25 wt%, optionally in the range of 15 wt% to 20 wt%, based on the weight of the positive electrode active material;
optionally the weight ratio of manganese to phosphorus is in the range of 0.90 to 1.25, optionally in the range of 0.95 to 1.20.

12. The secondary battery (5) according to any one of claims 1-11, wherein the positive electrode active material satisfies at least one of the following (1) to (4):
(1) before and after complete intercalation/deintercalation of lithium the positive electrode active material has a lattice change rate of 4% or less, optionally 3.8% or less, more optionally from 2.0% to 3.8%;
(2) the positive electrode active material has a Li/Mn anti-site defect concentration of 4% or less, optionally 2.2% or less, more optionally from 1.5% to 2.2%;
(3) the positive electrode active material has a compaction density at 3T of 2.2 g/cm³ or more, optionally 2.2 g/cm³ or more and 2.8 g/cm³ or less; and
(4) the positive electrode active material has a surface oxygen valence of -1.90 or less, optionally -1.90 to -1.98.

13. A battery module (4), comprising the secondary battery (5) according to any one of claims 1 to 12.

14. A battery pack (1), comprising the battery module (4) according to claim 13.

15. An electrical device comprising at least one of the secondary battery (5) according to any one of claims 1 to 12, the battery module (4) according to claim 13 or the battery pack (1) according to claim 14.

## Patentansprüche

1. Sekundärbatterie (5), die eine positive Elektrodenplatte und eine nichtwässrige elektrolytische Lösung umfasst,
wobei die positive Elektrodenplatte ein aktives Material der positiven Elektrode mit einer Kern-Schale-Struktur umfasst, die einen Kern und eine den Kern bedeckende Schale umfasst,
der Kern eine chemische Formel Li₁₊ₓMn_{1-y}A_{y}P_{1-z}R_{z}O₄ hat, wobei x ein beliebiger Wert im Bereich von -0,100 bis 0,100 ist, gegebenenfalls ein beliebiger Wert im Bereich von -0,005 bis 0,002, wobei y ein beliebiger Wert im Bereich von 0,001 bis 0,500 ist und z ein beliebiger Wert im Bereich von 0,001 bis 0,100 ist; wobei A ein oder mehrere aus Zn, Al, Na, K, Mg, Mo, W, Ti, V, Zr, Fe, Ni, Co, Ga, Sn, Sb, Nb und Ge ausgewählte Elemente ist, gegebenenfalls ein oder mehrere aus Fe, Ti, V, Ni, Co und Mg ausgewählte Elemente, wobei R ein oder mehrere aus B, Si, N und S ausgewählte Elemente ist, wobei R gegebenenfalls ein aus B, Si, N und S ausgewähltes Element ist; und die Werte von x, y und z die Bedingung erfüllen, dass der gesamte Kern elektrisch neutral ist,
die Hülle eine erste, den Kern bedeckende Mantelschicht, eine zweite, die erste Mantelschicht bedeckende Mantelschicht und eine dritte, die zweite Mantelschicht bedeckende Mantelschicht umfasst, wobei
die erste Mantelschicht kristalline Pyrophosphate LiₐMP₂O₇ und/oder M_{b}(P₂O₇)_{c} umfasst, wobei 0 ≤ a ≤ 2, 1 ≤ b ≤ 4, 1 ≤ c ≤ 6 und die Werte von a, b und c die Bedingung erfüllen, dass das kristalline Pyrophosphat LiₐMP₂O₇ und/oder M_{b}(P₂O₇)_{c} elektrisch neutral ist, wobei M in den kristallinen Pyrophosphaten L LiₐMP₂O₇ und M_{b}(P₂O₇)_{c} unabhängig für ein oder mehrere aus Fe, Ni, Mg, Co, Cu, Zn, Ti, Ag, Zr, Nb und Al ausgewählte Elemente steht;
die zweite Mantelschicht kristallines Phosphat XPO₄ umfasst, wobei X für ein oder mehrere aus Li, Fe, Ni, Mg, Co, Cu, Zn, Ti, Ag, Zr, Nb und Al ausgewählte Elemente steht; und
die dritte Mantelschicht Kohlenstoff ist;
die nichtwässrige elektrolytische Lösung ein erstes, eine oder mehrere der in Formel 1 gezeigten Verbindungen umfassendes Additiv umfasst: 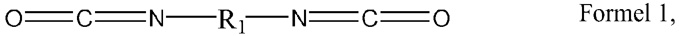
wobei R₁ für mindestens eine der folgenden, durch Rₐ substituierten oder unsubstituierten Gruppen steht: zweiwertiges C2~C10-Alkyl, zweiwertiges C2~C10-Heteroalkyl, zweiwertiges C6~C18-Aryl, zweiwertiges C7~C18-Arylalkyl, zweiwertiges C7~C18-Alkylaryl, zweiwertiges C8~C18-Alkylarylalkyl, zweiwertiges C13~C18-Arylalkylaryl, zweiwertiges C2~C18-Heteroaryl, zweiwertiges C3~C18-Heteroarylalkyl, zweiwertiges C3~C18-Alkylheteroaryl, zweiwertiges C4-C18-Alkylheteroarylalkyl, zweiwertiges C5-C18-Heteroarylalkylheteroaryl, zweiwertiges C3~C18-Acyl, zweiwertiges C4~C18-Acylalkyl, zweiwertiges C4~C18-Alkylacyl, zweiwertiges C5~C18-Alkylacylalkyl, zweiwertiges C7~C18-Acylalkylacyl, zweiwertiges C2~C18-Heteroacyl, zweiwertiges C3-C18-Heteroacylalkyl, zweiwertiges C3-C18-Alkylheteroacyl, zweiwertiges C4~C18-Alkylheteroacylalkyl und zweiwertiges C5~C18-Heteroacylalkylheteroacyl;
Rₐ gegebenenfalls ein oder mehrere der Folgenden umfasst: Halogenatome, -CN, -NCO, -OH, - COOH, -SOOH, eine Carboxylatgruppe, eine Sulfonatgruppe, eine Sulfatgruppe, C1~C10-Alkyl, C2~C10-Alkenyl, C2~C10-Alkinyl, C2~C10-Oxoalkyl, Phenyl und Benzyl.

2. Sekundärbatterie (5) nach Anspruch 1, wobei R₁ für mindestens eine der folgenden, durch Rₐ substituierten oder unsubstituierten Gruppen steht: C2~C10-Alkyliden, C2~C10-Oxoalkyliden, C2~C10-Azidoalkyliden, Phenyliden, o-Phenylendimethylen, m-Phenylendimethylen, p-Phenylendimethylen, Monomethylphenylen, Dimethylphenylen, Trimethylphenylen, Tetramethylphenylen, Monoethylphenylen, Diethylphenylen, Triethylphenylen, Tetraethylphenylen, Biphenylen, Terphenylen, Quaterphenylen, Diphenylmethyl, Cyclobutyliden, o-Cyclobutyldimethylen, m-Cyclobutyldimethylen, p-Cyclobutyldimethylen, Cyclopentyliden, o-Cyclopentyldimethylen, m-Cyclopentyldimethylen, p-Cyclopentyldimethylen, Cyclohexyliden, Monomethylcyclohexyliden, Dimethylcyclohexyliden, Trimethylcyclohexyliden, Tetramethylcyclohexyliden, o-Cyclohexyldimethylen, m-Cyclohexyldimethylen, p-Cyclohexyldimethylen, Dicyclohexylmethan, Methylcyclohexyl, Naphthylen, Anthrylen und Perhydroanthrylen;
Rₐ gegebenenfalls ein oder mehrere der Folgenden umfasst: ein Fluoratom, -CN, -NCO, -OH, - COOH, -SOOH, eine Carboxylatgruppe, eine Sulfonatgruppe, eine Sulfatgruppe, C1-C10-Alkyl, C2~C10-Alkenyl, C2~C10-Alkinyl, C2~C10-Oxoalkyl, Phenyl und Benzyl.

3. Sekundärbatterie (5) nach Anspruch 1 oder 2, wobei das erste Additiv mindestens eine der folgenden Verbindungen umfasst:

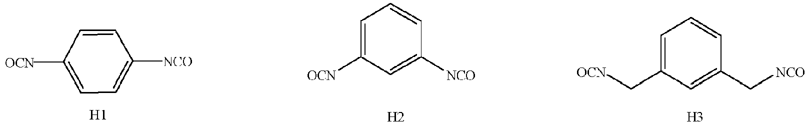

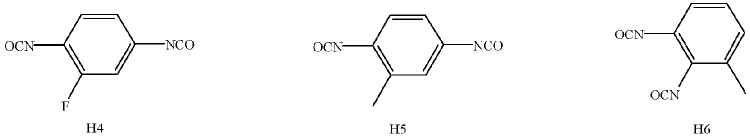

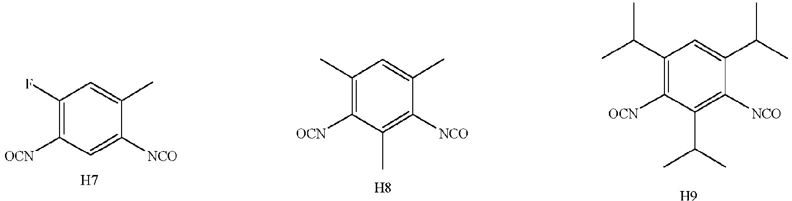

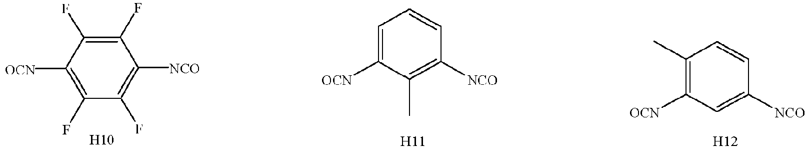

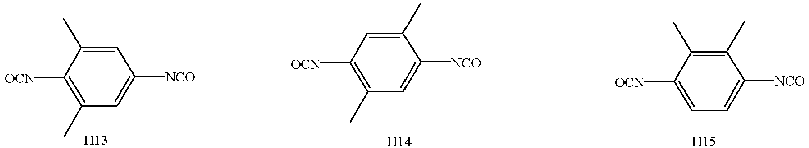

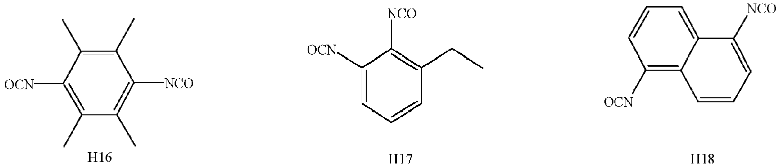

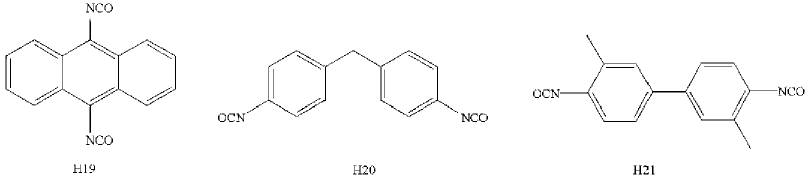

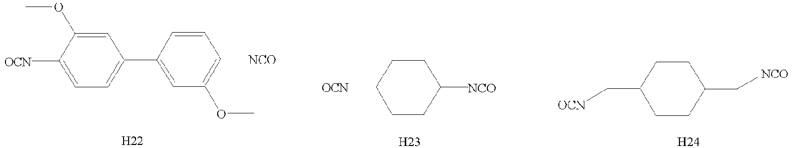

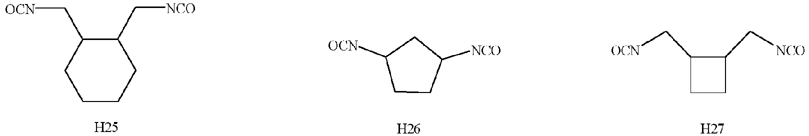

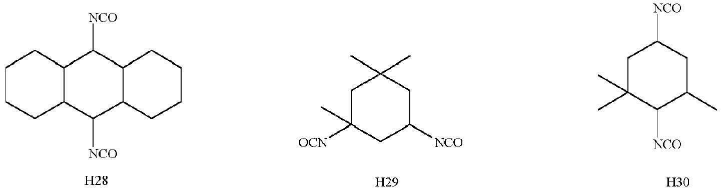

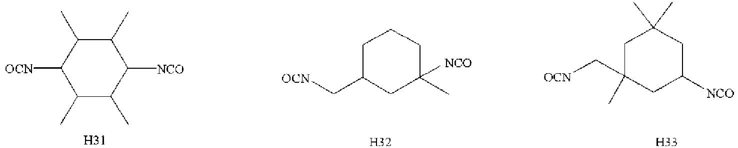

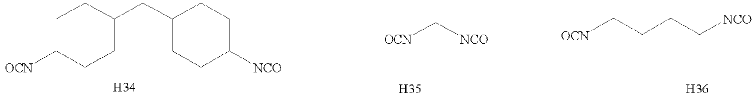

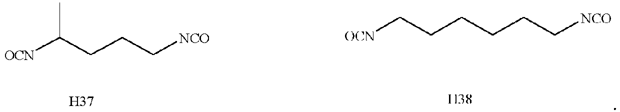

4. Sekundärbatterie (5) nach einem der Ansprüche 1-3, wobei
das erste Additiv in einer Menge von W1 Gew.-% vorliegt, wobei W1 0,01 bis 20, gegebenenfalls 0,1 bis 10, besonders gegebenenfalls 0,3 bis 5, bezogen auf das Gesamtgewicht der nichtwässrigen elektrolytischen Lösung, ist; und/oder
die erste Mantelschicht in einer Menge von C1 Gew.-% aufgebracht wird, wobei C1 größer als 0 und kleiner als oder gleich 6 ist, gegebenenfalls größer als 0 und kleiner als oder gleich 5,5, besonders gegebenenfalls größer als 0 und kleiner als oder gleich 2, bezogen auf das Gewicht des Kerns, ist; und/oder
die zweite Mantelschicht in einer Menge von C2 Gew.-% aufgebracht wird, wobei C2 größer als 0 und kleiner als oder gleich 6 ist, gegebenenfalls größer als 0 und kleiner als oder gleich 5,5, besonders gegebenenfalls 2 bis 4, bezogen auf das Gewicht des Kerns, ist; und/oder
die dritte Mantelschicht in einer Menge von C3 Gew.-% aufgebracht wird, wobei C3 größer als 0 und kleiner als oder gleich 6 ist, gegebenenfalls größer als 0 und kleiner als oder gleich 5,5, besonders gegebenenfalls größer als 0 und kleiner als oder gleich 2, bezogen auf das Gewicht des Kerns, ist.

5. Sekundärbatterie (5) nach Anspruch 4, wobei W1/(C1+C2+C3) 0,001 bis 2, gegebenenfalls 0,01 bis 1,5 und besonders gegebenenfalls 0,05 bis 1 ist.

6. Sekundärbatterie (5) nach einem der Ansprüche 1-5, wobei die nichtwässrige elektrolytische Lösung weiterhin ein zweites Additiv umfasst und das zweite Additiv Ethylensulfat, Lithiumdifluorphosphat, Lithiumbisoxalatodifluorphosphat, R₂[FSO₃⁻]ₐ und/oder R₂[C_{b}F_{2b}+₁SO₃⁻]ₐ umfasst, wobei a für eine ganze Zahl von 1 bis 5 steht und b für eine ganze Zahl von 1 bis 6 steht und R2 für ein Metallkation oder ein Kation einer organischen Gruppe steht;
das Metallkation gegebenenfalls Li⁺, Na⁺, K⁺, Rb⁺, Cs⁺, Mg²⁺, Ca²⁺, Ba²⁺, Al³⁺, Fe²⁺, Fe³⁺, Cu²⁺, Ni²⁺ und/oder Ni³⁺ umfasst;
das Kation einer organischen Gruppe gegebenenfalls NH₄⁺, N(CH₃)₄⁺ und/oder N(CH₂CH₃)₄⁺ umfasst.

7. Sekundärbatterie (5) nach Anspruch 6, wobei das zweite Additiv in einer Menge von W2 Gew.-% vorliegt, wobei W2 0,01 bis 20, gegebenenfalls 0,1 bis 10, besonders gegebenenfalls 0,3 bis 5, bezogen auf das Gesamtgewicht der nichtwässrigen elektrolytischen Lösung, ist.

8. Sekundärbatterie (5) nach einem der Ansprüche 1-7, wobei die nichtwässrige elektrolytische Lösung weiterhin ein drittes Additiv umfasst und das dritte Additiv eine ungesättigte Bindungen enthaltende cyclische Carbonatverbindung, eine halogenierte cyclische Carbonatverbindung, eine Sulfatverbindung, eine Sulfitverbindung, eine Sulfonverbindung, eine Disulfonatverbindung, eine Nitrilverbindung, eine Phosphonitrilverbindung, einen aromatischen Kohlenwasserstoff und eine halogenierte aromatische Kohlenwasserstoffverbindung, eine Säureanhydridverbindung, eine Phosphitverbindung, eine Phosphatverbindung und/oder eine Boratverbindung umfasst;
das dritte Additiv in einer Menge von W3 Gew.-% vorliegt, wobei W3 0,01 bis 10, gegebenenfalls 0,1 bis 10, besonders gegebenenfalls 0,3 bis 5, bezogen auf das Gesamtgewicht der nichtwässrigen elektrolytischen Lösung, ist.

9. Sekundärbatterie (5) nach einem der Ansprüche 1-8, wobei
die erste Mantelschicht eine Dicke von 1 nm bis 10 nm aufweist und/oder die zweite Mantelschicht eine Dicke von 2 nm bis 15 nm aufweist und/oder die dritte Mantelschicht eine Dicke von 2 nm bis 25 nm aufweist
und/oder
wobei
das Verhältnis von y zu 1-y im Kern 1:10 bis 1:1, gegebenenfalls 1:4 bis 1:1, beträgt und/oder das Verhältnis von z zu 1-z im Kern 1:9 bis 1:999, gegebenenfalls 1:499 bis 1:249, beträgt.

10. Sekundärbatterie (5) nach einem der Ansprüche 1-9, wobei
das kristalline Pyrophosphat in der ersten Mantelschicht einen Interplanarabstand im Bereich von 0,293 nm bis 0,470 nm und einen (111)-Orientierungswinkel im Bereich von 18,00° bis 32,00° aufweist und/oder
das kristalline Phosphat in der zweiten Mantelschicht einen Interplanarabstand im Bereich von 0,244 nm bis 0,425 nm und einen (111)-Orientierungswinkel im Bereich von 20,00° bis 37,00° aufweist
und/oder
wobei der Kohlenstoff der dritten Mantelschicht eine Mischung aus SP2-Kohlenstoff und SP3-Kohlenstoff ist, wobei das Molverhältnis von SP2-Kohlenstoff zu SP3-Kohlenstoff ein beliebiger Wert im Bereich von 0,1 bis 10, gegebenenfalls ein beliebiger Wert im Bereich von 2,0 bis 3,0, ist.

11. Sekundärbatterie (5) nach einem der Ansprüche 1-10, wobei
Mangan in einem Gehalt von 10 Gew.-% bis 35 Gew.-%, gegebenenfalls im Bereich von 15 Gew.-% bis 30 Gew.-% und besonders gegebenenfalls im Bereich von 17 Gew.-% bis 20 Gew.-%, bezogen auf das Gewicht des aktiven Materials der positiven Elektrode, vorliegt;
Phosphor in einem Gehalt von 12 Gew.-% bis 25 Gew.-%, gegebenenfalls im Bereich von 15 Gew.-% bis 20 Gew.-%, bezogen auf das Gewicht des aktiven Materials der positiven Elektrode, vorliegt;
das Gewichtsverhältnis von Mangan zu Phosphor gegebenenfalls im Bereich von 0,90 bis 1,25, gegebenenfalls im Bereich von 0,95 bis 1,20, liegt.

12. Sekundärbatterie (5) nach einem der Ansprüche 1-11, wobei das aktive Material der positive Elektrode mindestens eines der Folgenden (1) bis (4) erfüllt:
(1) vor und nach vollständiger Interkalierung/Deinterkalierung von Lithium weist das aktive Material der positiven Elektrode eine Gitteränderungsrate von 4 % oder weniger, gegebenenfalls 3,8 % oder weniger, besonders gegebenenfalls 2,0 % bis 3,8 % auf;
(2) das aktive Material der positiven Elektrode weist eine Li/Mn-Anti-Site-Defektkonzentration von 4 % oder weniger, gegebenenfalls 2,2 % oder weniger, besonders gegebenenfalls 1,5 % bis 2,2 %, auf;
(3) das aktive Material der positiven Elektrode weist eine Verdichtungsdichte bei 3T von 2,2 g/cm³ oder mehr, gegebenenfalls 2,2 g/cm³ oder mehr und 2,8 g/cm³ oder weniger, auf; und
(4) das aktive Material der positive Elektrode weist eine Oberflächensauerstoffvalenz von - 1,90 oder weniger, gegebenenfalls -1,90 bis -1,98, auf.

13. Batteriemodul (4), umfassend die Sekundärbatterie (5) nach einem der Ansprüche 1 bis 12.

14. Batteriepack (1), umfassend das Batteriemodul (4) nach Anspruch 13.

15. Elektrische Vorrichtung, umfassend die Sekundärbatterie (5) nach einem der Ansprüche 1 bis 12 und/oder das Batteriemodul (4) nach Anspruch 13 und/oder das Batteriepack (1) nach Anspruch 14.

## Revendications

1. Batterie secondaire (5), comprenant une plaque d'électrode positive et une solution électrolytique non aqueuse,
dans laquelle la plaque d'électrode positive comprend un matériau actif d'électrode positive présentant une structure âme-enveloppe, qui comprend une âme et une enveloppe recouvrant l'âme,
l'âme ayant une formule chimique Li₁₊ₓMn_{1-y}A_{y}P_{1-z}R_{z}O₄, x étant une valeur quelconque dans la plage de -0,100 à 0,100, éventuellement une valeur quelconque dans la plage de -0,005 à 0,002, y étant une valeur quelconque dans la plage de 0,001 à 0,500 et z étant une valeur quelconque dans la plage de 0,001 à 0,100 ; A étant un ou plusieurs éléments choisis parmi Zn, Al, Na, K, Mg, Mo, W, Ti, V, Zr, Fe, Ni, Co, Ga, Sn, Sb, Nb et Ge, éventuellement un ou plusieurs éléments choisis parmi Fe, Ti, V, Ni, Co et Mg ; R étant un ou plusieurs éléments choisis parmi B, Si, N et S, éventuellement R étant un élément choisi parmi B, Si, N et S ; et les valeurs de x, y et z satisfaisant à la condition que toute l'âme soit électriquement neutre ;
l'enveloppe comprenant une première couche de revêtement recouvrant l'âme, une deuxième couche de revêtement recouvrant la première couche de revêtement et une troisième couche de revêtement recouvrant la deuxième couche de revêtement, dans laquelle
la première couche de revêtement comprend des pyrophosphates cristallins LiₐMP₂O₇ et/ou M_{b}(P₂O₇)_{c}, 0 ≤ a ≤ 2, 1 ≤ b ≤ 4, 1 ≤ c ≤ 6 et les valeurs de a, b et c satisfont à la condition que le pyrophosphate cristallin LiₐMP₂O₇ et/ou M_{b}(P₂O₇)_{c} soit électriquement neutre, chaque M dans les pyrophosphates cristallins L LiₐMP₂O₇ et M_{b}(P₂O₇)_{c} étant indépendamment un ou plusieurs éléments choisis parmi Fe, Ni, Mg, Co, Cu, Zn, Ti, Ag, Zr, Nb et Al ;
la deuxième couche de revêtement comprend du phosphate cristallin XPO₄, X étant un ou plusieurs éléments choisis parmi Li, Fe, Ni, Mg, Co, Cu, Zn, Ti, Ag, Zr, Nb et Al ; et
la troisième couche de revêtement est du carbone ;
la solution électrolytique non aqueuse comprend un premier additif comprenant un ou plusieurs des composés représentés par la formule 1 : 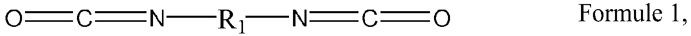
dans laquelle R₁ représente au moins un groupe du groupe constitué par les groupes suivants substitués ou non substitués par Rₐ : alkyle en C2~C10 divalent, hétéroalkyle en C2~C10 divalent, aryle en C6~C18 divalent, arylalkyle en C7~C18 divalent, alkylaryle en C7~C18 divalent, alkylarylalkyle en C8~C18 divalent, arylalkylaryle en C13~C18 divalent, hétéroaryle en C2~C18 divalent, hétéroarylalkyle en C3~C18 divalent, alkylhétéroaryle en C3~C18 divalent, alkylhétéroarylalkyle en C4~C18 divalent, hétéroarylalkylhétéroaryle en C5~C18 divalent, acyle en C3~C18 divalent, acylalkyle en C4~C18 divalent, alkylacyle en C4~C18 divalent, alkylacylalkyle en C5~C18 divalent, acylalkylacyle en C7~C18 divalent, hétéroacyle en C2~C18 divalent, hétéroacylalkyle en C3~C18 divalent, alkylhétéroacyle en C3~C18 divalent, alkylhétéroacylalkyle en C4~C18 divalent et hétéroacylalkylhétéroacyle en C5~C18 divalent ; éventuellement, Rₐ comprenant un ou plusieurs substituants choisis parmi les atomes d'halogène, -CN, -NCO, -OH, -COOH, -SOOH, un groupe carboxylate, un groupe sulfonate, un groupe sulfate, alkyle en C1~C10, alcényle en C2~C10, alcynyle en C2~C10, oxoalkyle en C2~C10, phényle et benzyle.

2. Batterie secondaire (5) selon la revendication 1, dans laquelle R₁ représente au moins l'un des groupes du groupe constitué par les groupes suivants substitués ou non substitués par Rₐ : alkylidène en C2~C10, oxoalkylidène en C2~C10, azidoalkylidène en C2~C10, phénylidène, o-phénylènediméthylène, m-phénylènediméthylène, p-phénylènediméthylène, monométhylphénylène, diméthylphénylène, triméthylphénylène, tétraméthylphénylène, monoéthylphénylène, diéthylphénylène, triéthylphénylène, tétraéthylphénylène, biphénylène, terphénylène, quaterphénylène, diphénylméthyle, cyclobutylidène, o-cyclobutyldiméthylène, m-cyclobutyldiméthylène, p-cyclobutyldiméthylène, cyclopentylidène, o-cyclopentyldiméthylène, m-cyclopentyldiméthylène, p-cyclopentyldiméthylène, cyclohexylidène, monométhylcyclohexylidène, diméthylcyclohexylidène, triméthylcyclohexylidène, tétraméthylcyclohexylidène, o-cyclohexyldiméthylène, m-cyclohexyldiméthylène, p-cyclohexyldiméthylène, dicyclohexylméthane, méthylcyclohexyle, naphtylène, anthrylène, perhydroanthrylène ;
éventuellement, Rₐ comprenant un ou plusieurs substituants choisis parmi un atome de fluor, -CN, -NCO, -OH, -COOH, -SOOH, un groupe carboxylate, un groupe sulfonate, un groupe sulfate, alkyle en C1~C10, alcényle en C2~C10, alcynyle en C2~C10, oxoalkyle en C2~C10, phényle et benzyle.

3. Batterie secondaire (5) selon l'une quelconque des revendications 1 à 2, dans laquelle le premier additif comprend au moins l'un des composés suivants :

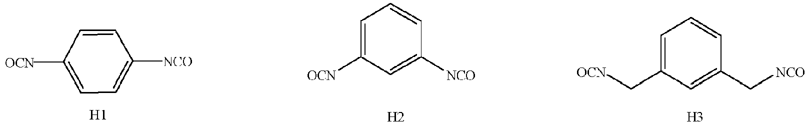

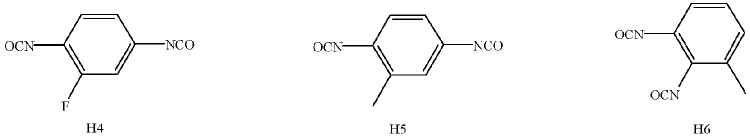

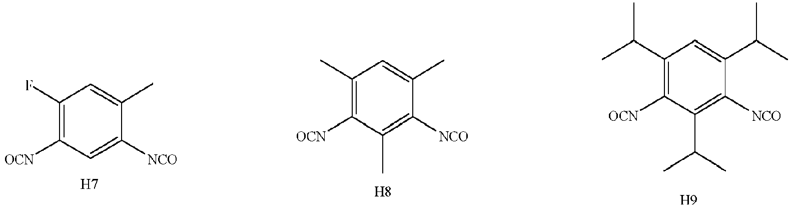

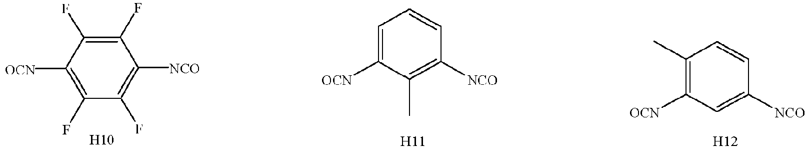

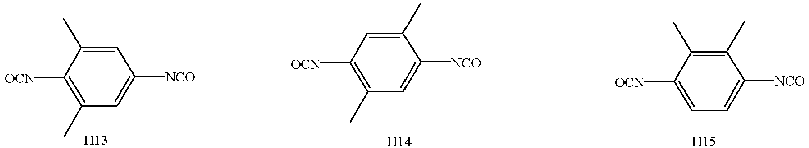

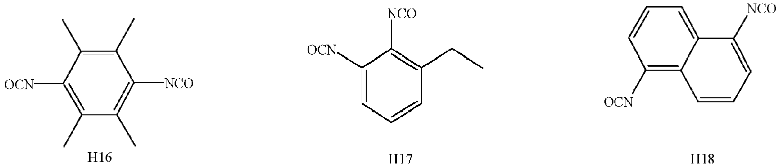

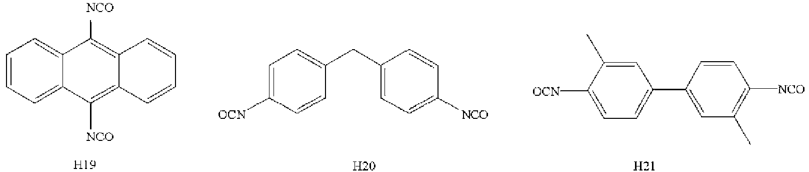

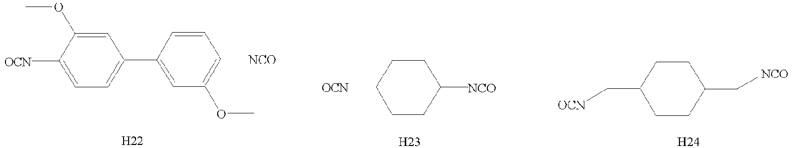

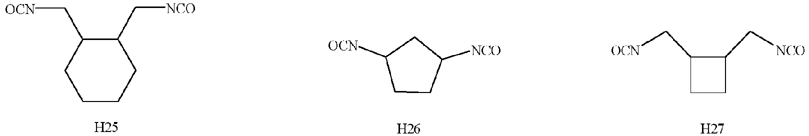

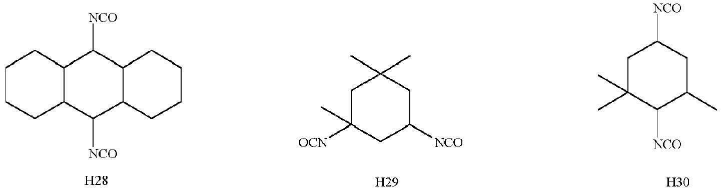

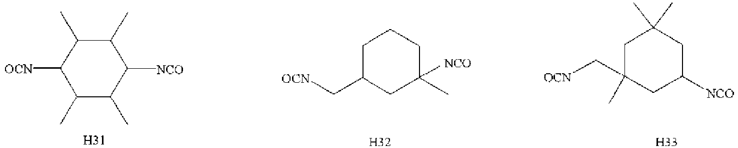

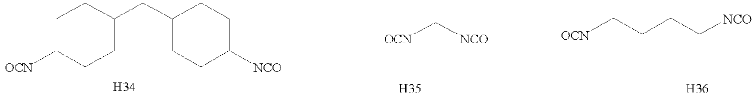

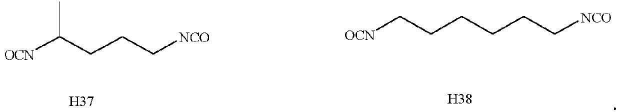

4. Batterie secondaire (5) selon l'une quelconque des revendications 1 à 3, dans laquelle le premier additif est présent en une quantité de W1 % en poids, W1 valant 0,01 à 20, éventuellement 0,1 à 10, éventuellement encore 0,3 à 5, par rapport au poids total de la solution électrolytique non aqueuse ; et/ou
la première couche de revêtement est appliquée en une quantité de C1 % en poids, C1 étant supérieur à 0 et inférieur ou égal à 6, éventuellement supérieur à 0 et inférieur ou égal à 5,5, éventuellement encore supérieur à 0 et inférieur ou égal à 2, par rapport au poids de l'âme ; et/ou la deuxième couche de revêtement est appliquée en une quantité de C2 % en poids, C2 étant supérieur à 0 et inférieur ou égal à 6, éventuellement supérieur à 0 et inférieur ou égal à 5,5, éventuellement encore de 2 à 4, par rapport au poids de l'âme ; et/ou
la troisième couche de revêtement est appliquée en une quantité de C3 % en poids, C3 étant supérieur à 0 et inférieur ou égal à 6, éventuellement supérieur à 0 et inférieur ou égal à 5,5, éventuellement encore supérieur à 0 et inférieur ou égal à 2, par rapport au poids de l'âme.

5. Batterie secondaire (5) selon la revendication 4, dans laquelle W1/(C1 + C2 + C3) est de 0,001 à 2, éventuellement de 0,01 à 1,5 et éventuellement encore de 0,05 à 1.

6. Batterie secondaire (5) selon l'une quelconque des revendications 1 à 5, dans laquelle la solution électrolytique non aqueuse comprend en outre un deuxième additif et le deuxième additif comprend un ou plusieurs additifs parmi le sulfate d'éthylène, le difluorophosphate de lithium, le bisoxalatodifluorophosphate de lithium, R₂[FSO₃⁻]ₐ, R₂[C_{b}F_{2b+1}SO₃⁻]ₐ, a étant un nombre entier de 1 à 5 et b étant un nombre entier de 1 à 6 et R2 représentant un cation métallique ou un cation de groupe organique ;
éventuellement, le cation métallique comprenant un ou plusieurs cations métalliques choisis parmi Li⁺, Na⁺, K⁺, Rb⁺, Cs⁺, Mg²⁺, Ca²⁺, Ba²⁺, Al³⁺, Fe²⁺, Fe³⁺, Cu²⁺, Ni²⁺ et Ni³⁺ ;
éventuellement, le cation de groupe organique comprenant un ou plusieurs cations de groupe organique choisis parmi NH₄⁺, N(CH₃)₄⁺ et N(CH₂CH₃)₄⁺.

7. Batterie secondaire (5) selon la revendication 6, dans laquelle le deuxième additif est présent en une quantité de W2 % en poids, W2 valant 0,01 à 20, éventuellement 0,1 à 10, éventuellement encore 0,3 à 5, par rapport au poids total de la solution électrolytique non aqueuse.

8. Batterie secondaire (5) selon l'une quelconque des revendications 1 à 7, dans laquelle la solution électrolytique non aqueuse comprend en outre un troisième additif et le troisième additif comprend un ou plusieurs additifs parmi un composé carbonate cyclique contenant des liaisons insaturées, un composé carbonate cyclique halogéné, un composé sulfate, un composé sulfite, un composé sulfone, un composé disulfonate, un composé nitrile, un composé phosphonitrile, un composé hydrocarbure aromatique et hydrocarbure aromatique halogéné, un composé anhydride d'acide, un composé phosphite, un composé phosphate et un composé borate ;
éventuellement, le troisième additif étant présent en une quantité de W3 % en poids, W3 valant 0,01 à 10, éventuellement 0,1 à 10, éventuellement encore 0,3 à 5, par rapport au poids total de la solution électrolytique non aqueuse.

9. Batterie secondaire (5) selon l'une quelconque des revendications 1 à 8, dans laquelle
la première couche de revêtement a une épaisseur de 1 nm à 10 nm ; et/ou
la deuxième couche de revêtement a une épaisseur de 2 nm à 15 nm ; et/ou
la troisième couche de revêtement a une épaisseur de 2 nm à 25 nm ;
et/ou
dans laquelle
dans l'âme, le rapport de y à 1-y est de 1:10 à 1:1, éventuellement de 1:4 à 1:1 ; et/ou
dans l'âme, le rapport de z à 1-z est de 1:9 à 1:999, éventuellement de 1:499 à 1:249.

10. Batterie secondaire (5) selon l'une quelconque des revendications 1 à 9, dans laquelle le pyrophosphate cristallin dans la première couche de revêtement a une distance interréticulaire allant de 0,293 nm à 0,470 nm et un angle d'orientation cristalline (111) allant de 18,00° à 32,00°; et/ou
le phosphate cristallin dans la deuxième couche de revêtement a une distance interréticulaire allant de 0,244 nm à 0,425 nm et un angle d'orientation cristalline (111) allant de 20,00° à 37,00°; et/ou
dans laquelle le carbone de la troisième couche de revêtement est un mélange de carbone SP2 et de carbone SP3, éventuellement, le rapport molaire du carbone SP2 au carbone SP3 étant une valeur quelconque dans la plage de 0,1 à 10, éventuellement une valeur quelconque dans la plage de 2,0 à 3,0.

11. Batterie secondaire (5) selon l'une quelconque des revendications 1 à 10, dans laquelle du manganèse est présent en une teneur de 10 % en poids à 35 % en poids, éventuellement dans la plage de 15 % en poids à 30 % en poids et éventuellement encore dans la plage de 17 % en poids à 20 % en poids, par rapport au poids du matériau actif d'électrode positive ;
du phosphore est présent en une teneur de 12 % en poids à 25 % en poids, éventuellement dans la plage de 15 % en poids à 20 % en poids, par rapport au poids du matériau actif d'électrode positive ;
éventuellement le rapport pondéral du manganèse au phosphore étant dans la plage de 0,90 à 1,25, éventuellement dans la plage de 0,95 à 1,20.

12. Batterie secondaire (5) selon l'une quelconque des revendications 1 à 11, dans laquelle le matériau actif d'électrode positive satisfait à au moins l'une des conditions (1) à (4) suivantes :
(1) avant et après intercalation/désintercalation complète de lithium, le matériau actif d'électrode positive a un taux de variation de maille inférieur ou égal à 4 %, éventuellement inférieur ou égal à 3,8 %, éventuellement encore de 2,0 % à 3,8 % ;
(2) le matériau actif d'électrode positive a une concentration de défauts d'anti-site Li/Mn inférieure ou égale à 4 %, éventuellement inférieure ou égale à 2,2 %, éventuellement encore de 1,5 % à 2,2 % ;
(3) le matériau actif d'électrode positive a une masse volumique après compactage à 3 t supérieure ou égale à 2,2 g/cm³, éventuellement supérieure ou égale à 2,2 g/cm³ et inférieure ou égale à 2,8 g/cm³ ; et
(4) le matériau actif d'électrode positive a une valence de l'oxygène de surface inférieure ou égale à -1,90, éventuellement de -1,90 à -1,98.

13. Module de batterie (4), comprenant la batterie secondaire (5) selon l'une quelconque des revendications 1 à 12.

14. Bloc-batterie (1), comprenant le module de batterie (4) selon la revendication 13.

15. Dispositif électrique comprenant au moins l'un de la batterie secondaire (5) selon l'une quelconque des revendications 1 à 12, du module de batterie (4) selon la revendication 13 ou du bloc-batterie (1) selon la revendication 14.
